# EUROPEAN PATENT APPLICATION

(11) **EP 4 343 533 A1**
(43) Date of publication of application: **27.03.2024**
(21) Application number: 22803825.3
(22) Date of filing: 10.05.2022
(51) Int. Cl.: G06F 3/14, G06F 3/0481

(54) **SCREEN PROJECTION METHOD AND RELATED APPARATUS**

(30) Priority: 19.05.2021 CN 202110547552; 30.06.2021 CN 202110745467
(71) Applicant: Huawei Technologies Co., Ltd., Shenzhen, Guangdong 518129 (CN)
(72) Inventor: LIU, Xiaolu, Shenzhen, Guangdong 518129 (CN); CAI, Shizong, Shenzhen, Guangdong 518129 (CN); LUO, Puliang, Shenzhen, Guangdong 518129 (CN); LIAO, Hongjun, Shenzhen, Guangdong 518129 (CN)
(74) Representative: Huawei European IPR
(86) International application number: PCT/CN2022/091899
(87) International publication number: WO 2022/242503

(57) **Abstract**

This application discloses a screen projection method and a related apparatus. In the screen projection method, a first electronic device invokes a first module of a first application to run a first desktop associated with a first display area, and displays, based on the first display area, first display content including the first desktop, in response to a first user operation, the first electronic device invokes a second module of the first application to run a second desktop associated with a second display area; the first electronic device sends, to a second electronic device, second display content that includes the second desktop and corresponds to the second display area; in response to a second user operation performed on the first display content, the first electronic device displays third display content based on the first display area; and in response to a third user operation performed on the second display content displayed by the second electronic device, the first electronic device determines fourth display content based on the second display area, and sends the fourth display content to the second electronic device. In this way, the first electronic device and the second electronic device can display different content after screen projection.

## Description

This application claims priority to Chinese Patent Application No. 202110547552.4, filed with the China National Intellectual Property Administration on May 19, 2021 and entitled "SCREEN PROJECTION METHOD", which is incorporated herein by reference in its entirety. This application claims priority to Chinese Patent Application No. 202110745467.9, filed with the China National Intellectual Property Administration on June 30, 2021 and entitled "SCREEN PROJECTION METHOD AND RELATED APPARATUS", which is incorporated herein by reference in its entirety.

### TECHNICAL FIELD

This application relates to the field of electronic technologies, and in particular, to a screen projection method and a related apparatus.

### BACKGROUND

A smart terminal and a plurality of display devices together form multi-screen linkage and collaborative complementarity, which is an important link in establishing all-scenario ecology. Currently, a screen projection technology covers large-screen scenarios, for example, a mobile office screen, an in-vehicle terminal Hicar scenario, and a smart screen scenario. Screen projection of a mobile phone to a personal computer (Personal Computer, PC) is used as an example. After the mobile phone is projected to the computer, a user may operate and control the mobile phone on the computer.

However, in the conventional large-screen projection technology, mirror projection is usually used. To be specific, after the projection, display content on the mobile phone (that is, a projection sending device) is completely the same as display content on the computer (that is, a projection receiving device). The user cannot view different display content on the projection sending device and the projection receiving device.

### SUMMARY

This application provides a screen projection method and a related apparatus, so that a projection sending device and a projection receiving device can display different content after screen projection.

According to a first aspect, this application provides a screen projection method, including: A first electronic device invokes a first module of a first application to run a first desktop, where the first desktop is associated with a first display area; the first electronic device displays first display content based on the first display area, where the first display content includes the first desktop; in response to a first user operation, the first electronic device invokes a second module of the first application to run a second desktop, where the second desktop is associated with a second display area; the first electronic device sends second display content corresponding to the second display area to a second electronic device, where the second display content includes the second desktop; in response to a second user operation performed on the first display content, the first electronic device displays third display content based on a task stack that runs in the first display area; in response to a third user operation performed on the second display content displayed by the second electronic device, the first electronic device determines that display content corresponding to the second display area is fourth display content based on a task stack that runs in the second display area; and the first electronic device sends the fourth display content to the second electronic device.

In this embodiment of this application, the first electronic device (that is, a projection sending device) supports simultaneous running of a plurality of desktop instances in different display areas by using a same application, for example, running of the first desktop in the first display area by using the first module of the first application, and running of the second desktop in the second display area by using the second module of the first application. The first electronic device determines display content on a home screen of the first electronic device based on the task stack that runs in the first display area; and determines, based on the task stack that runs in the second display area, display content to be projected to the second electronic device (that is, a projection receiving device). In this way, the first electronic device and the second electronic device may display different desktops and other different content based on the two different display areas.

In an implementation, that in response to a second user operation performed on the first display content, the first electronic device displays third display content based on a task stack that runs in the first display area includes: In response to the second user operation performed on the first desktop in the first display content, the first electronic device displays the third display content based on a task stack that is of the first application and that runs in the first display area; and that in response to a third user operation performed on the second display content displayed by the second electronic device, the first electronic device determines that display content corresponding to the second display area is fourth display content based on a task stack that runs in the second display area includes: In response to the third user operation performed on the second desktop displayed by the second electronic device, the first electronic device determines that the display content corresponding to the second display area is the fourth display content based on a task stack that is of the first application and that runs in the second display area.

In this embodiment of this application, for the second user operation performed on the first desktop, the first electronic device may execute, based on the task stack that is of the first application and that runs in the display area associated with the first desktop, a response event corresponding to the second user operation; and for the third user operation performed on the second desktop, the first electronic device may execute, based on the task stack that is of the first application and that runs in the display area associated with the second desktop, a response event corresponding to the third user operation. In this way, data isolation between events (input events and/or response events) of different desktops can be ensured. In addition, because both desktop instances are run by the modules of the first application, the two desktops can implement sharing of specified data, and the second desktop can inherit some or all functional features of the first desktop.

In an implementation, before the first electronic device displays the first display content based on the first display area, the method further includes: The first electronic device invokes a third module of a second application to run a first status bar, where the first status bar is associated with the first display area, and the first display content includes the first status bar; and the method further includes: In response to the first user operation, the first electronic device invokes a fourth module of the second application to run a second status bar, where the second status bar is associated with the second display area, and the second display content includes the second status bar.

In this embodiment of this application, the first electronic device supports simultaneous running of a plurality of status bar instances in different display areas by using a same application, for example, running of the first status bar in the first display area by using the third module of the second application, and running of the second status bar in the second display area by using the fourth module of the second application. In this way, the two status bars are associated with different display areas, so that the first electronic device and the second electronic device may display different status bars, thereby ensuring data isolation between events (input events and/or response events) of the two status bars. In addition, because both status bars are run by the modules of the second application, the two status bars can implement sharing of specified data (for example, a notification message), and the second status bar can inherit some or all functional features of the first status bar.

In an implementation, before the first electronic device displays the first display content based on the first display area, the method further includes: The first electronic device invokes a fifth module of a third application to run a first display object of a first variable, where the first variable is associated with the first display area, and the first display content includes the first display object; and the first variable is associated with the second display area, and the second display content includes the first display object.

In this embodiment of this application, the first electronic device supports simultaneous display of display objects corresponding to a same variable in a plurality of different display areas. In this embodiment of this application, the third application and the second application may be a same application, or may be different applications. This is not specifically limited herein.

In an implementation, the method further includes: In response to a fourth user operation performed on the first display content, the fifth module of the third application is invoked to modify the display object of the first variable to a second display object; the first electronic device updates display content corresponding to the first display area to fifth display content, where the fifth display content includes the second display object; and the first electronic device updates the display content corresponding to the second display area to sixth display content, and sends the sixth display content to the second electronic device, where the sixth display content includes the second display object.

In this embodiment of this application, the first electronic device supports simultaneous display of display objects corresponding to a same variable in a plurality of different display areas. After a user changes the display object of the first variable in the first display area, the display object of the first variable in the second display area also changes accordingly.

In an implementation, the first variable indicates a display object of a wallpaper, the display object of the wallpaper is a static picture and/or a dynamic picture, and the wallpaper includes a lock-screen wallpaper used when a screen is locked and/or a desktop wallpaper used when the screen is not locked.

In this embodiment of this application, after the user changes a wallpaper displayed on the first electronic device, a wallpaper projected to the second electronic device also changes accordingly.

In an implementation, a plurality of themes are preset in the first electronic device, and the theme indicates a desktop layout style, an icon display style, and/or an interface color, and the like; and the first variable indicates a display object of the theme, and the display object of the theme is display content corresponding to one of the plurality of themes.

In this embodiment of this application, after the user changes a theme displayed on the first electronic device, a theme projected to the second electronic device also changes accordingly.

In an implementation, the first module of the first application includes a first common class, a first user interface UI control class, and a desktop task stack of the first desktop that are used for creating and running the first desktop; and the second module of the first application includes a second common class, a second UI control class, and a desktop task stack of the second desktop that are used for creating and running the second desktop, where some or all classes in the second common class are inherited from the first common class, and some or all classes in the second UI control class are inherited from the first UI control class.

In this embodiment of this application, the second common class, the second UI control class, and the desktop task stack of the second desktop that are used for creating and running the second desktop are added to the first electronic device; and some or all of the added common class and UI control class are inherited from the first common class and the first UI control class that correspond to the original first desktop. Therefore, the second desktop can inherit some functional features of the first desktop, and the two desktops can implement sharing of specified data.

In an implementation, the second common class includes one or more of the following: a desktop launcher provider, a database assistant, a desktop launcher setting class, a desktop launcher constant class, a Pc layout configuration, a Pc device file, a Pc cell counter, a Pc desktop launcher policy, a Pc desktop launcher model, a Pc loading task, and the like; and the second UI control class includes one or more of the following: a Pc drag layer, a Pc desktop workspace, a Pc cell layout, a Pc program dock view, a Pc folder, a Pc folder icon, and the like.

In an implementation, the third module of the second application includes a first component, a first dependency control class, and a third UI control class that are used for creating and running the first status bar; and the second module of the first application includes a second component, a second dependency control class, and a fourth UI control class that are used for creating and running the second status bar, where some or all components in the second component are inherited from the first component, some or all classes in the second dependency control class are inherited from the first dependency control class, and some or all classes in the fourth UI control class are inherited from the third UI control class.

In this embodiment of this application, the second component, the second dependency control class, and the fourth UI control class that are used for creating and running the second status bar are added to the first electronic device; and some or all of the added component, dependency control class, and UI control class are inherited from the first component, the first dependency control class, and the third UI control class that correspond to the original first status bar. Therefore, the second status bar can inherit some functional features of the first status bar, and the two status bars can implement sharing of specified data.

In an implementation, the second component includes one or more of the following: a PC dependency class, a PC system provider, a PC system bar, and the second status bar; the second dependency control class includes one or more of the following: a Pc status bar window control class, a screen control class, a lock-screen control class, and a remote control class; and the fourth UI control class includes one or more of the following: a Pc status bar window view, a Pc notification panel view, a Pc quick setting fragment, a Pc status bar fragment, and a Pc status bar view.

In an implementation, an identity ID of a display area associated with the second module is an ID of the second display area; and that in response to a first user operation, the first electronic device invokes a second module of the first application to run a second desktop, where the second desktop is associated with a second display area includes: In response to the first user operation, a Pc management service receives a mode switching instruction, where the instruction instructs to switch a current non-projection mode to a projection mode; in response to the instruction, the Pc management service invokes a Pc desktop service, where the Pc desktop service invokes an activity management service, and the activity management service invokes an activity task manager to start the second module of the first application; a root activity container is invoked to determine the ID of the display area associated with the second module; when the ID of the display area associated with the second module is the ID of the second display area, an Activity of the second desktop is queried and used as an Activity of a to-be-launched desktop, or when the ID of the display area associated with the second module is an ID of the first display area, an Activity of the first desktop is queried and used as an Activity of a to-be-launched desktop; and an activity start controller invokes an activity starter to start the second desktop.

In an implementation, that in response to the first user operation, the first electronic device invokes a fourth module of the second application to run a second status bar, where the second status bar is associated with the second display area includes: In response to the first user operation, a Pc management service receives a mode switching instruction, where the instruction instructs to switch a current non-projection mode to a projection mode; in response to the instruction, the Pc management service starts a productivity service, where the productivity service invokes a system bar to start the second status bar, and the system bar creates the second status bar based on a configuration file; the second status bar invokes a callback interface of a command queue to add a callback to the second status bar; the second status bar initializes a layout, and registers an IstatusBar object corresponding to the second status bar to a status bar management service; the second status bar creates the Pc status bar window view, and adds the Pc status bar window view to a status bar window control class; and the status bar window control class invokes a window management interface to add the second status bar to a window management service, so as to add the second status bar to the second display area.

In an implementation, in the non-projection mode, the command queue supports the first status bar associated with the first display area; and in the projection mode, the command queue supports both the first status bar associated with the first display area and the second status bar associated with the second display area.

According to a second aspect, this application provides an electronic device, including one or more processors, and one or more memories. The one or more memories are coupled to the one or more processors. The one or more memories are configured to store computer program code, and the computer program code includes computer instructions. When the one or more processors execute the computer instructions, the electronic device is enabled to perform the screen projection method according to any one of the possible implementations of any one of the foregoing aspects.

According to a third aspect, an embodiment of this application provides a computer storage medium, including computer instructions. When the computer instructions are run on an electronic device, the electronic device is enabled to perform the screen projection method according to any one of the possible implementations of any one of the foregoing aspects.

According to a fourth aspect, an embodiment of this application provides a computer program product. When the computer program product runs on a computer, the computer is enabled to perform the screen projection method according to any one of the possible implementations of any one of the foregoing aspects.

### BRIEF DESCRIPTION OF DRAWINGS

FIG. 1A is a schematic diagram of a communication system according to an embodiment of this application;
FIG. 1B is a schematic diagram of a structure of an electronic device according to an embodiment of this application;
FIG. 2 is a schematic diagram of screen projection between electronic devices according to an embodiment of this application;
FIG. 3A is a schematic diagram of a home screen according to an embodiment of this application;
FIG. 3B to FIG. 3G are schematic diagrams of user interfaces for implementing screen projection by using NFC according to an embodiment of this application;
FIG. 4A to FIG. 4H are schematic diagrams of second-level interfaces of an extended-screen status bar according to an embodiment of this application;
FIG. 4I is a schematic diagram of an extended-screen status bar according to an embodiment of this application;
FIG. 5A and FIG. 5B are schematic diagrams of a user interface of an extended-screen search bar according to an embodiment of this application;
FIG. 6A-1 to FIG. 6B-2 are schematic diagrams of user interfaces of an application icon list according to an embodiment of this application;
FIG. 6C is a schematic diagram of a user interface of Gallery on an extended-screen desktop according to an embodiment of this application;
FIG. 6D is a schematic diagram of a user interface of Music on an extended-screen desktop according to an embodiment of this application;
FIG. 7A-1 to FIG. 7B-2 are schematic diagrams of a recent tasks screen according to an embodiment of this application;
FIG. 8A to FIG. 8B are schematic diagrams of related user interfaces for displaying desktop icons according to an embodiment of this application;
FIG. 8C to FIG. 8E are schematic diagrams of user interfaces of applications on an extended-screen desktop according to an embodiment of this application;
FIG. 9A to FIG. 9B-2 are schematic diagrams of related user interfaces of application icons in a Dock bar according to an embodiment of this application;
FIG. 10A to FIG. 10B are schematic diagrams of a lock screen according to an embodiment of this application;
FIG. 11A to FIG. 13B are schematic diagrams of a software system according to an embodiment of this application;
FIG. 14 is a schematic diagram of an activity stack according to an embodiment of this application; and
FIG. 15A-1 to FIG. 15C-2 are schematic diagrams of software implementation of a screen projection method according to an embodiment of this application.

### DESCRIPTION OF EMBODIMENTS

The following clearly describes technical solutions in embodiments of this application with reference to the accompanying drawings. In the descriptions of embodiments of this application, unless otherwise specified, "/" indicates "or". For example, A/B may indicate A or B. The term "and/or" in this specification merely describes an association relationship for describing associated objects, and indicates that three relationships may exist. For example, A and/or B may indicate the following three cases: Only A exists, both A and B exist, and only B exists. In addition, in the descriptions of embodiments of this application, "a plurality of" means two or more.

The following terms "first" and "second" are merely intended for a purpose of description, and shall not be understood as an indication or implication of relative importance or implicit indication of a quantity of indicated technical features. Therefore, a feature limited by "first" or "second" may explicitly or implicitly include one or more features. In the descriptions of embodiments of this application, unless otherwise specified, "a plurality of" means two or more than two.

### The following describes a communication system 10 according to an embodiment of this application.

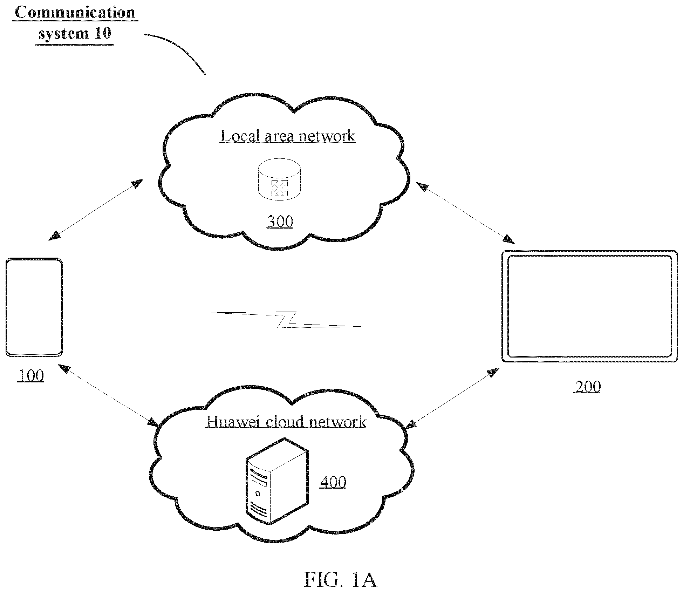

For example, FIG. 1A shows a schematic diagram of a structure of a communication system 10 according to an embodiment of this application. As shown in FIG. 1A, the communication system 10 includes an electronic device 100 and one or more electronic devices connected to the electronic device 100, for example, an electronic device 200.

In this embodiment of this application, the electronic device 100 may be directly connected to the electronic device 200 through a near-field wireless communication connection or a local wired connection. For example, the electronic device 100 and the electronic device 200 each may have one or more near-field communication modules among the following communication modules: a near field communication (near field communication, NFC) communication module, a wireless fidelity (wireless fidelity, Wi-Fi) communication module, an ultra-wideband (ultra wideband, UWB) communication module, a Bluetooth (Bluetooth) communication module, a ZigBee communication module, and the like. The electronic device 100 is used as an example. The electronic device 100 may detect and scan electronic devices near the electronic device 100 by transmitting a signal through a near-field communication module (for example, the NFC communication module), so that the electronic device 100 can discover a nearby electronic device (for example, the electronic device 200) through a near-field wireless communication protocol, establish a wireless communication connection to the nearby electronic device, and transmit data to the nearby electronic device.

In some embodiments, the electronic device 100 and the electronic device 200 may be connected, based on a wired connection or a Wi-Fi connection, to a local area network (local area network, LAN) through an electronic device 300. For example, the electronic device 300 may be a third-party device, such as a router, a gateway, or an intelligent device controller. In some embodiments, the electronic device 100 and the electronic device 200 may be indirectly connected through at least one electronic device 400 in a wide area network (for example, a Huawei Cloud network). For example, the electronic device 400 may be a hardware server, or may be a cloud server embedded in a virtualized environment. It can be understood that, through the electronic device 300 and/or the electronic device 400, the electronic device 100 may indirectly perform a wireless communication connection and data transmission with the electronic device 200.

It can be understood that, the structure shown in this embodiment does not constitute a specific limitation on the communication system 10. In some other embodiments of this application, the communication system 10 may include more or fewer devices than those shown in the figure.

In this embodiment of this application, after the electronic device 100 establishes a connection to the electronic device 200, the electronic device 100 may send projected image data, audio data and/or the like to the electronic device 200; and the electronic device 200 may perform, based on the data sent by the electronic device 100, interface display and/or audio output.

In this embodiment of this application, screen resolutions of display screens of the electronic device 200 and the electronic device 100 may be different. The electronic device 100 may be a portable electronic device, such as a mobile phone, a pad computer, a personal digital assistant (personal digital assistant, PDA), a wearable device, or a laptop computer (laptop). Optionally, the electronic device 100 may be alternatively another electronic device than a portable electronic device. This is not limited in this embodiment of this application. The electronic device 200 may be any display apparatus, such as a smart screen, a television, a pad computer, a notebook computer, a vehicle-mounted device, or a projector. Example embodiments of the electronic device 100 and the electronic device 200 include but are not limited to carrying iOS^{®}, Android^{®}, Microsoft^{®}, or another operating system.

### The following describes a hardware structure of an electronic device according to an embodiment of this application.

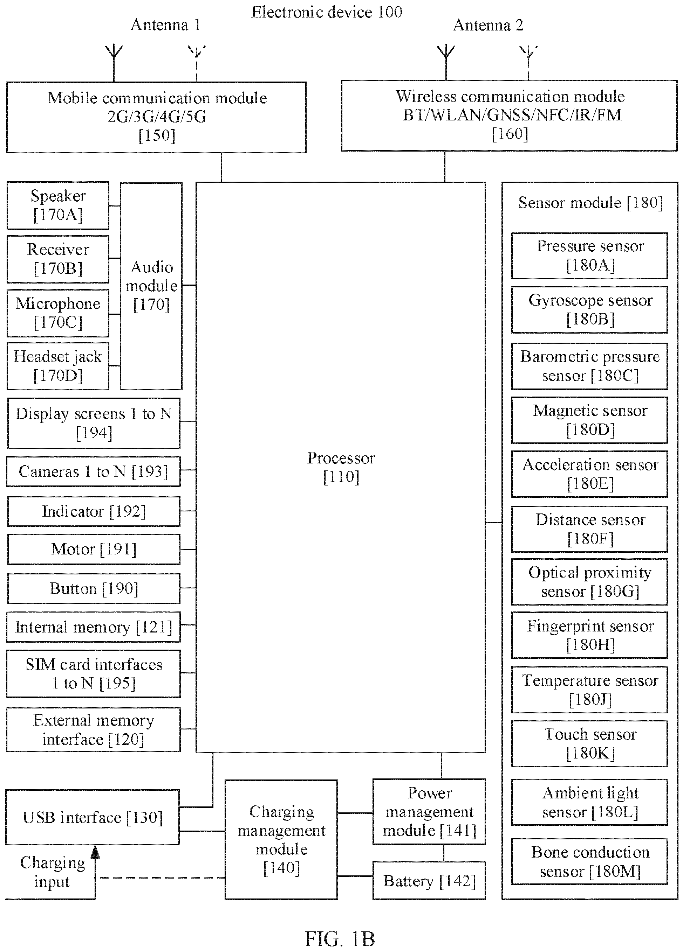

Refer to FIG. 1B. For example, FIG. 1B shows a schematic diagram of a structure of an electronic device 100 according to an embodiment of this application. In this embodiment of this application, for a hardware structure of the electronic device 200, refer to embodiments related to the hardware structure of the electronic device 100. Details are not described herein again.

The electronic device 100 may include a processor 110, an external memory interface 120, an internal memory 121, a universal serial bus (universal serial bus, USB) port 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display screen 194, a subscriber identity module (subscriber identity module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It can be understood that, the structure shown in this embodiment of the present invention does not constitute a specific limitation on the electronic device 100. In some other embodiments of this application, the electronic device 100 may include more or fewer components than those shown in the figure, combine some components, split some components, or have different component arrangements. The illustrated components may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent components, or may be integrated into one or more processors.

The controller may be a nerve center and a command center of the electronic device 100. The controller may generate, based on an instruction operation code and a time sequence signal, an operation control signal to control instruction fetching and instruction execution.

The processor 110 may further be provided with a memory for storing instructions and data. In some embodiments, the memory in the processor 110 is a cache memory. The memory may store instructions or data that has just been used or used repeatedly by the processor 110. If the processor 110 needs to use the instructions or data again, the processor 110 may directly invoke the instructions or data from the memory. This avoids repeated access and reduces a waiting time of the processor 110, thereby improving system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) port, and/or the like.

The charging management module 140 is configured to receive a charging input from a charger. The charger may be a wireless charger or a wired charger. In some embodiments of wired charging, the charging management module 140 may receive a charging input from the wired charger through the USB port 130. In some embodiments of wireless charging, the charging management module 140 may receive a wireless charging input through a wireless charging coil of the electronic device 100. The charging management module 140 supplies power to the electronic device through the power management module 141 while charging the battery 142.

The power management module 141 is configured to connect to the battery 142, the charging management module 140, and the processor 110. The power management module 141 receives an input from the battery 142 and/or the charging management module 140; and supplies power to the processor 110, the internal memory 121, the display screen 194, the camera 193, the wireless communication module 160, and the like. The power management module 141 may be further configured to monitor parameters such as a battery capacity, a battery cycle count, and a battery health status (electricity leakage and impedance). In some other embodiments, the power management module 141 may be alternatively disposed in the processor 110. In some other embodiments, the power management module 141 and the charging management module 140 may be alternatively disposed in a same component.

A wireless communication function of the electronic device 100 may be implemented through the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna in the electronic device 100 may be configured to cover one or more communication frequency bands. Different antennas may be multiplexed to improve antenna utilization. For example, the antenna 1 may be multiplexed as a diversity antenna in a wireless local area network. In some other embodiments, an antenna may be used in combination with a tuning switch.

The mobile communication module 150 may provide a wireless communication solution that includes 2G/3G/4G/5G or the like and that is applied to the electronic device 100. The mobile communication module 150 may include at least one filter, switch, power amplifier, low noise amplifier (low noise amplifier, LNA), and the like. The mobile communication module 150 may receive an electromagnetic wave via the antenna 1, perform filtering, amplification, and other processing on the received electromagnetic wave, and then transmit the processed electromagnetic wave to the modem processor for demodulation. The mobile communication module 150 may further amplify a signal modulated by the modem processor, which is converted into an electromagnetic wave for radiation via the antenna 1. In some embodiments, at least some of the functional modules of the mobile communication module 150 may be disposed in the processor 110. In some embodiments, at least some of the functional modules of the mobile communication module 150 and at least some of the modules of the processor 110 may be disposed in a same component.

The modem processor may include a modulator and a demodulator. The modulator is configured to modulate a to-be-transmitted low-frequency baseband signal into a medium-highfrequency signal. The demodulator is configured to demodulate a received electromagnetic wave signal to obtain a low-frequency baseband signal. Then the demodulator transfers the low-frequency baseband signal obtained through demodulation to the baseband processor for processing. The low-frequency baseband signal is transferred to the application processor after being processed by the baseband processor. The application processor outputs a sound signal through an audio device (which is not limited to the speaker 170A, the receiver 170B, and the like), or displays an image or a video through the display screen 194. In some embodiments, the modem processor may be an independent component. In some other embodiments, the modem processor may be independent of the processor 110, and may be disposed, together with the mobile communication module 150 or other functional modules, in a same component.

The wireless communication module 160 may provide a wireless communication solution that is applied to the electronic device 100 and that includes: a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module 160 may be one or more components integrating at least one communication processing module. The wireless communication module 160 receives an electromagnetic wave via the antenna 2, performs frequency modulation and filtering on an electromagnetic wave signal, and sends the processed signal to the processor 110. The wireless communication module 160 may further receive a to-be-sent signal from the processor 110, perform frequency modulation and amplification on the signal, and convert the processed signal into an electromagnetic wave for radiation via the antenna 2.

In some embodiments, in the electronic device 100, the antenna 1 is coupled to the mobile communication module 150, and the antenna 2 is coupled to the wireless communication module 160, so that the electronic device 100 can communicate with a network and another device by using a wireless communication technology. The wireless communication technology may include a Global System for Mobile Communications (global system for mobile communications, GSM), general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, GNSS, WLAN, NFC, FM, IR, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite-based augmentation system (satellite based augmentation system, SBAS).

The electronic device 100 implements a display function through the GPU, the display screen 194, the application processor, and the like. The GPU is a microprocessor for image processing, and is connected to the display screen 194 and the application processor. The GPU is configured to perform mathematical and geometric computation for graphic rendering. The processor 110 may include one or more GPUs that execute program instructions to generate or change display information.

The display screen 194 is configured to display images, videos, or the like. The display screen 194 includes a display panel. The display panel may use a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flex light-emitting diode, FLED), a mini-LED, a micro-LED, a micro-OLED, a quantum dot light-emitting diode (quantum dot light-emitting diode, QLED), or the like. In some embodiments, the electronic device 100 may include one display screen 194 or N display screens 194, where N is a positive integer greater than 1.

The electronic device 100 can implement a photographing function through the ISP, the camera 193, the video codec, the GPU, the display screen 194, the application processor, and the like.

The ISP is configured to process data fed back by the camera 193. For example, during shooting, a shutter is pressed, light is transmitted to a photosensitive element of the camera through a lens, an optical signal is converted into an electrical signal, and the photosensitive element of the camera transmits the electrical signal to the ISP for processing, to convert the electrical signal into a visible image. The ISP may further perform algorithm optimization on noise, brightness, and complexion of the image. The ISP may further optimize parameters such as exposure and color temperature of a photographing scenario. In some embodiments, the ISP may be disposed in the camera 193.

The camera 193 is configured to capture a static image or a video. An optical image of an object is generated through the lens, and is projected to the photosensitive element. The photosensitive element may be a charge-coupled device (charge-coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP, which converts the electrical signal into a digital image signal. The ISP outputs the digital image signal to the DSP for processing. The DSP converts the digital image signal into an image signal in a standard format such as RGB or YUV. In some embodiments, the electronic device 100 may include one camera 193 or N cameras 193, where N is a positive integer greater than 1.

The digital signal processor is configured to process a digital signal, and may process another digital signal in addition to the digital image signal. For example, when the electronic device 100 selects a frequency, the digital signal processor is configured to perform Fourier transform on frequency energy.

The video codec is configured to compress or decompress a digital video. The electronic device 100 may support one or more types of video codecs. Therefore, the electronic device 100 may play or record videos in a plurality of encoding formats, for example, Moving Picture Experts Group (moving picture experts group, MPEG)-1, MPEG-2, MPEG-3, and MPEG-4.

The NPU is a neural network (neural network, NN) computing processor. With reference to a structure of a biological neural network, for example, with reference to a pattern of transmission between human brain neurons, the NPU quickly processes input information, and can continuously perform self-learning. Applications such as intelligent cognition of the electronic device 100, for example, image recognition, facial recognition, speech recognition, and text understanding, may be implemented through the NPU.

The internal memory 121 may include one or more random access memories (random access memory, RAM) and one or more non-volatile memories (non-volatile memory, NVM). The random access memory may include a static random access memory (static random access memory, SRAM), a dynamic random access memory (dynamic random access memory, DRAM), a synchronous dynamic random access memory (synchronous dynamic random access memory, SDRAM), a double data rate synchronous dynamic random access memory (double data rate synchronous dynamic random access memory, DDR SDRAM, for example, a fifth generation DDR SDRAM is generally referred to as a DDR5 SDRAM), and the like. The nonvolatile memory may include a magnetic disk storage device and a flash memory (flash memory). The flash memory may be divided, based on operating principles, into a NOR flash, a NAND flash, a 3D NAND flash, and the like; or may be divided, based on storage levels, into a single-level cell (single-level cell, SLC), a multi-level cell (multi-level cell, MLC), a triple-level cell (triple-level cell, TLC), a quad-level cell (quad-level cell, QLC), and the like; or may be divided, based on storage specifications, into a universal flash storage (English: universal flash storage, UFS), an embedded multimedia storage card (embedded multimedia card, eMMC), and the like. In some embodiments, the random access memory may be directly read and written by the processor 110, and may be configured to store an operating system or an executable program (for example, machine instructions) of another running program, or may be configured to store data of a user and data of an application, and the like. The non-volatile memory may also store an executable program, data of a user and data of an application, and the like; and may be loaded to the random access memory in advance for the processor 110 to directly perform reading and writing.

The external memory interface 120 may be configured to connect to an external non-volatile memory, to extend a storage capability of the electronic device 100. The external non-volatile memory communicates with the processor 110 through the external memory interface 120, to implement a data storage function. For example, files such as music and videos are stored in the external non-volatile memory.

The electronic device 100 may implement an audio function, such as music playing or recording, through the audio module 170, the speaker 170A, the receiver 170B, the microphone 170C, the headset jack 170D, the application processor, and the like.

The audio module 170 is configured to convert digital audio information into an analog audio signal for output, and also configured to convert an analog audio input into a digital audio signal. The audio module 170 may be further configured to encode and decode the audio signals.

The speaker 170A, also referred to as a "loudspeaker", is configured to convert an electrical audio signal into a sound signal.

The receiver 170B, also referred to as an "earpiece", is configured to convert an electrical audio signal into a sound signal.

The microphone 170C, also referred to as a "microphone" or "mike", is configured to convert a sound signal into an electrical signal.

The pressure sensor 180A is configured to sense a pressure signal, and convert the pressure signal into an electrical signal. When a touch operation is performed on the display screen 194, the electronic device 100 detects an intensity of the touch operation based on the pressure sensor 180A. The electronic device 100 may perform computing for a touch location based on a detection signal of the pressure sensor 180A.

The gyroscope sensor 180B may be configured to determine a motion posture of the electronic device 100.

The barometric pressure sensor 180C is configured to measure barometric pressure. The magnetic sensor 180D includes a Hall sensor.

The acceleration sensor 180E may detect accelerations of the electronic device 100 in various directions (for example, directions pointed by three axes, namely, an x axis, a y axis, and a z axis, in a three-axis coordinate system of the electronic device 100).

The distance sensor 180F is configured to measure a distance. The electronic device 100 may measure a distance in an infrared manner or a laser manner.

The optical proximity sensor 180G may include, for example, a light-emitting diode (LED) and a light detector, such as a photodiode.

The ambient light sensor 180L is configured to sense luminance of ambient light. The electronic device 100 may adaptively adjust brightness of the display screen 194 based on the sensed ambient light brightness.

The fingerprint sensor 180H is configured to collect a fingerprint.

The temperature sensor 180J is configured to measure a temperature.

The touch sensor 180K is also referred to as a "touch component". The touch sensor 180K may be disposed in the display screen 194, and the touch sensor 180K and the display screen 194 form a touchscreen, which is also referred to as a "touch panel". The touch sensor 180K is configured to detect a touch operation that is performed on or near the touch sensor 180K. The touch sensor may transfer the detected touch operation to the application processor, to determine a type of a touch event. A visual output related to the touch operation may be provided through the display screen 194. In some other embodiments, the touch sensor 180K may be alternatively disposed on a surface of the electronic device 100 and at a position different from that of the display screen 194.

The bone conduction sensor 180M may obtain a vibration signal. In some embodiments, the bone conduction sensor 180M may obtain a vibration signal and a blood pressure beating signal of a vibrating bone block of a human vocal part.

The button 190 may be a mechanical button or a touch button. The electronic device 100 may receive a key input, and generate a key signal input related to a user setting and function control of the electronic device 100.

**The following briefly describes implementation of screen projection between the electronic device 100 and the electronic device 200 according to an embodiment of this application.**

In a screen projection implementation, after a desktop of the electronic device 100 is projected to the electronic device 200, the electronic device 200 displays an extended-screen desktop of the electronic device 100 in full screen. To enable the extended-screen desktop projected by the electronic device 100 to the electronic device 200 to adapt to both a screen resolution of the electronic device 200 and an operation habit of a user on the electronic device 200, the extended-screen desktop usually uses a customized APK that is different from an Android application package (Android application package, APK) of a standard desktop of the electronic device 100. In other words, the electronic device 100 displays, by using the customized APK, the desktop of the electronic device 100 and a status bar of the electronic device 100 on the electronic device 200 in a simulated manner. In this implementation, the extended-screen desktop displayed by the electronic device 200 and the standard desktop of the electronic device 100 come from different sources, and the user cannot maintain the extended-screen desktop and the standard desktop in a unified manner. Consequently, the desktop (that is, the extended-screen desktop) and the status bar (that is, an extended-screen status bar) projected to the electronic device 200 cannot follow a user experience (User Experience, UX) style (for example, a theme, a wallpaper, and a lock screen) of the standard desktop of the electronic device 100; and cannot inherit functional features (for example, functional features of a notification center, quick settings, a folder, and an FA) of the standard desktop and a standard status bar of the electronic device 100. In addition, necessary data synchronization (for example, notification message management) cannot be maintained.

In another screen projection implementation provided in this embodiment of this application, the electronic device 100 may support a desktop launcher (Launcher) in simultaneously running a plurality of desktop instances in different display areas (Display), support a system interface (SystemUI) in simultaneously running a plurality of status bar instances, and maintain correspondences between status bar instances and desktop instances. In this embodiment of this application, the desktop launcher may also be referred to as a desktop application.

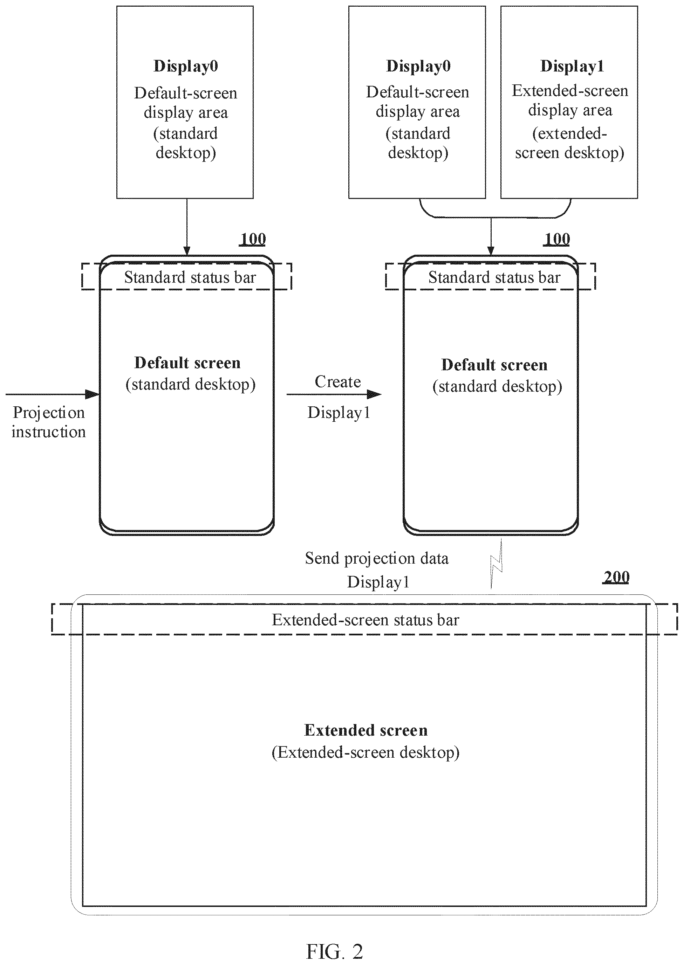

For example, FIG. 2 is a schematic diagram of projection communications between an electronic device 100 and an electronic device 200 according to an embodiment of this application. As shown in FIG. 2, a physical display screen configured in the electronic device 100 is a default screen of the electronic device 100, the electronic device 100 runs a standard desktop and a standard status bar in a display area (that is, Display0) of the default screen, and a display area identity (Display Identity document, DisplayId) corresponding to an application window running in the Display0 is an identity (Identity document, ID) of the Display0. The electronic device 100 displays, based on the application window running in the Display0, the standard desktop and the standard status bar on the default screen.

After determining, based on a projection instruction, that a projection destination device is the electronic device 200, the electronic device 100 uses, as an extended screen of the mobile phone 100, a display screen configured in the electronic device 200, and creates an extended-screen display area (Display1) for the extended screen. The electronic device 100 runs an extended-screen desktop and an extended-screen status bar in the Display1, and a DisplayId corresponding to an application window running in the Display1 is an ID of the Display1. The extended-screen desktop and the standard desktop are two desktop instances created and run by a same Launcher. The extended-screen status bar and the standard status bar are status bar instances created and run by a same SystemUI. The electronic device 100 determines, based on the application window running in the Display1, display content of the extended screen, and may project the display content of the extended screen to the electronic device 200; and the electronic device 200 may display, based on projection data sent by the electronic device 100, the extended-screen desktop and the extended-screen status bar.

In some embodiments, after a connection to the electronic device 200 is established, the electronic device 100 may obtain device information of the electronic device 200, such as a model and a screen resolution of the electronic device 200. The application window run by the electronic device 100 in the Display1 is an application window that is applicable to the electronic device 200 and that is obtained after interface optimization and function optimization are performed, based on the device information of the electronic device 200 such as the model and the screen resolution of the electronic device 200, on an original application window of the electronic device 100. The interface optimization includes: changing a display size of the application window, and changing a display size and an interface layout of each interface element in the application window. The function optimization includes: adding a function that is unavailable in the original application window of the electronic device 100, and shielding some original functions of the electronic device 100 that are not applicable to the electronic device 200, so as to adapt to the operation habit of the user on the electronic device 200.

Refer to FIG. 2. The Launcher runs two desktop instances in different Displays, so that data isolation between the two desktop instances can be implemented. In addition, because the two desktop instances originate from a same desktop launcher APK, a data synchronization operation on the two desktop instances can be implemented. For example, a theme, a wallpaper, and a lock screen of the extended screen of the electronic device 100 all follow the default screen of the electronic device 100. In this embodiment of this application, a plurality of status bar instances may be simultaneously running, and a data channel of each status bar instance is maintained. Each status bar instance is associated with a different Display, so as to ensure that status bar events of different Displays can be isolated from each other and do not affect each other. In conclusion, according to this embodiment of this application, the desktop and the status bar can run across Displays, and data synchronization between different Displays can be maintained.

It needs to be noted that, in this embodiment of this application, the application window may be a Window object corresponding to an Activity in an Android system, or may be an application window in an iOS system, or may be an application window in another operating system. This is not specifically limited herein. One application includes a plurality of application windows, and one application window usually corresponds to one user interface (User Interface, UI). Optionally, one application window may alternatively correspond to a plurality of user interfaces. For ease of description, an application window may also be referred to as a window for short in this embodiment of this application.

The Activity in the Android system is an interface for interaction between the user and an application. Each Activity component is associated with a Window object used to describe a specific application window. It can be learned that, the Activity is a highly-abstract user interface component, and represents a user interface and corresponding service logic that centers on the user interface in the Android system; and an event triggered by the user may be monitored and processed by using a control in the user interface. It can be understood that, in Android applications, one Activity may be represented as one user interface, and one Android application may have a plurality of activities.

**The following describes, by using an example in which the electronic device 100 is a mobile phone and the electronic device 200 is a computer, example user interfaces in a screen projection scenario according to an embodiment of this application with reference to the accompanying drawings.**

The following describes a home screen 11 of a desktop application of an example mobile phone 100 according to an embodiment of this application.

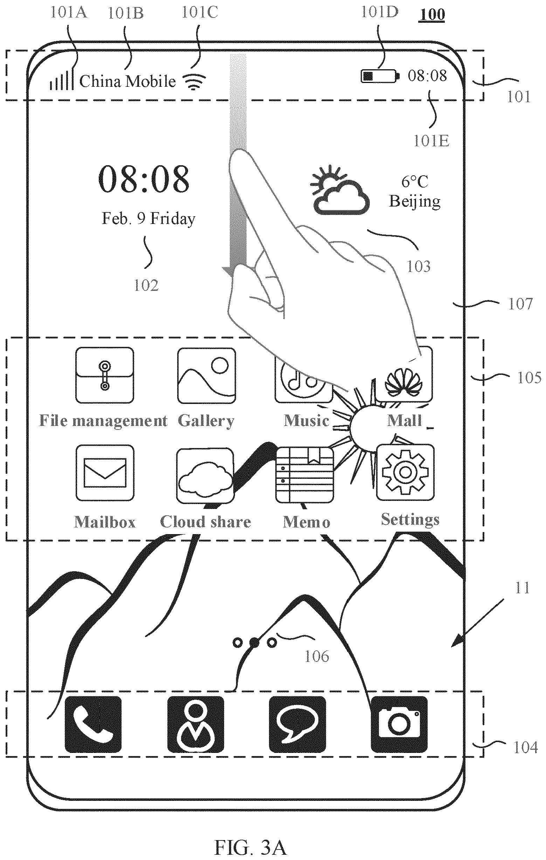

For example, FIG. 3A shows the home screen 11 of the mobile phone 100, which is used to present applications installed on the mobile phone 100. The home screen 11 may include: a standard status bar 101, a calendar indicator 102, a weather indicator 103, a tray 104 containing common application icons, and other application icons 105.

The standard status bar 101 may include: one or more signal strength indicators 101A of a mobile communication signal (also referred to as a cellular signal), an operator name (for example, "China Mobile") 101B, one or more signal strength indicators 101C of a wireless fidelity (wireless fidelity, Wi-Fi) signal, a battery status indicator 101D, and a time indicator 101E.

The tray 104 containing common application icons may present: an icon of Phone, an icon of Contacts, an icon of Messages, and an icon of Camera. The other application icons 105 may present: an icon of File management, an icon of Gallery, an icon of Music, an icon of Settings, and the like. The home screen 11 may further include a page indicator 106. The other application icons may be distributed on a plurality of pages, and the page indicator 106 may be used to indicate a specific page on which an application is currently viewed by the user. The user may slide leftward or rightward in an area including the other application icons, to view an application icon on another page.

The home screen 11 may further include a desktop wallpaper 107. The desktop wallpaper 107 may be specified by the user, or may be specified by default in the mobile phone 100. In addition, the mobile phone 100 may use a plurality of themes, and the mobile phone 100 may change a desktop layout style, an icon display style, and a desktop color by switching a theme. Generally, a wallpaper is configured by default for each theme. The user can modify a wallpaper of the mobile phone 100 under a current theme.

It can be understood that, FIG. 3A shows only an example of a user interface on the mobile phone 100, and should not constitute a limitation on this embodiment of this application.

In this embodiment of this application, the mobile phone 100 may establish a connection to a computer 200 by using a near-field wireless communication technology such as NFC, Wi-Fi, or Bluetooth, so as to project a desktop of the mobile phone 100 to the computer 200. The following describes a screen projection process by using an example in which screen projection is implemented by using NFC.

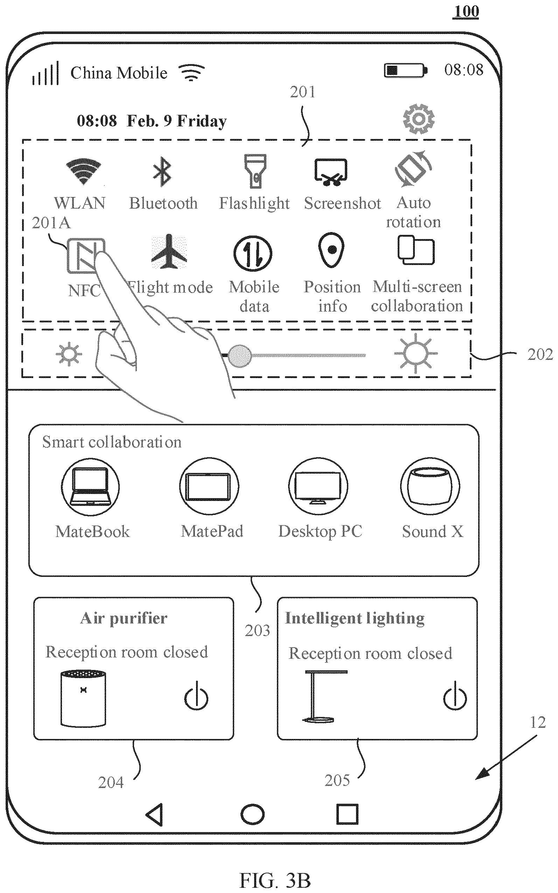

For example, as shown in FIG. 3A, the mobile phone 100 receives a downward sliding operation performed by the user on the standard status bar 101; and in response to the sliding operation, the mobile phone 100 displays a control center interface 12 shown in FIG. 3B. The control center interface 12 includes: a plurality of shortcut icons 201 (for example, a WLAN icon, a Bluetooth icon, an NFC icon 201A, and a multi-screen collaboration icon shown in FIG. 3B) for common functions, a brightness adjustment bar 202, one or more icons 203 of smart collaborative devices (for example, a notebook computer MateBook, a pad MatePad, a desktop computer Desktop, and an intelligent acoustics device Sound X), and one or more control frames (for example, a control frame 204 of an air purifier and a control frame 205 of intelligent lighting) of smart home devices.

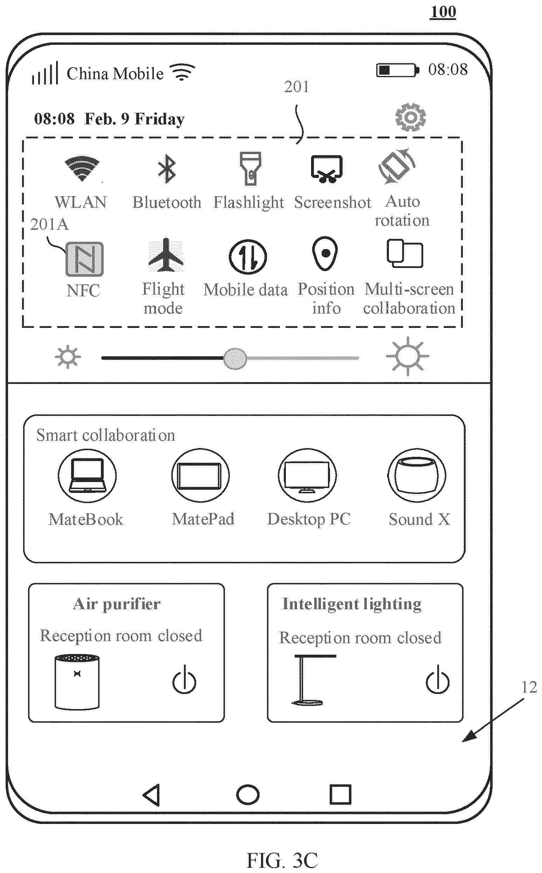

There are two statuses for the NFC icon 201A: a selected status and a non-selected status. For example, the NFC icon 201A shown in FIG. 3B is in the non-selected status, an NFC module is disabled on the mobile phone 100, and the NFC icon 201A may receive an input operation (for example, a touch operation) of the user; and in response to the input operation, the mobile phone 100 switches the NFC icon 201Ato the selected status, as shown in FIG. 3C, and enables the NFC module.

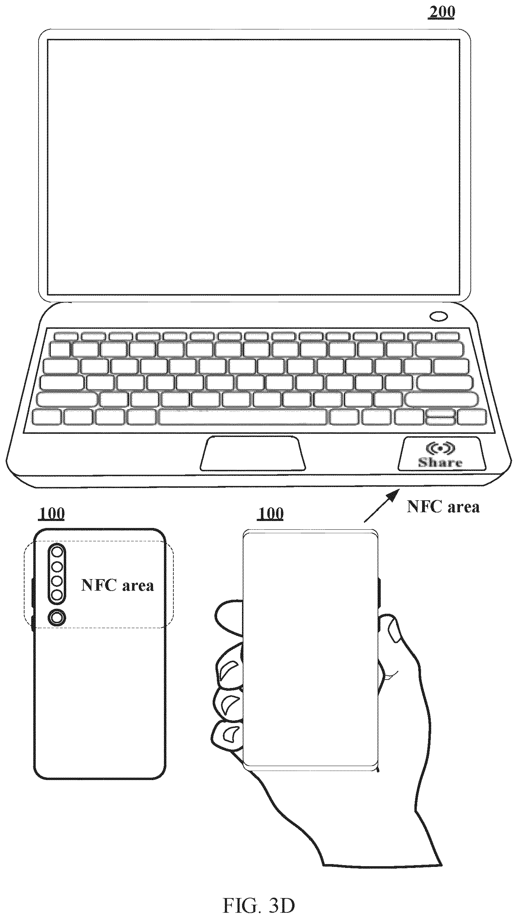

For example, as shown in FIG. 3D, the NFC module of the mobile phone 100 is located in an NFC area on the back of the mobile phone, and an NFC module of the computer 200 is located in an NFC area in a lower right corner of the computer 200. In some embodiments, the user may implement an NFC connection between the mobile phone 100 and the computer 200 by placing the NFC area of the mobile phone 100 to get close to the NFC area of the computer 200, so as to project the desktop of the mobile phone 100 to the computer 200. It can be understood that, the NFC area of the mobile phone 100 may be alternatively located in another part of the mobile phone 100, and the NFC area of the computer 200 may be alternatively located in another part of the computer 200. This is not specifically limited herein.

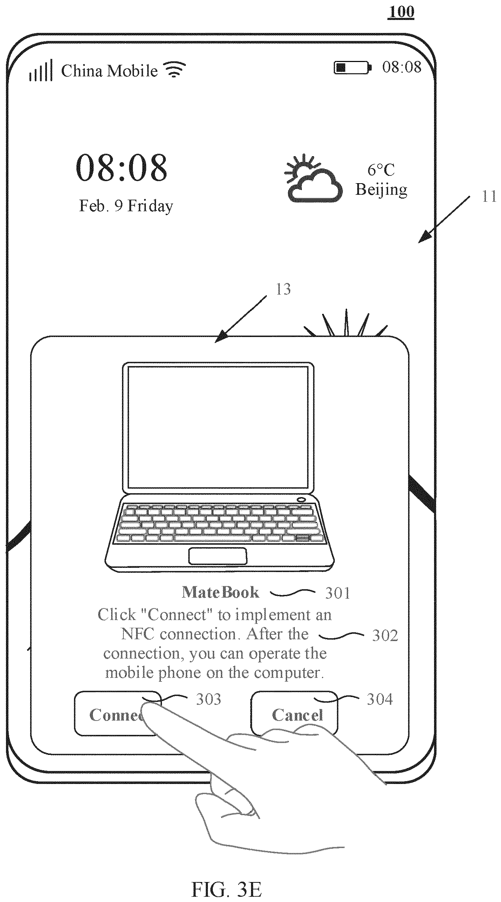

Specifically, after the user places the NFC area of the mobile phone 100 to get close to the NFC area of the computer 200, the mobile phone 100 may detect an NFC signal of the computer 200, and the mobile phone 100 displays, on a current display interface, a prompt box 13 shown in FIG. 3E. The prompt box 13 includes a model 301 (for example, MateBook), prompt information 302, a connection control 303, and a cancellation control 304 of the computer 200.

The prompt information is used to prompt the user to tap the connection control 302 to implement an NFC connection; and after the NFC connection is established, the user may operate and control the mobile phone 100 on the computer 200. The connection control 303 may receive an input operation (for example, a touch operation) of the user; and in response to the input operation, the mobile phone 100 sends an NFC connection request to the computer 200. The cancellation control 304 may receive an input operation (for example, a touch operation) of the user; and in response to the input operation, the mobile phone 100 may close the prompt box 13.

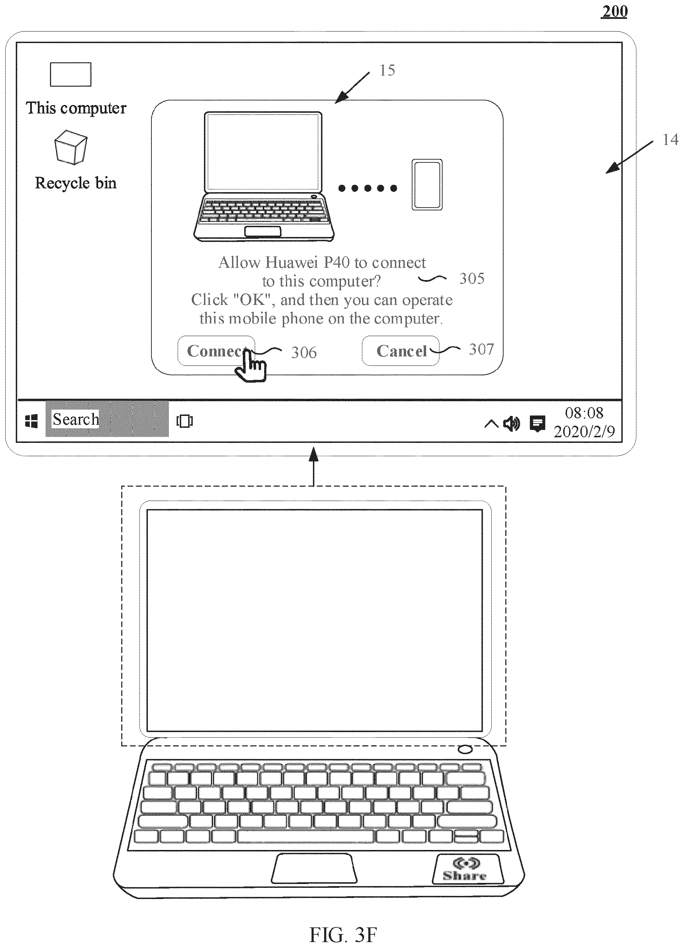

As shown in FIG. 3F, the computer 200 displays a prompt box 15 on a current display interface (for example, a desktop 14 of the computer 200) in response to the received NFC connection request of the mobile phone 100. The prompt box 15 includes prompt information 305, a connection control 306, and a cancellation control 307.

The prompt information 305 is used to prompt the user whether to allow the mobile phone 100 to connect to the local device. An NFC connection may be implemented by tapping the connection control 306. After the NFC connection is established, the user may operate the mobile phone 100 on the computer 200. In other words, after the NFC connection is established, the mobile phone 100 may project the desktop of the mobile phone 100 to the computer 200, and the user may control the mobile phone 100 by using a desktop displayed on the computer 200.

The connection control 306 may receive an input operation (for example, a touch operation) of the user; and in response to the input operation, the computer 200 sends an NFC connection response to the mobile phone 100. The cancellation control 307 may receive an input operation (for example, a touch operation) of the user; and in response to the input operation, the computer 200 may close the prompt box 15.

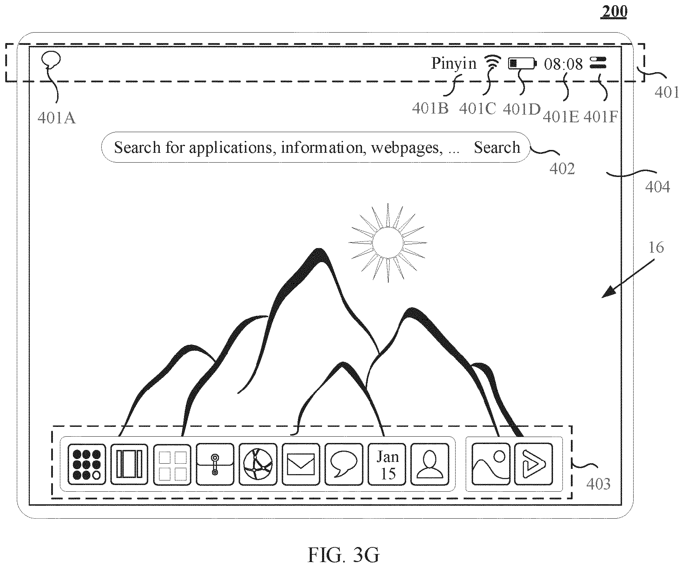

In response to the received NFC connection response of the computer 200, the mobile phone 100 creates an extended-screen desktop by using the Launcher, and creates an extended-screen status bar by using the SystemUI. A DisplayId corresponding to the extended-screen desktop and a DisplayId corresponding to the extended-screen status bar are an ID of an extended-screen display area (Display1). The mobile phone 100 sends projection data of the Display1 to the computer 200. As shown in FIG. 3G, the computer 200 displays a Pc-like home screen 16 of the mobile phone 100 based on the projection data. Pc-like means that, to adapt to a screen resolution of the computer 200 and an operation habit of the user on the computer 200, interface optimization and function optimization are performed on the extended-screen desktop and the extended-screen status bar that are projected by the mobile phone 100 to the computer 200.

For example, as shown in FIG. 3G, the home screen 16 may include: an extended-screen status bar 401, a search bar 402, a Dock bar 403, and a desktop wallpaper 404. It can be learned from FIG. 3G that, the home screen 16 projected by the mobile phone 100 to an extended screen is applicable to the screen resolution of the computer 200. In addition, both a theme and a wallpaper of the extended-screen desktop displayed by the computer 200 are consistent with those of a standard desktop of the mobile phone 100. The desktop wallpaper 107 and the desktop wallpaper 404 originate from a same picture. Optionally, the desktop wallpaper 107 and the desktop wallpaper 404 are obtained by tailoring the same picture.

The following separately describes in detail the extended-screen status bar 401, the search bar 402, the Dock bar 403, and a lock screen of the home screen 16 that is projected by the mobile phone 100 to the extended screen.

As shown in FIG. 3G, the extended-screen status bar 401 may include: a notification center icon 401A, an input method indicator 401B, one or more signal strength indicators 401C of a Wi-Fi signal, a battery status indicator 401D, a time indicator 401E, and a control center icon 401F. Optionally, the extended-screen status bar 401 may further include another interface element, for example, a Bluetooth icon or a signal strength indicator of a cellular network. This is not specifically limited herein.

It can be understood that, in this embodiment of this application, the mobile phone 100 runs two status bar instances: the standard status bar 101 corresponding to the standard desktop displayed by the mobile phone 100, and the extended-screen status bar 401 corresponding to the extended-screen desktop displayed by the computer 200. ADisplayId associated with the standard status bar 101 is an ID of the Display0, and a DisplayId associated with the extended-screen status bar 401 is the ID of the Display! .

Different from the standard status bar 101 corresponding to the standard desktop of the mobile phone 100, each interface element in the extended-screen status bar 401 may be tapped to open a corresponding second-level interface. The following describes the second-level interface of each interface element in the extended-screen status bar 401.

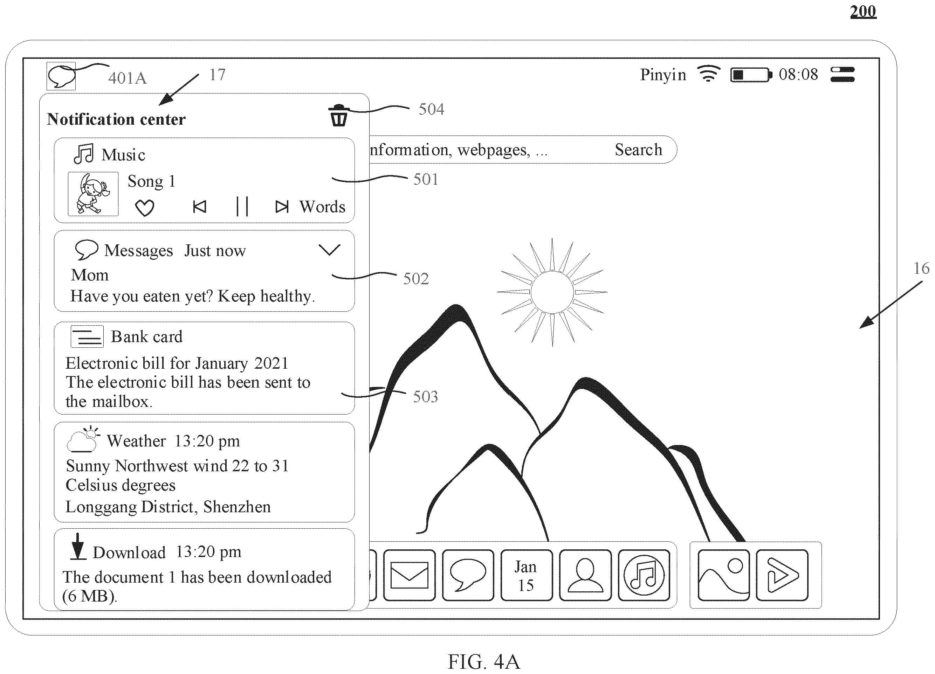

The notification center icon 401A may receive an input operation (for example, a click operation performed by using a left button of a mouse or a touch operation of the user) of the user; and in response to the input operation, the computer 200 displays a notification center window 17 shown in FIG. 4A.

It needs to be noted that, when the computer 200 is equipped with a mouse, input operations received by the extended-screen desktop and the extended-screen status bar in this embodiment of this application may be operations performed by the user by using the mouse; or when the computer 200 is equipped with a touchscreen (or a touch panel), input operations received by the extended-screen desktop and the extended-screen status bar in this embodiment of this application may be touch operations performed by the user by using the touchscreen (or the touch panel). This is not specifically limited herein.

Specifically, in some embodiments, a control (for example, the notification center icon 401A displayed on the home screen 16) in the extended-screen status bar displayed by the computer 200 may receive an input operation (for example, a click operation performed by using the left button of the mouse) of the user; and in response to the input operation, the computer 200 may send related information (for example, coordinates clicked by using the left button and a DisplayId corresponding to a display screen on which the input operation is performed) of the input operation to the mobile phone 100. Based on the related information of the input operation, the mobile phone 100 identifies that the input operation is a click operation performed by using the left button of the mouse on the notification center icon 401A in the extended-screen status bar, and then determines that a response event triggered by the input operation is to display the notification center window 17. The mobile phone 100 runs the notification center window 17 in the Display1, and sends updated display content of the Display! to the computer 200. The computer 200 displays, based on the projection data sent by the mobile phone 100, the notification center window 17 shown in FIG. 4A. For processing of input operations received by the extended-screen status bar displayed by the computer 200 in subsequent embodiments, refer to the foregoing implementation process.

For example, as shown in FIG. 4A, the notification center window 17 includes one or more notification messages (for example, a music notification message 501, an SMS notification message 502, and a bank card notification message 503 shown in FIG. 4A) of the mobile phone 100, and a deletion control 504.

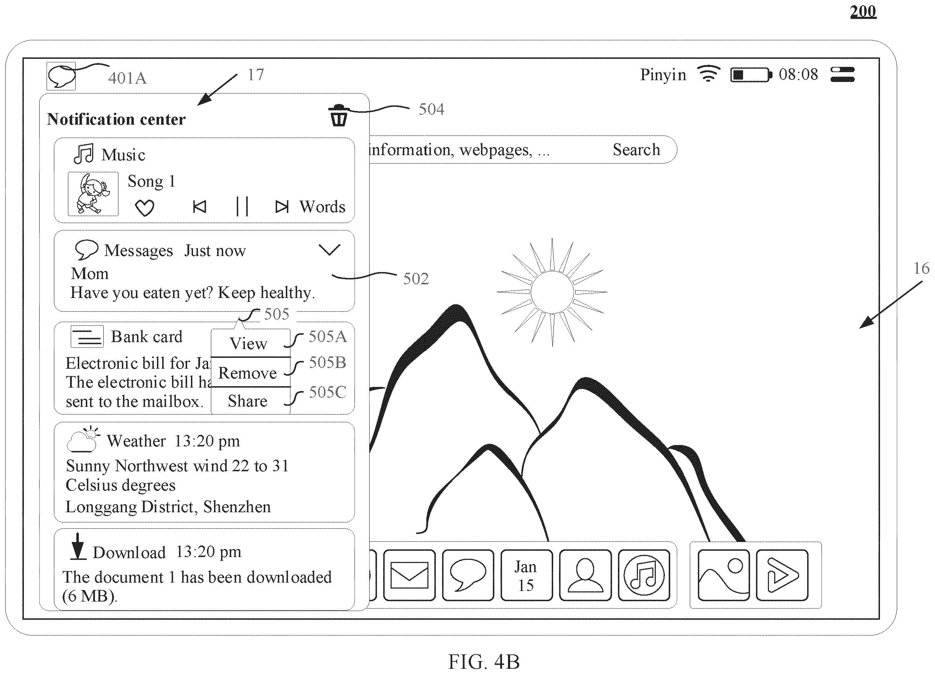

For a notification message (for example, the notification message 502) in the notification center window 17, an input operation of the user may be received; and in response to different input operations of the user, operations such as removing the notification message, sharing the notification message, and viewing details of the notification message may be implemented. Optionally, for the notification message 502, an input operation (for example, a click operation performed by using the left button of the mouse) of the user may be received; and in response to the input operation, the computer 200 may display specific content of the notification message 502 on a user interface of an SMS message application. Optionally, for the notification message 502, an input operation (for example, a click operation performed by using a right button of the mouse) of the user may be received; and in response to the input operation, the computer 200 displays a menu bar 505 shown in FIG. 4B. The menu bar 505 includes a view control 505A, a removal control 505B, and a sharing control 505C for the notification message 502. The notification message 502 may be viewed, shared, or removed from the notification center window 17 correspondingly by receiving an input operation (for example, a click operation performed by using the left button of the mouse) performed on the view control 505A, the removal control 505B, or the sharing control 505C.

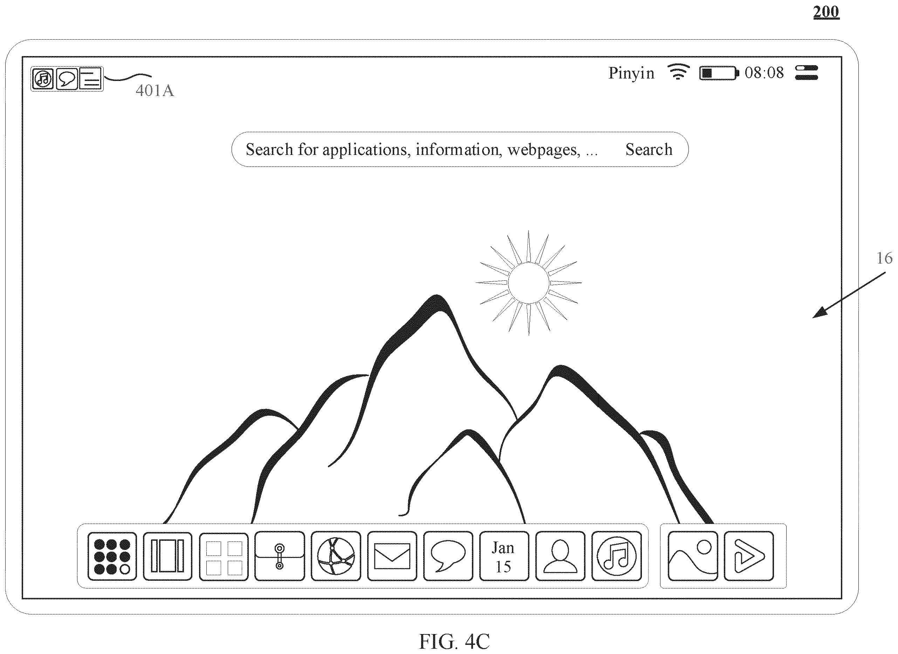

In some embodiments, display content of the notification center icon 401A includes icons of applications corresponding to the latest N notification messages. For example, as shown in FIG. 4C, the display content of the notification center icon 401A includes an icon of Music corresponding to the latest notification message 501, an icon of Messages corresponding to the notification message 502, and an icon of Bank card corresponding to the notification message 503.

In some embodiments, when a specified notification message (for example, the notification message 502) in the notification center window 17 displayed on the extended screen is removed (or deleted), the notification message is also removed (or deleted) from a notification center window displayed on a default screen of the mobile phone 100.

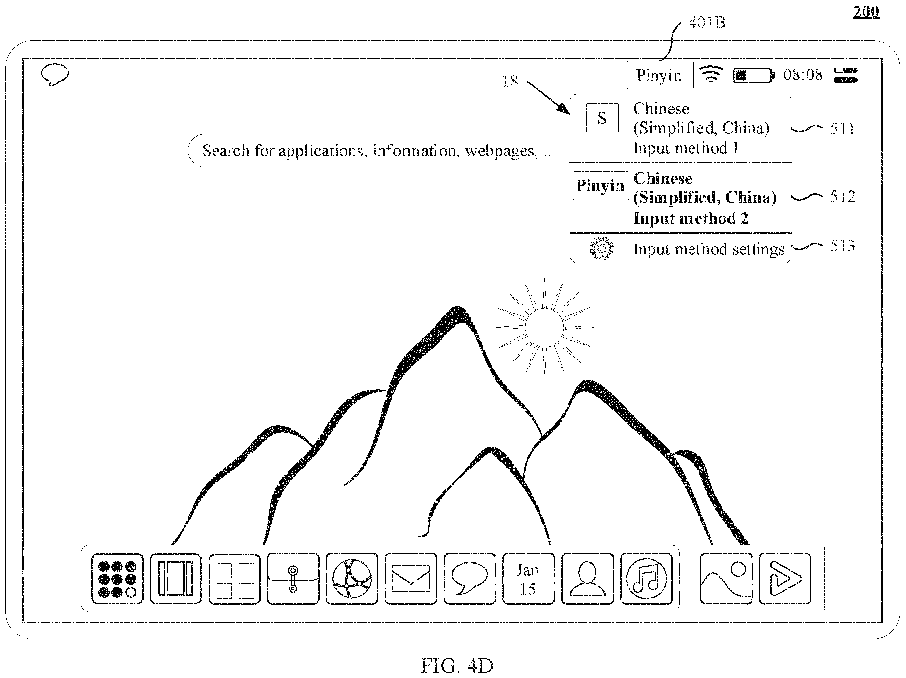

The input method indicator 401B may receive an input operation (for example, a click operation performed by using the left button of the mouse) of the user; and in response to the input operation, the computer 200 displays a floating window 18 shown in FIG. 4D. The floating window 18 may include one or more input method options (for example, an option 511 of an input method 1 and an option 512 of an input method 2) of the mobile phone 100 and an input method setting control 513. Display content of the input method indicator 401B is an icon of a current input method of the mobile phone 100.

For example, as shown in FIG. 4D, the current input method of the mobile phone 100 is the input method 2, and the display content of the input method indicator 401B is an icon of the input method 2. The option 511 of the input method 1 may receive an input operation (for example, a click operation performed by using the left button of the mouse) of the user; and in response to the input operation, the computer 200 may switch an input method of the mobile phone 100 on the extended-screen desktop to the input method 1. The input method setting control 513 is used to display an input method setting interface.

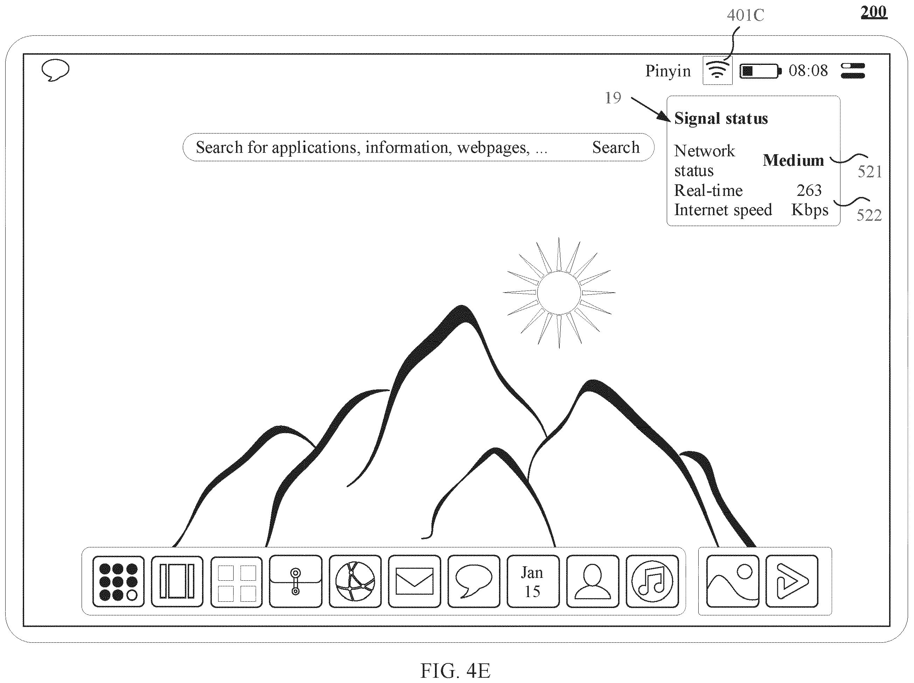

The signal strength indicator 401C may receive an input operation (for example, a click operation performed by using the left button of the mouse) of the user; and in response to the input operation, the computer 200 displays a floating window 19 shown in FIG. 4E. The floating window 19 includes a Wi-Fi network status 521 and a real-time Internet speed 522 of the mobile phone 100. For example, the Wi-Fi network status includes three network statuses: strong, medium, and weak. As shown in FIG. 4E, the Wi-Fi network status 521 of the mobile phone 100 is currently "medium", and the real-time Internet speed 522 is 263 kilobits per second (Kbps).

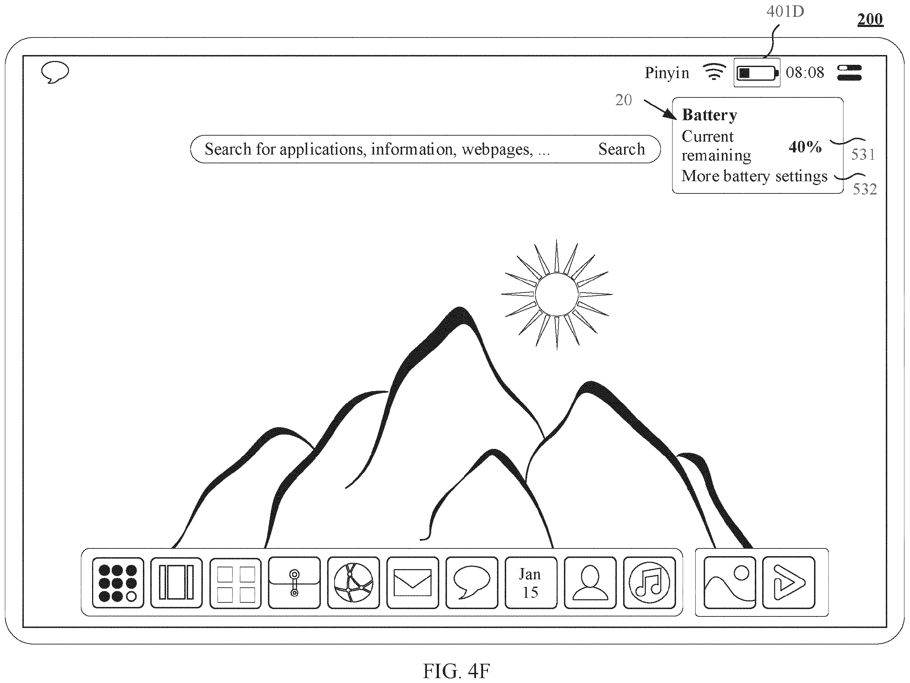

The battery status indicator 401C may receive an input operation (for example, a click operation performed by using the left button of the mouse) of the user; and in response to the input operation, the computer 200 displays a floating window 20 shown in FIG. 4F. The floating window 20 displays current remaining power 531 of the mobile phone 100 and a setting control 532. For example, as shown in FIG. 4E, the current remaining power 531 of the mobile phone 100 is 40%. The setting control 532 may receive an input operation (for example, a click operation performed by using the left button of the mouse) of the user; and in response to the input operation, the computer 200 may display a battery setting interface of the mobile phone 100.

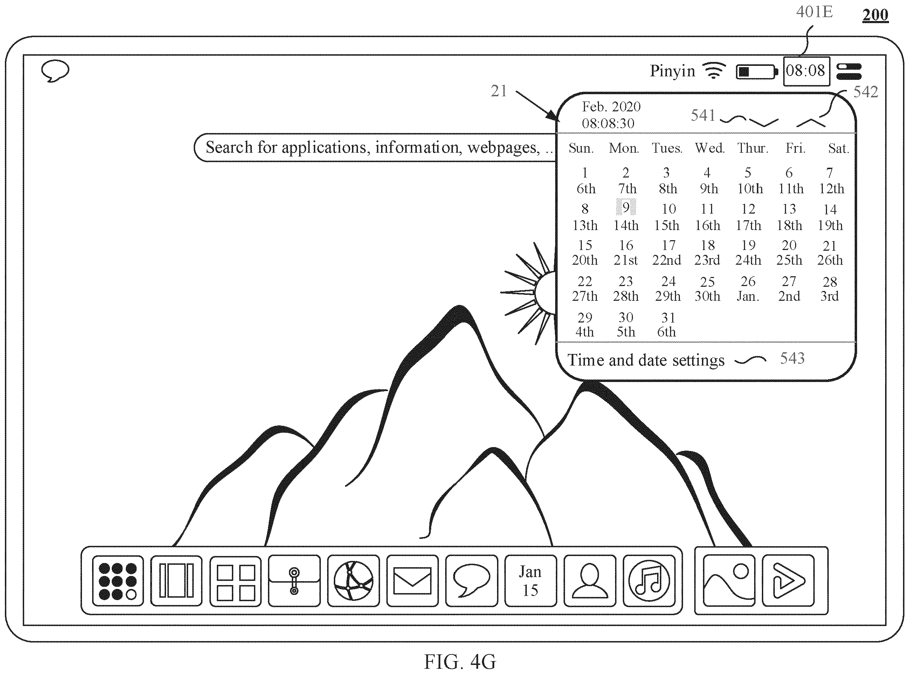

The time indicator 401E may receive an input operation (for example, a click operation performed by using the left button of the mouse) of the user; and in response to the input operation, the computer 200 displays a floating window 21 shown in FIG. 4G. The floating window 21 includes time, a date, and a calendar of a current month. Optionally, the floating window 21 further includes a flip-up control 541 and a flip-down control 542. The flip-up control 541 may be used to view a calendar of a month prior to the current month, and the flip-down control 542 may be used to view a calendar of a month following the current month. Optionally, the floating window 21 further includes a time and date setting control 543, and the setting control 543 is used to display a time and date setting interface.

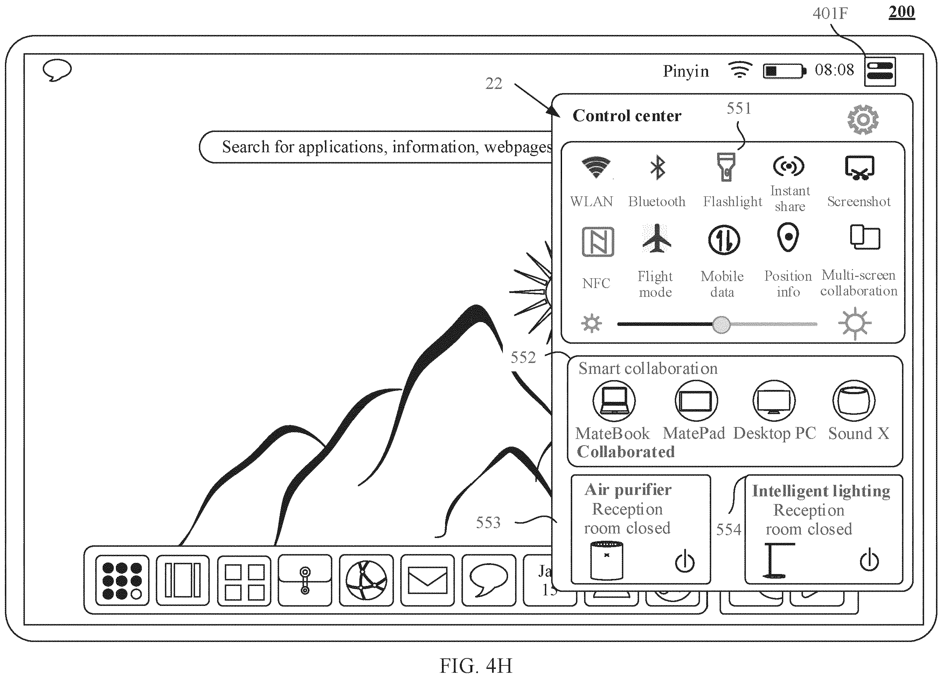

The control center icon 401F may receive an input operation (for example, a click operation performed by using the left button of the mouse) of the user; and in response to the input operation, the computer 200 displays a control center window 22 shown in FIG. 4H. The control center window 22 includes: a plurality of shortcut icons 551 (for example, a WLAN icon, a Bluetooth icon, an NFC icon, and a multi-screen collaboration icon shown in FIG. 4H) for common functions, one or more icons 552 of smart collaborative devices (for example, a notebook computer MateBook, a pad MatePad, a desktop computer Desktop, and an intelligent acoustics device Sound X), and one or more control frames (for example, a control frame 553 of an air purifier and a control frame 554 of intelligent lighting) of smart home devices. As shown in FIG. 4H, the icons 552 of the smart collaboration devices show that the mobile phone 100 is currently in a status of collaboration with a computer (that is, the computer 200) whose model is "MateBook".

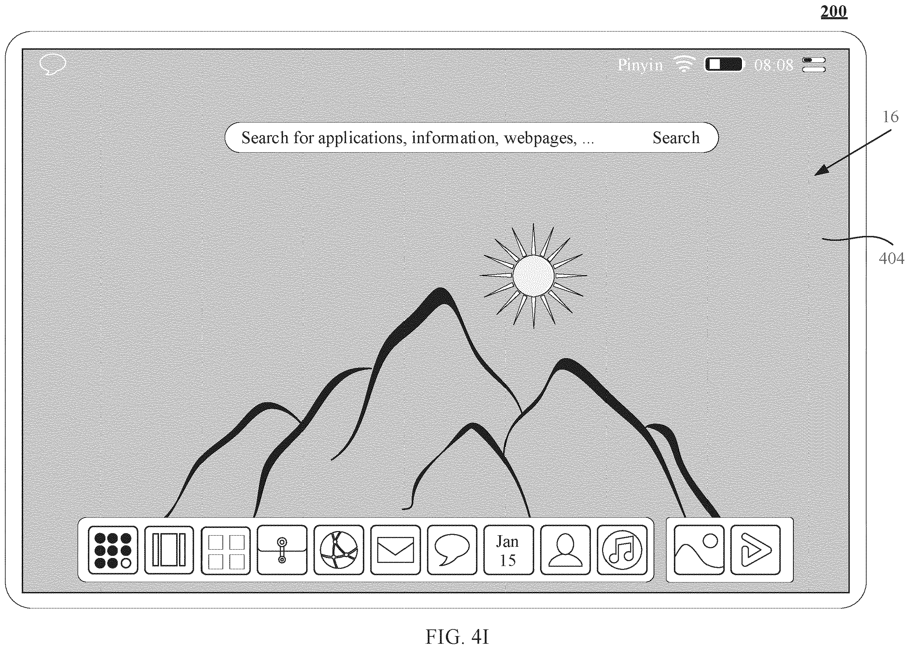

In this embodiment of this application, the mobile phone 100 may further adjust, based on a theme color of the extended-screen desktop and/or a wallpaper color of the extended-screen desktop, colors of interface elements displayed in the extended-screen status bar 401. Optionally, when the theme color of the extended-screen desktop and the color of the desktop wallpaper 404 are relatively deep, the colors of the interface elements in the extended-screen status bar 401 are adjusted to white or another preset light color; or when the theme color of the extended-screen desktop and the color of the desktop wallpaper are relatively light, the colors of the interface elements in the extended-screen status bar 401 are adjusted to black or another preset dark color. For example, as shown in FIG. 3G, the color of the desktop wallpaper 404 of the home screen 16 is relatively light, and the colors of the interface elements in the extended-screen status bar 401 are mostly black; and as shown in FIG. 4I, the color of the desktop wallpaper 404 of the home screen 16 is relatively deep, and the colors of the interface elements in the extended-screen status bar 401 are mostly white.

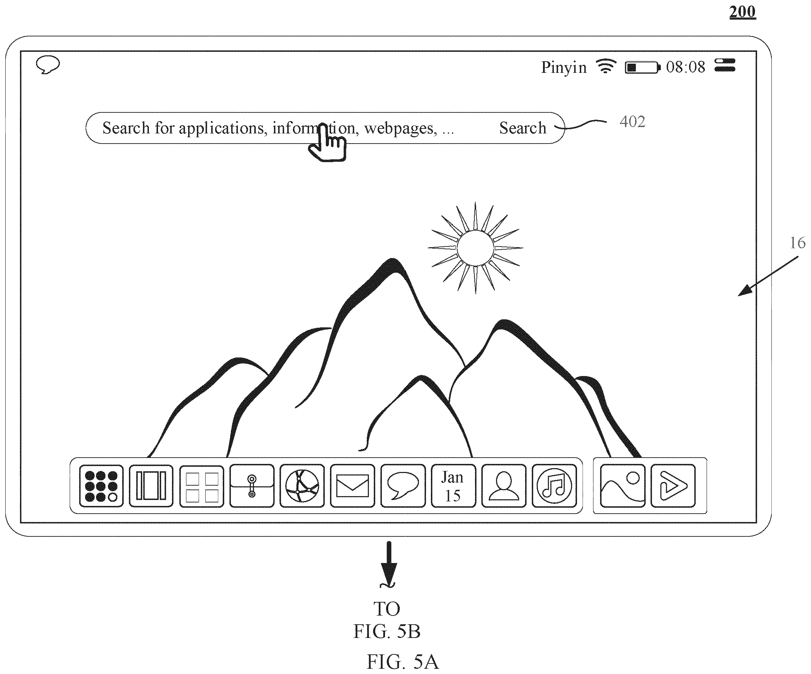

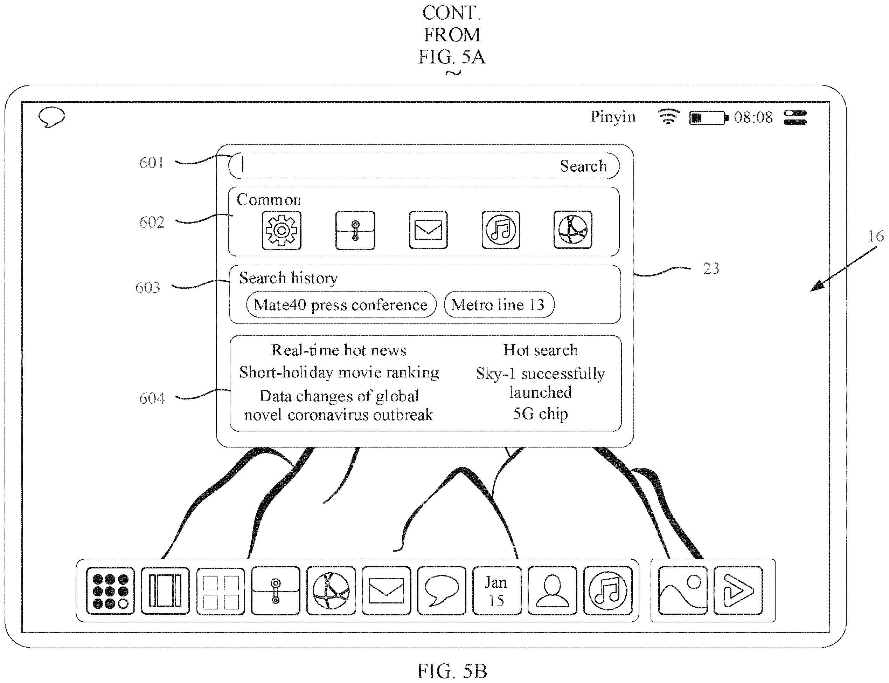

The search bar 402 may receive an input operation (for example, a double-click operation performed by using the right button of the mouse) of the user; and in response to the input operation, the computer 200 displays a global-search floating window 23 shown in FIG. 5A and FIG. 5B. For example, the floating window 23 includes a search bar 601, a common-application icon 602, a search history 603, and Hot news 604. The search bar 601 may receive text information entered by the user, and perform a global search based on the text information entered by the user. The common-application icon 602 may include icons of one or more common applications. The search history 603 may include one or more recent search records of the search bar 601. The hot news 604 may include headlines of real-time hot news and headlines of hot news in a hot search ranking list.

In this embodiment of this application, a global search may be implemented by using the search bar 402, so that an application locally installed on the mobile phone 100, a stored file, and the like can be searched offline, and resources such as news, a video, and music can be searched online.

In some embodiments, the search bar 402 on the extended-screen desktop may be disposed in the extended-screen status bar 401. This is not specifically limited herein.

It needs to be noted that, in some embodiments, the user may move, by using the mouse, a cursor of the mouse on the home screen 16 of the mobile phone 100 displayed by the computer 200. Optionally, in this embodiment of this application, for a specified input operation performed by the user by using the mouse, a corresponding cursor motion effect is added, thereby adding a visual feedback of the input operation of the user. For example, an initial display form of the cursor of the mouse may be a first shape (for example, an arrow). When the cursor of the mouse is hovered on a specified interface element (for example, the search bar 402 shown in FIG. 5A and FIG. 5B) displayed on the extended-screen desktop or in the extended-screen status bar, the display form of the cursor of the mouse may be changed to a second shape (for example, a little hand on the search bar 402 shown in FIG. 5A and FIG. 5B).

The Dock bar 403 may also be referred to as a program dock. For example, as shown in FIG. 6A-1 and FIG. 6A-2, the Dock bar 403 may include a fixed-application area 701 and a recent running area 702, where the fixed-application area 701 includes an application list icon 701A, a multi-task icon 701B, an icon 701C for displaying the desktop, and one or more application icons (for example, an icon 701D of File management and an icon 701E of Browser). The recent running area 702 includes icons of applications that have run recently. Optionally, if the fixed-application area 701 includes an icon of an application that has run recently, the icon of the application does not need to be added to the recent running area 702.

In some embodiments, the user may specify a display status of the Dock bar 403. Optionally, the display status of the Dock bar 403 is specified as being automatically hidden, and when the computer 200 displays the extended-screen desktop of the mobile phone 100 or displays a user interface of another application of the mobile phone 100, the Dock bar 403 is automatically hidden; and the computer 200 displays the Dock bar 403 only when the user moves, by using the mouse, the cursor to get close to an area in which the Dock bar 403 is located. Optionally, the display status of the Dock bar 403 is specified as being always displayed, and when the computer 200 displays the extended-screen desktop of the mobile phone 100 or displays, in a form of a floating window, a user interface of another application of the mobile phone 100, the Dock bar 403 is always displayed; or when the computer 200 displays the user interface of the another application in full screen, the Dock bar 403 is automatically hidden; and the computer 200 displays the Dock bar 403 only when the user moves, by using the mouse, the cursor to get close to the area in which the Dock bar 403 is located.

The application list icon 701A may receive an input operation (for example, a click operation performed by using the left button of the mouse) of the user; and in response to the input operation, the computer 200 displays a user interface 24 shown in FIG. 6A-1 and FIG. 6A-2. The user interface 24 includes an application icon list 703. The application icon list 703 may display a plurality of application icons, for example, an icon 703A of Music and an icon 703B of Gallery.

Optionally, the user interface 24 may further include a page indicator 704, the other application icons may be distributed on a plurality of pages, and the page indicator 704 may be used to indicate a specific page on which an application is currently viewed by the user. Optionally, the user may slide leftward or rightward on the user interface 24 by using a finger to view an application icon on another page. Optionally, as shown in FIG. 6A-1 and FIG. 6A-2, the user interface 24 may further include a flip-left control 705 and a flip-right control 706. The user may view an application icon on another page by clicking the mouse on the flip-left control 705 or the flip-right control 706. Optionally, the flip-left control 705 and the flip-right control 706 may be hidden. The computer 200 displays the flip-left control 705 (or the flip-right control 706) only when the cursor is moved, by using the mouse, to get close to an area in which the flip-left control 705 (or the flip-right control 706) is located. Optionally, the user interface 24 may further include a search bar 707, and the search bar 707 is used to quickly search for an icon of an application installed on the mobile phone 100.

In this embodiment of this application, the user may add an application icon in the application icon list 703 to the fixed-application area 701 of the Dock bar. For example, as shown in FIG. 6B-1 and FIG. 6B-2, the icon 703A of Music may receive a drag operation of the user (for example, the user selects an icon by using the left button of the mouse and then drags the icon to the fixed-application area 701); and in response to the drag operation, the computer 200 may add the icon 703A of Music to the fixed-application area 701.

In this embodiment of this application, an application icon in the application icon list 703 or in the Dock bar 403 may receive an input operation (for example, a double-click operation performed by using the left button of the mouse or a touch operation performed by using a finger of the user) of the user; and in response to the input operation, the computer 200 may display a user interface of an application corresponding to the application icon.

It needs to be noted that some third-party applications installed on the mobile phone 100 do not support extended-screen display. In this embodiment of this application, the mobile phone 100 specifies a trustlist of applications that can be displayed on the extended screen, and a function that cannot be implemented on the extended-screen desktop can be shielded by specifying the trustlist. In some embodiments, the application icon list 703 displays only an icon of an application in the trustlist; and after a third-party application supports extended-screen display, the application is dynamically added to the trustlist, and the icon of the application is added to the application icon list 703. In addition, among applications that support extended-screen display, some applications are applicable to the screen resolution of the computer 200, and a PC-like user interface is displayed in full screen on the extended screen; and some other applications are not applicable to the screen resolution of the computer 200, and only a standard user interface can be displayed on the extended screen for these applications on the mobile phone 100.

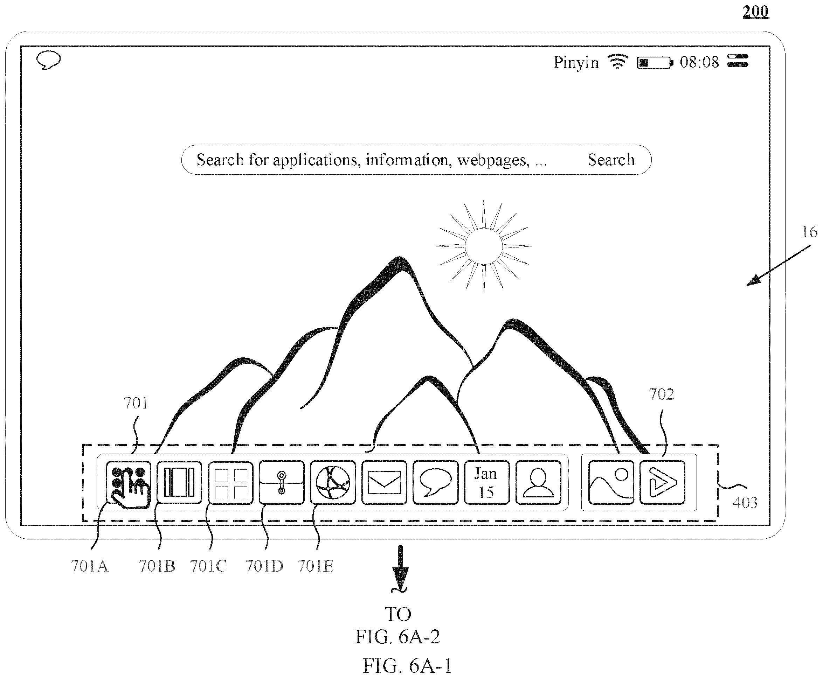

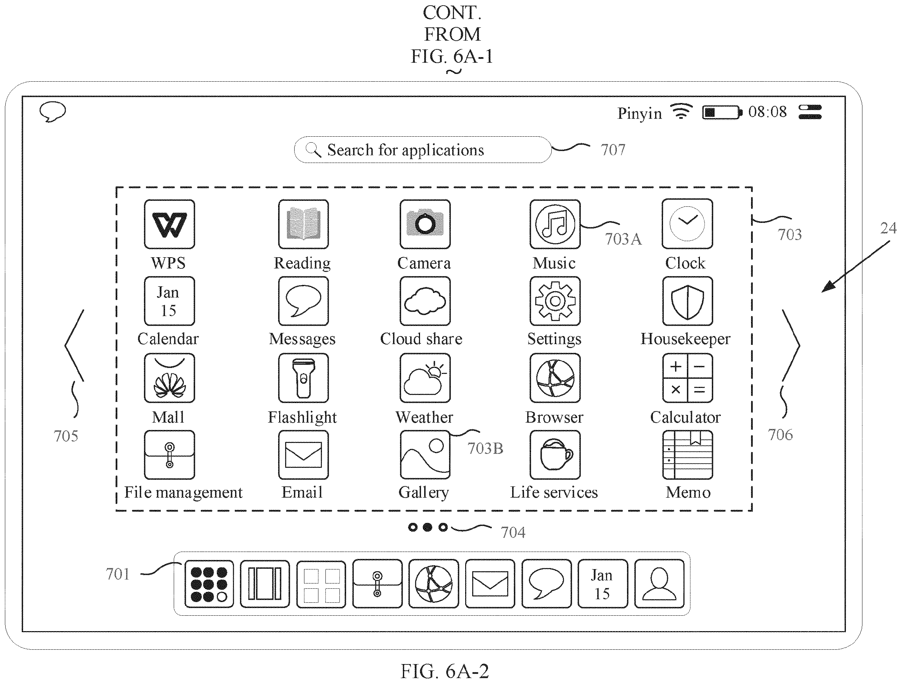

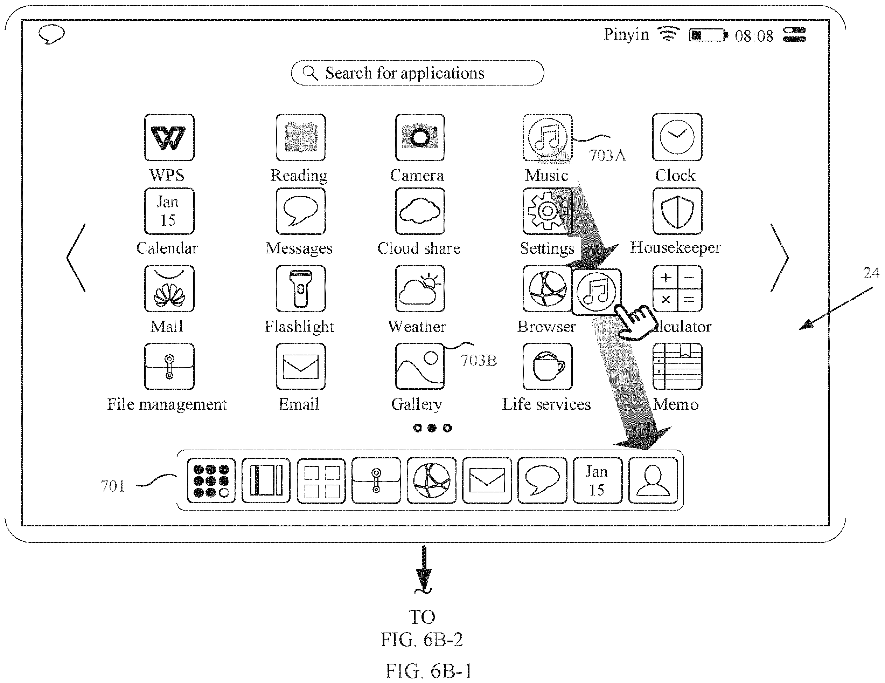

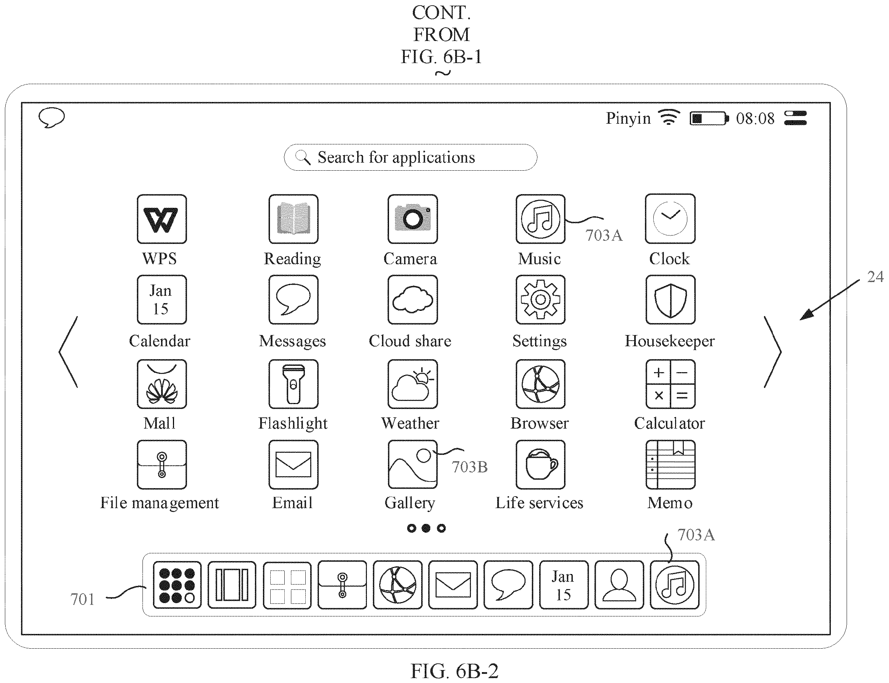

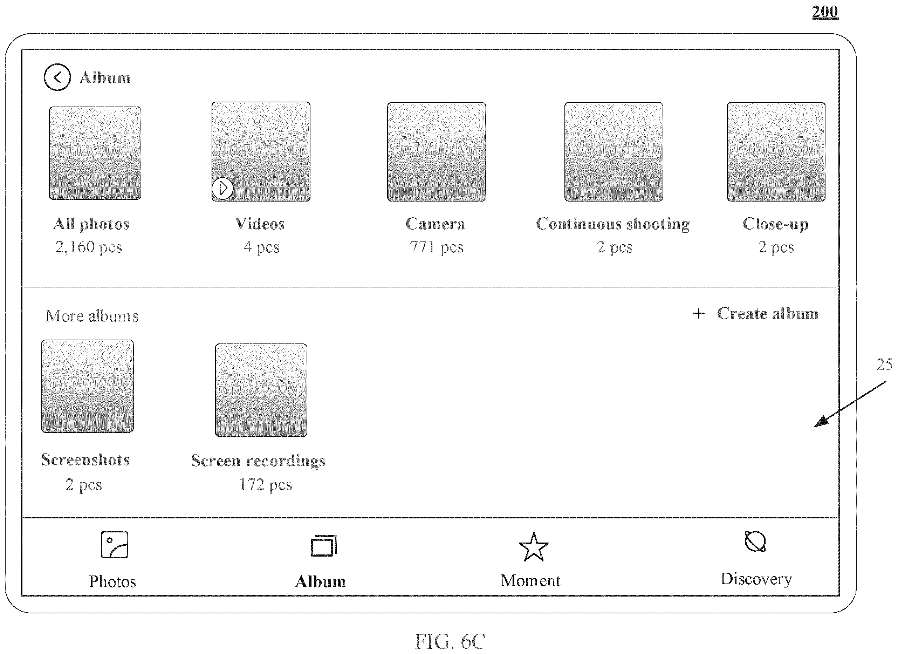

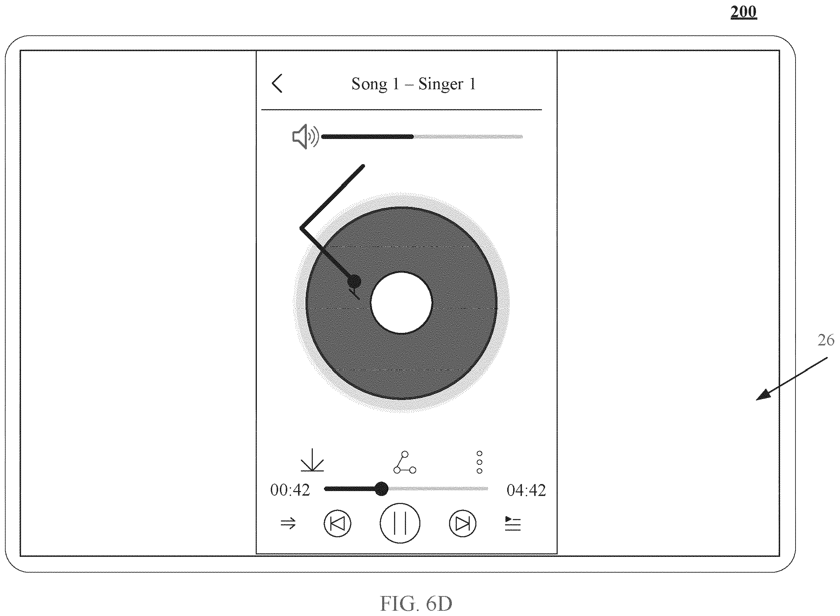

For example, Gallery supports full-screen display of the PC-like user interface on the extended screen, and the icon 703B of Gallery may receive an input operation (for example, a double-click operation performed by using the left button of the mouse) of the user; and in response to the input operation, the computer 200 may display a PC-like user interface 25 of Gallery in full screen, as shown in FIG. 6C. For example, Music does not support full-screen display of the PC-like user interface on the extended screen, and the icon 703A of Music may receive an input operation (for example, a double-click operation performed by using the left button of the mouse) of the user; and in response to the input operation, the computer 200 displays a standard user interface 26 of Music on the mobile phone 100, as shown in FIG. 6D.

Specifically, in some embodiments, when the computer 200 receives an input operation (for example, a double-click operation performed by using the left button of the mouse on the icon 703B of Gallery) performed on an application icon 1 to start an application 1, the computer 200 sends related information (for example, coordinates double-clicked by using the left button, and the DisplayId corresponding to the extended screen on which the input operation is performed) of the input operation to the mobile phone 100; and the mobile phone 100 identifies, based on the related information of the input operation and an interface layout of a user interface (for example, the user interface 24) currently running in the foreground of the Display!, that the input operation is an input operation performed on the application icon 1 on the extended-screen desktop, and determines that the input operation is used to start the application 1.

It needs to be noted that, when the user intends to start the application 1 of the mobile phone 100 on the extended-screen desktop, the application 1 may have already been started on the standard desktop of the mobile phone 100.

Optionally, when the mobile phone 100 determines that the mobile phone 100 currently does not run the application 1 in the Display0, the mobile phone 100 starts a user interface 1 (for example, the user interface 25 of Gallery) of the application 1 in the Display1, and projects updated display content of the Display1 to the computer 200; and the computer 200 displays the user interface 1 based on the projection data sent by the mobile phone 100. Optionally, when the mobile phone 100 determines that the mobile phone 100 is running the application 1 in the Display0, the mobile phone 100 moves an activity stack (ActivityStack) of the application 1 in the Display0 to the Display1, runs the application 1 in the Display1, clears running data of the application 1 in the Display0, and then projects updated display content of the Display1 to the computer 200; and the computer 200 displays a user interface (for example, the user interface 25 of Gallery) of the application 1 based on the projection data sent by the mobile phone 100. Optionally, when the mobile phone 100 determines that the mobile phone 100 is running the application 1 in the Display0, the mobile phone 100 sends prompt information 1 to the computer 200; the computer 200 may display prompt information 2 based on the prompt information 1, to prompt the user that the mobile phone 100 is running the application 1; and the user may control the application 1 by using the mobile phone 100.

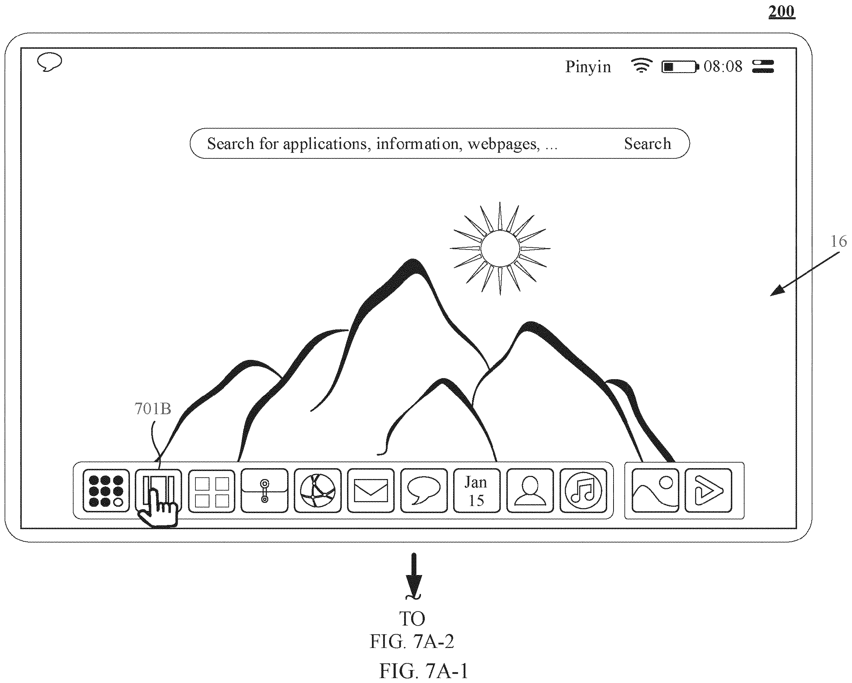

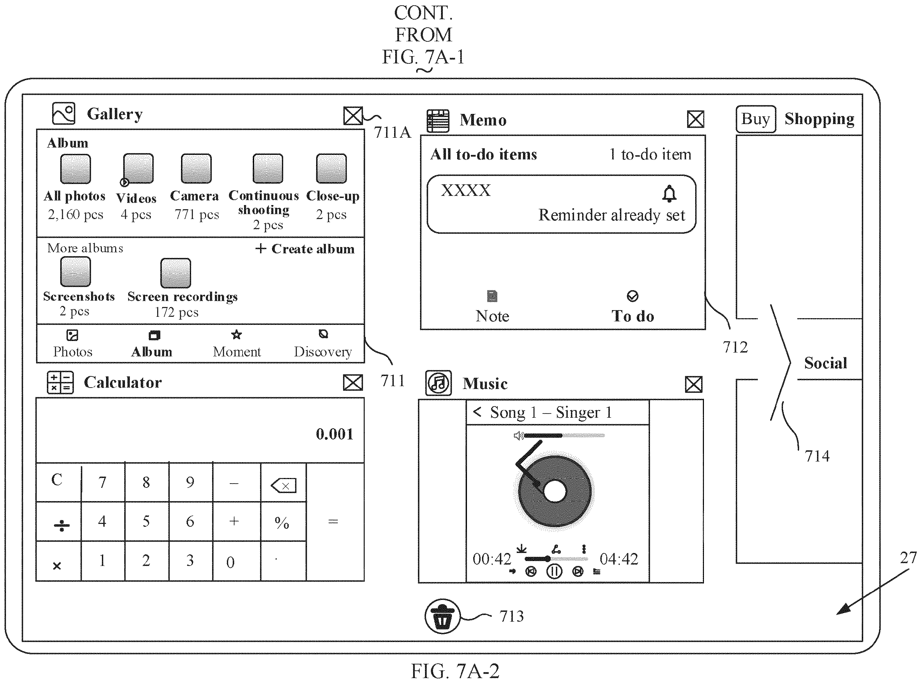

The multi-task icon 701B may receive an input operation (for example, a click operation performed by using the left button of the mouse) of the user; and in response to the input operation, the computer 200 displays a recent tasks screen 27 shown in FIG. 7A-1 and FIG.7A-2. The recent tasks screen 27 includes one or more thumbnail images (for example, a thumbnail 711 of Gallery and a thumbnail 712 of Memo) of applications recently opened by the user by using the extended-screen desktop, and a deletion control 713. Optionally, when there are a relatively large quantity of recently opened applications and the computer 200 cannot simultaneously display thumbnail images of all recently opened applications, the recent tasks screen 25 may further include a flip-right control 714.

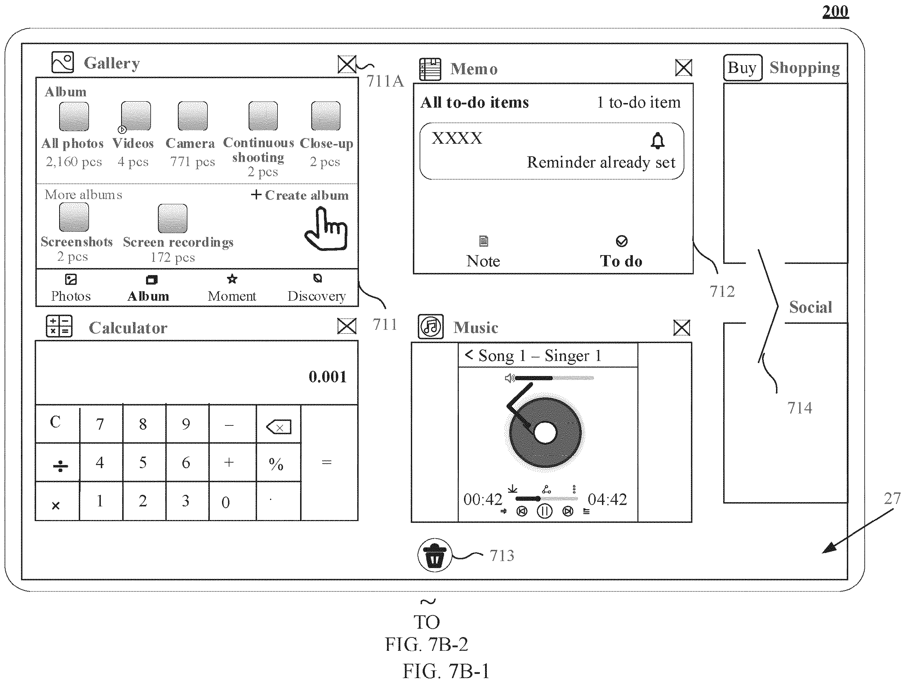

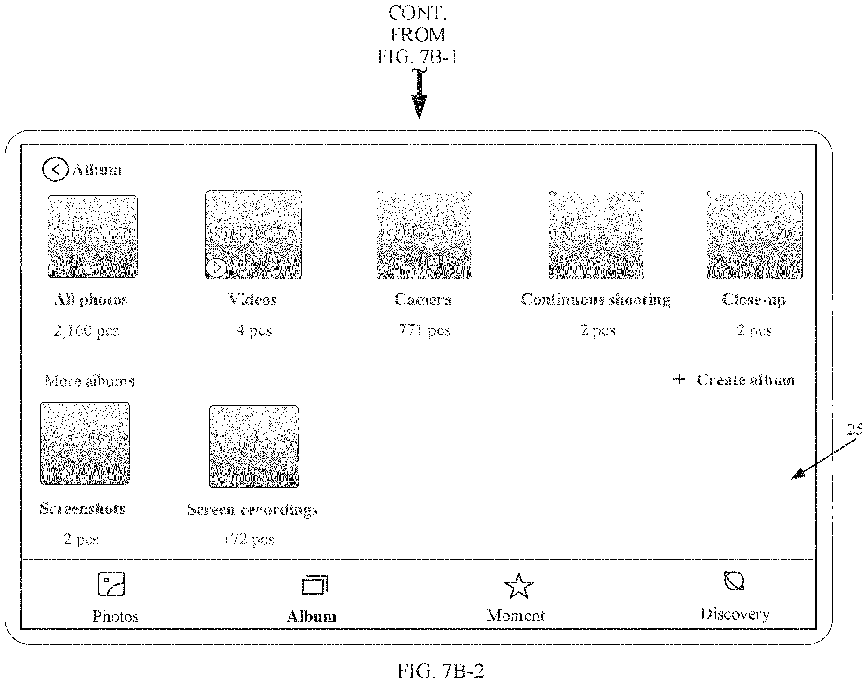

As shown in FIG. 7B-1 and FIG. 7B-2, a thumbnail image (for example, the thumbnail 711 of Gallery) may receive an input operation (for example, a click operation performed by using the left button of the mouse) of the user; and in response to the detected input operation, the computer 200 may display the user interface 25 of Gallery corresponding to the thumbnail. Optionally, a thumbnail image (for example, the thumbnail 711 of Gallery) includes a deletion control 711A. The deletion control 711A may receive an input operation (for example, a click operation performed by using the left button of the mouse) of the user; and in response to the detected input operation, the computer 200 may clear, by using the mobile phone 100, running memory occupied by Gallery that corresponds to the thumbnail 711 in the Display! . The deletion control 713 may receive an input operation (for example, a click operation performed by using the left button of the mouse) of the user; and in response to the detected input operation, the computer 200 may clear, by using the mobile phone 100, running memory occupied by all applications that correspond to thumbnail images on the recent tasks screen in the Display1. The flip-right control 714 may receive an input operation (for example, a click operation performed by using the left button of the mouse) of the user; and in response to the detected input operation, the computer 200 may display thumbnail images of more applications that have run recently.

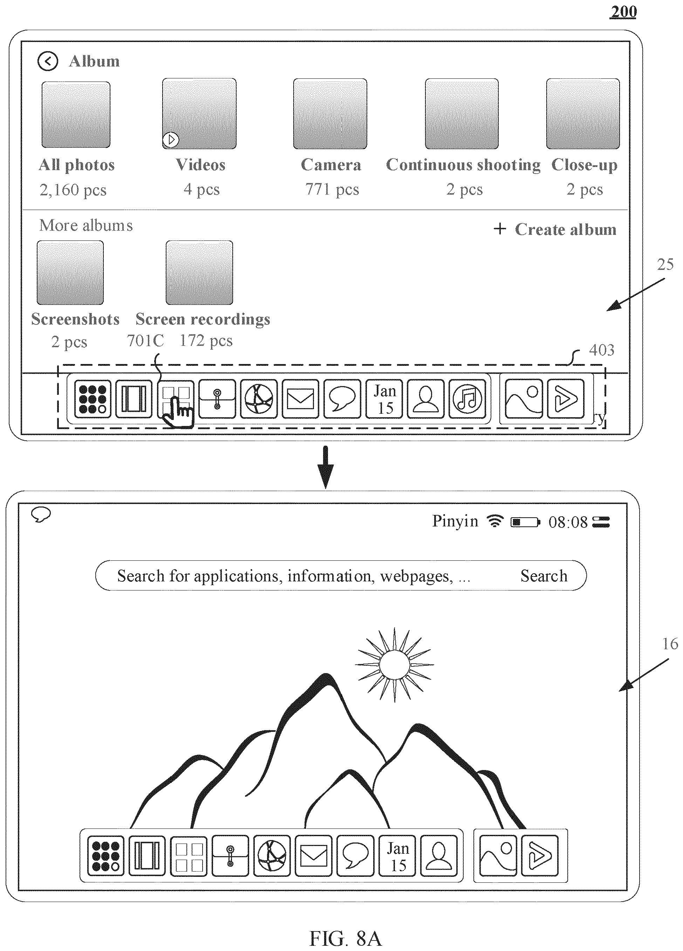

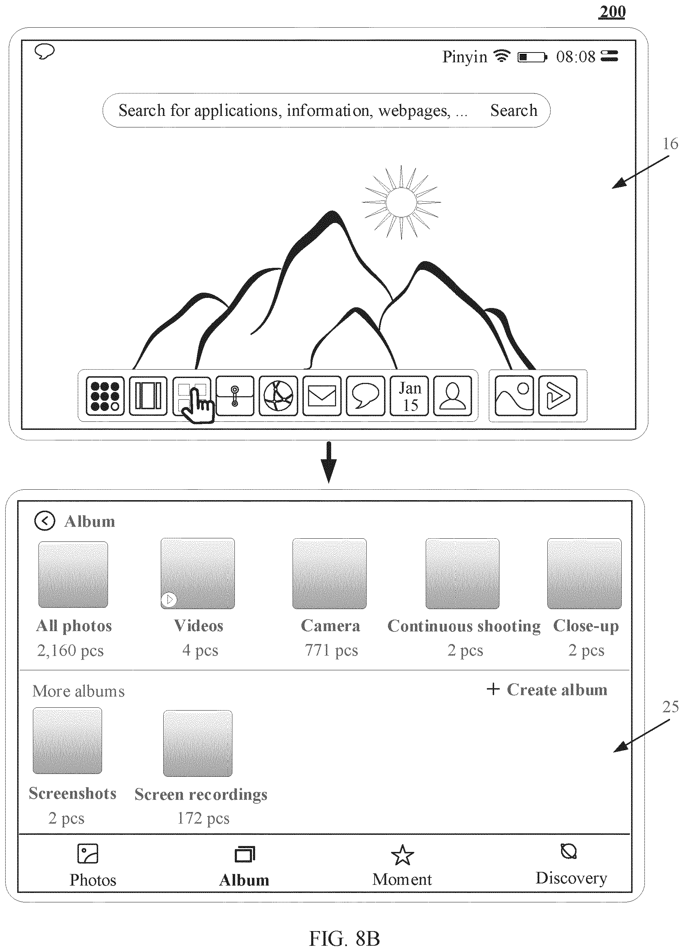

When an application window of another application is displayed on the extended-screen desktop, **the icon 701C for displaying the desktop** may be used to minimize one or more currently displayed application windows, and display the extended-screen desktop. When no other application window is displayed on the extended-screen desktop, the icon 701C for displaying the desktop may be used to restore display of one or more application windows recently minimized. For example, as shown in FIG. 7B-1 and 7B-2, the computer 200 displays the user interface 25 of Gallery, and the computer 200 may receive an input operation of the user (for example, the user moves, by using the mouse, the cursor to get close to the area in which the Dock bar 403 is located on the display screen); and in response to the input operation, the computer 200 displays the Dock bar 403 on the user interface 25, as shown in FIG. 8A. As shown in FIG. 8A, the icon 701C for displaying the desktop in the Dock bar 403 may receive an input operation (for example, a click operation performed by using the left button of the mouse) of the user; and in response to the input operation, the computer 200 minimizes the user interface 25 and displays the extended-screen desktop, as shown in FIG. 8A. As shown in FIG. 8B, after the user interface 25 is minimized, the icon 701C for displaying the desktop may receive an input operation (for example, a click operation performed by using the left button of the mouse) of the user; and in response to the input operation, the computer 200 displays the recently minimized user interface 25 again.

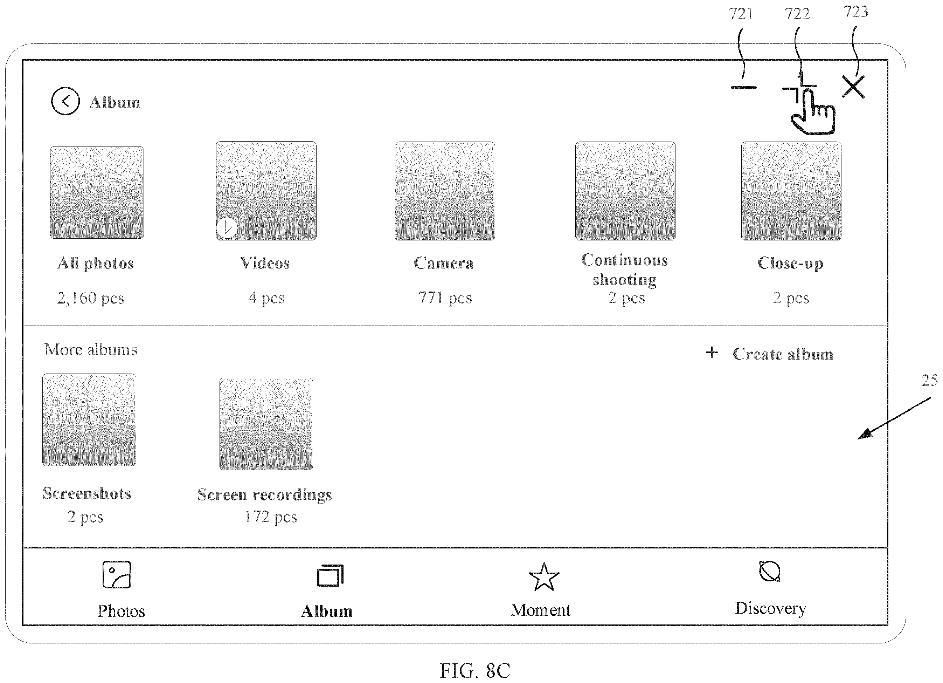

In some embodiments, a user interface (for example, the user interface 25 of Gallery shown in FIG. 8C) of an application displayed in full screen may display a minimization control 721, a zoom-out control 722, and a closure control 723. The minimization control 721 may receive an input operation (for example, a click operation performed by using the left button of the mouse) of the user; and in response to the input operation, the computer 200 minimizes the user interface 25. The closure control 723 may receive an input operation (for example, a click operation performed by using the left button of the mouse) of the user; and in response to the input operation, the computer 200 closes the user interface 25 and clears running memory occupied by the user interface 25 in the Display1 of the mobile phone 100.

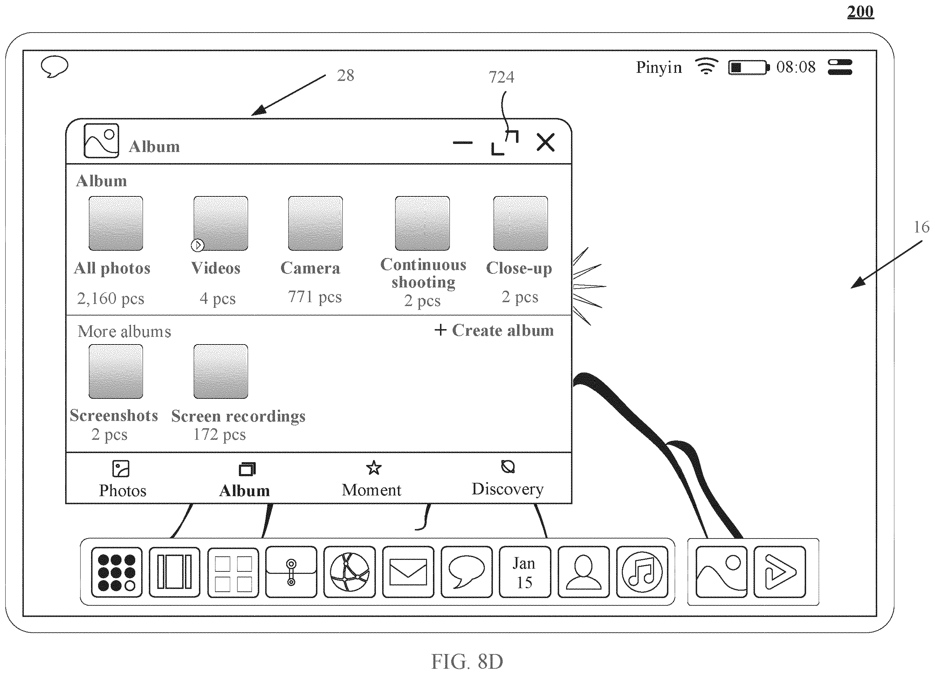

As shown in FIG. 8C, the zoom-out control 722 may receive an input operation (for example, a click operation performed by using the left button of the mouse) of the user. As shown in FIG. 8D, in response to the input operation, the computer 200 zooms out the user interface 25 and runs the user interface 25 in a form of a floating window 28. As shown in FIG. 8D, the floating window 28 may include a zoom-in control 724. The zoom-in control 724 may receive an input operation (for example, a click operation performed by using the left button of the mouse) of the user; and in response to the input operation, the computer 200 may display the user interface 25 in full screen, as shown in FIG. 8C.

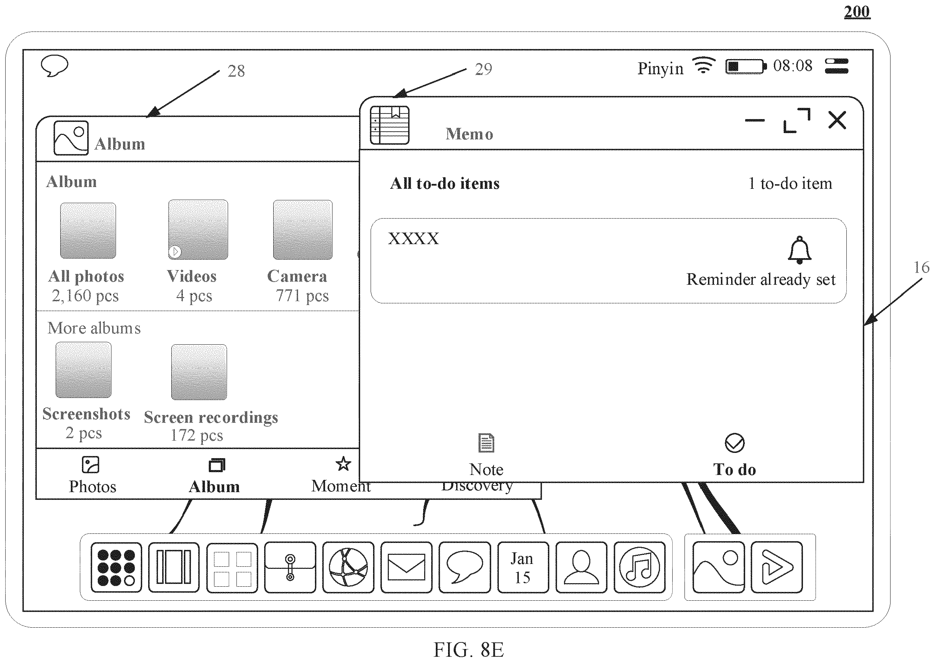

In some embodiments, the computer 200 may display a plurality of application windows on the extended-screen desktop of the mobile phone 100 in a tiled manner. For example, as shown in FIG. 8E, the computer 200 simultaneously displays the floating window 28 corresponding to Gallery and a floating window 29 corresponding to Memo.

In this embodiment of this application, an application icon in the Dock bar 403 or in the application icon list 703 may alternatively receive an input operation (for example, a click operation performed by using the right button of the mouse) of the user; and in response to the input operation, the computer 200 may display a plurality of operation options for an application corresponding to the icon, to implement removal, sharing, uninstallation, another shortcut function, or the like of the application. It needs to be noted that, each application may correspond to different operation options. For example, some system applications (such as Gallery and File management) cannot be uninstalled.

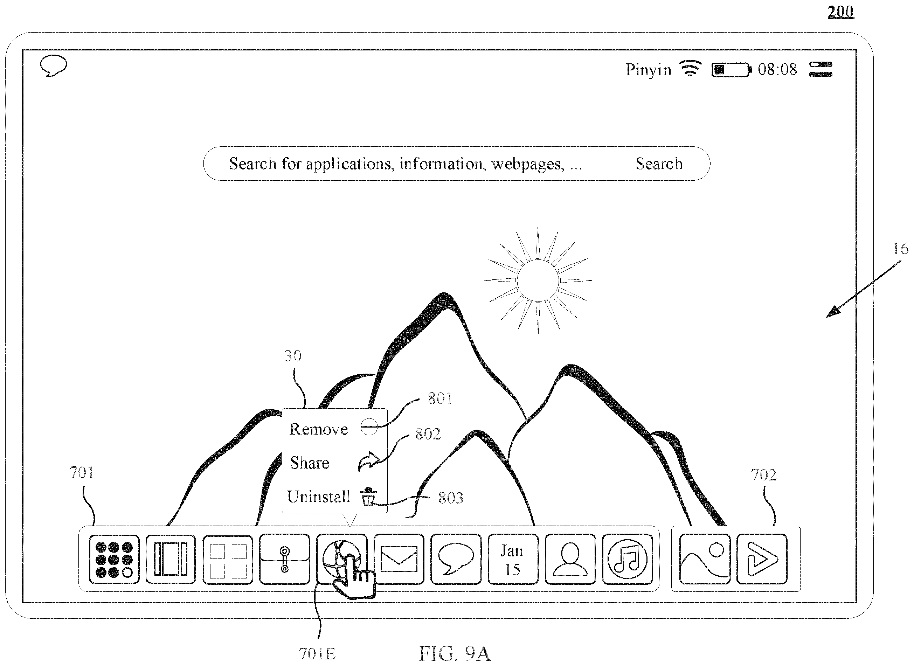

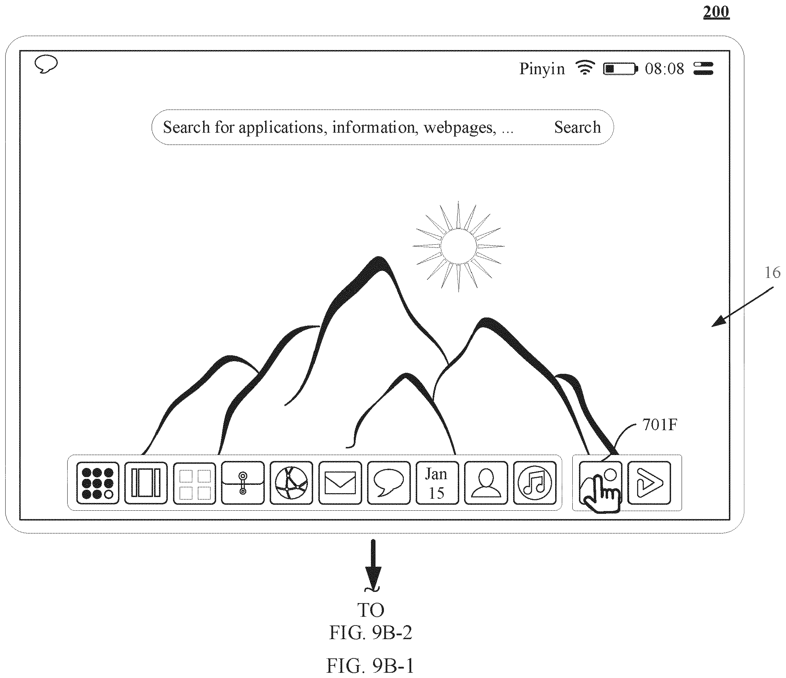

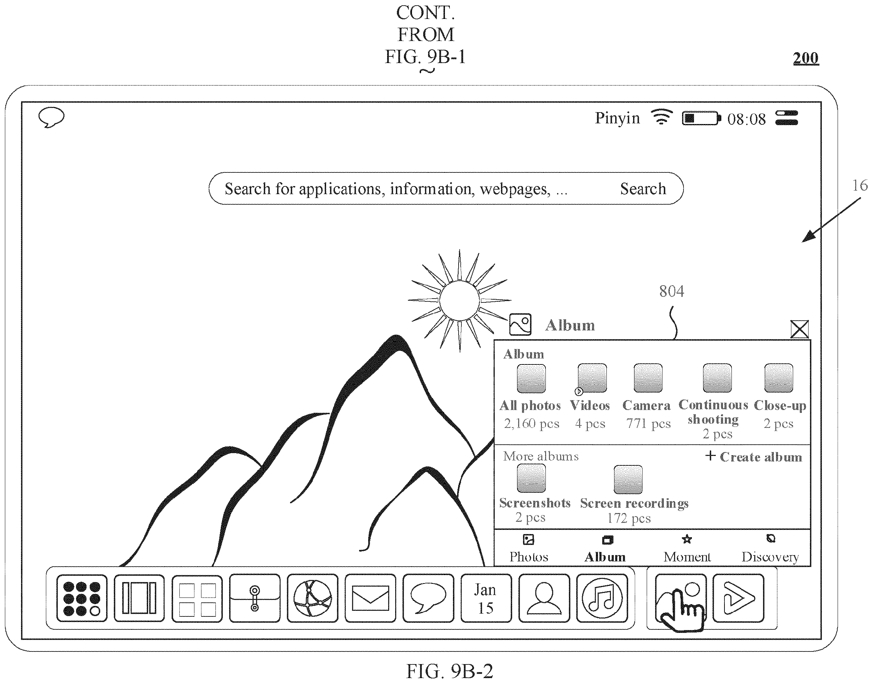

For example, as shown in FIG. 9A, an application icon (for example, the icon 701E of Browser) in the Dock bar 403 may receive an input operation (for example, a click operation performed by using the right button of the mouse) of the user; and in response to the input operation, the computer 200 may display a floating window 30. The floating window 30 may include a removal control 801, a sharing control 802, and an uninstallation control 803.

The removal control 801 may receive an input operation (for example, a click operation performed by using the right button of the mouse) of the user; and in response to the input operation, the computer 200 may remove the icon 701E of Browser from the Dock bar 403. The sharing control 802 is used to share a browser application with a target object. The uninstallation control 803 is used to uninstall the browser application of the mobile phone 100.

In some embodiments, an application icon (for example, an icon 701F of Gallery) in the Dock bar 403 may further receive a hovering operation (for example, hovering the cursor of the mouse on the application icon) of the user; and in response to the input operation, if an application corresponding to the application icon is in a background running status, the computer 200 may display a thumbnail of the application corresponding to the application icon, where the thumbnail is a thumbnail of a user interface in which the application has recently run. For example, as shown in FIG. 9B-1 and FIG. 9B-2, the user hovers the cursor of the mouse on the icon 701F of Gallery, and the computer 200 displays a thumbnail 804 of Gallery.

In some embodiments, a style of a lock screen of the extended-screen desktop of the mobile phone 100 is consistent with a style of a lock screen of the standard desktop of the mobile phone 100.

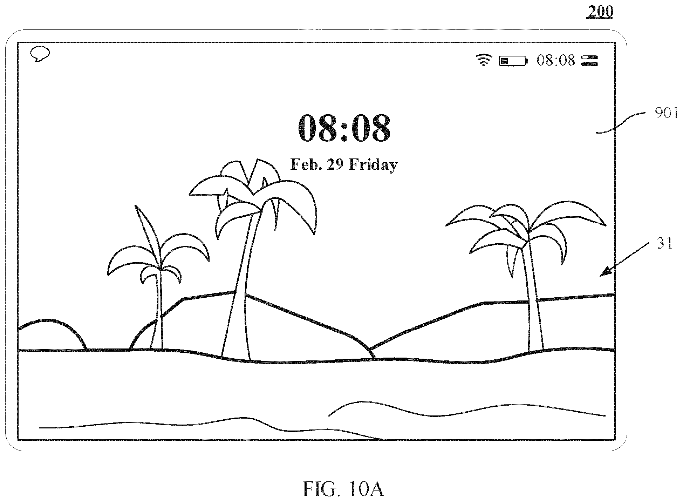

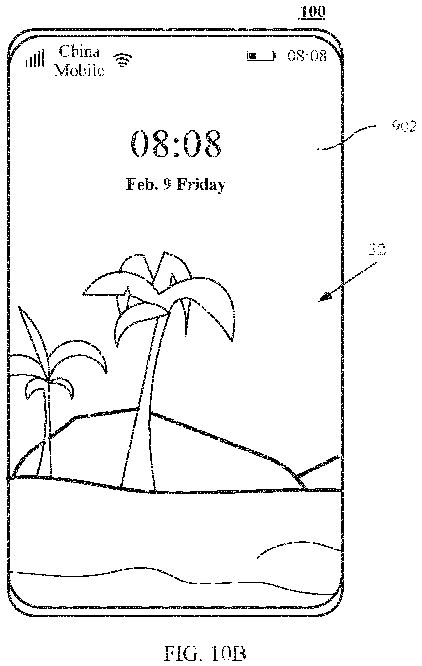

Optionally, after the user controls the computer 200 to perform screen locking on the extended-screen desktop of the mobile phone 100, the mobile phone 100 also performs screen locking on the standard desktop; and vice versa. For example, after the user controls, on the computer 200, the extended-screen desktop of the mobile phone 100 to perform screen locking, the computer 200 displays a lock screen 31 of the extended-screen desktop shown in FIG. 10A, and sends a lock-screen instruction to the mobile phone 100, where the lock screen 31 includes a lock-screen wallpaper 901; and in response to the lock-screen instruction, the mobile phone 100 displays a lock screen 32 shown in FIG. 10B, where the lock screen 32 includes a lock-screen wallpaper 902. For example, after the user controls the standard desktop of the mobile phone 100 to perform screen locking, the mobile phone 100 displays the lock screen 32 shown in FIG. 10B, and sends a lock-screen instruction to the computer 200; and in response to the lock-screen instruction, the computer 200 displays the lock screen 31 of the extended-screen desktop shown in FIG. 10A. The lock-screen wallpaper 901 and the lock-screen wallpaper 902 originate from a same picture. Optionally, the lock-screen wallpaper 901 and the lock-screen wallpaper 902 are obtained by tailoring the same picture.

Optionally, after the user controls the computer 200 to perform screen locking on the extended-screen desktop of the mobile phone 100, the mobile phone 100 does not perform, along with the extended-screen desktop, screen locking on the standard desktop; and vice versa.

**The following describes a software system of the mobile phone 100 according to an embodiment of this application with reference to the accompanying drawings.**

First, it needs to be noted that, the screen projection method provided in embodiments of this application involves modifying a plurality of system applications (including a Launcher, a SystemUI, a file manager (FileManager), global search (Hisearch), wireless projection (AirSharing), and the like) and a system framework.

The desktop launcher is used to manage a desktop layout, a Dock bar, an application list, a plurality of tasks, and the like. The SystemUI is a UI component that provides system-level information display and interaction for the user; and is used to manage status bars, navigation bars, notification centers, lock screens, wallpapers, and the like. The file manager is used to provide a file box externally, manage desktop files, provide a file operation capability externally, and implement file dragging between applications. The global search is used to implement local and online global search. The wireless projection is used to implement wireless projection from the mobile phone 100 to a projection destination device (for example, the computer 200).

In this embodiment of this application, the software system of the mobile phone 100 may use a hierarchical architecture, an event-driven architecture, a micro-nucleus architecture, a micro-service architecture, or a cloud architecture. In this embodiment of this application, an Android system with a hierarchical architecture is used as an example to describe a software structure of the electronic device 100.

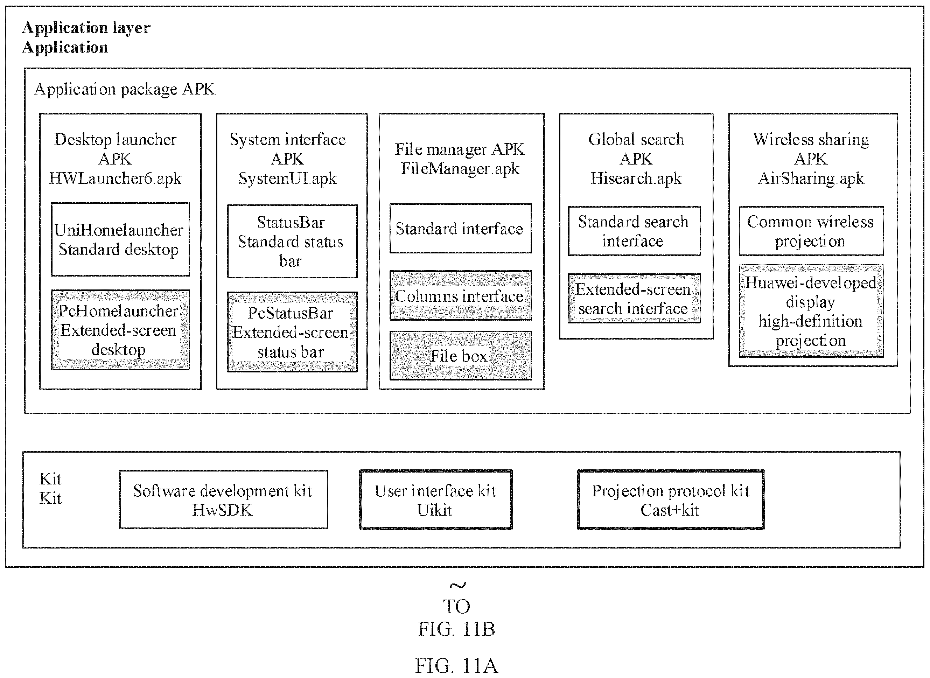

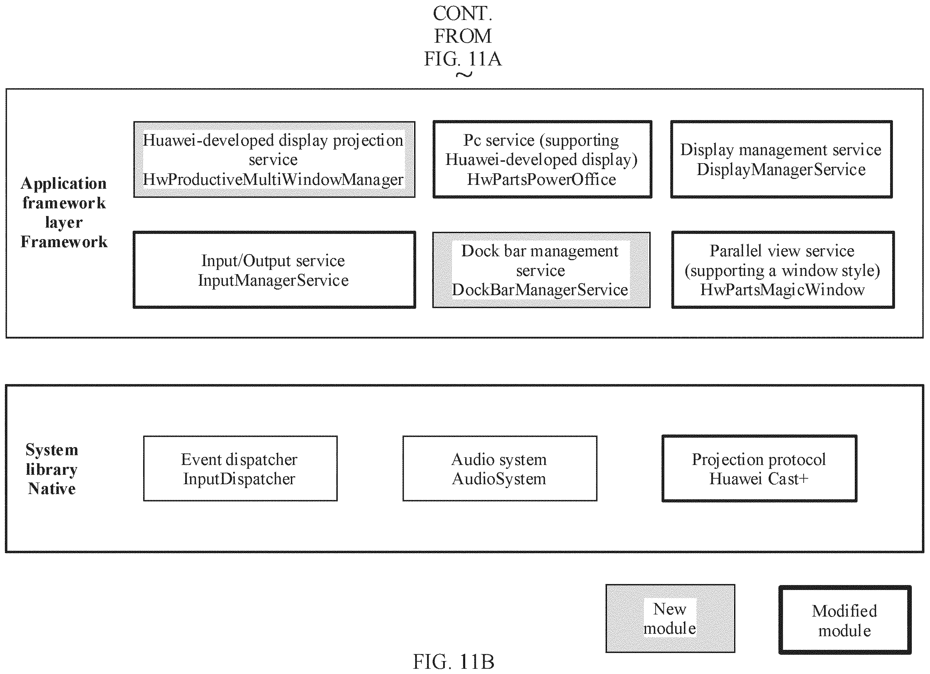

For example, FIG. 11A and FIG. 11B are block diagrams of a software architecture of a mobile phone 100 according to an embodiment of this application.

As shown in FIG. 11A and FIG. 11B, software is divided by a hierarchical architecture into several layers, and each layer has a clear role and task. The layers communicate with each other through a software interface. In some embodiments, the Android system may be divided into an application layer, an application framework layer (Framework), and a system library (Native) from top to bottom.

The Android runtime includes core libraries and virtual machines. The Android runtime is responsible for scheduling and management of the Android system.

The core libraries include two parts, namely, performance functions that need to be invoked by the Java language, and core libraries of Android.

The application layer and the application framework layer run in the virtual machines. The virtual machines execute Java files of the application layer and the application framework layer as binary files. The virtual machines are used to perform functions such as object life cycle management, stack management, thread management, security and exception management, and garbage collection.

The application layer includes a series of application packages (Android application package, APK), for example, a desktop launcher APK (HWLauncher6.apk), a system interface APK (SystemUI.apk), a file manager APK (FileManager.apk), a global search APK (Hisearch.apk), and a wireless sharing APK (AirSharing.apk).

In some embodiments, the desktop launcher APK includes a standard desktop launcher (UniHomelauncher) and an extended-screen desktop launcher (PcHomelauncher). The system interface APK (SystemUI.apk) includes a standard status bar (StatusBar) and an extended-screen status bar (PcStatusBar). The file manager APK (FileManager.apk) includes a standard interface, a columns interface, and the file box. The global search APK (Hisearch.apk) includes a standard search interface and an extended-screen search interface. The wireless sharing APK (AirSharing.apk) includes common wireless projection and Huawei-developed high-definition display projection. In this embodiment of this application, an extended-screen desktop may also be referred to as a Pc desktop, and the extended-screen status bar may also be referred to as a Pc status bar. This is not specifically limited herein.

As shown in FIG. 11A and FIG. 11B, in this embodiment of this application, the desktop launcher supports running of a plurality of desktop instances, for example, a UniHomelauncher and a PcHomelauncher. The UniHomelauncher is used to launch a standard desktop displayed by the mobile phone 100, the PcHomelauncher is used to launch an extended-screen desktop projected to the computer 200, and the extended-screen desktop is a Pc-like desktop applicable to the computer 200. The standard desktop is displayed based on an application window running in a default-screen display area (Display0), and the extended-screen desktop is displayed based on an application window running in an extended-screen display area (Display!). The SystemUI supports running of a plurality of status bar instances, for example, the standard status bar and the extended-screen status bar. A DisplayId corresponding to the standard status bar is an ID of the Display0, and a DisplayId corresponding to the extended-screen status bar is an ID of the Display1. The added columns interface and the file box in the file manager are responsible for extended-screen desktop file operations (such as copying, pasting, moving, deleting, restoring, and dragging). The global search also supports running of a plurality of search interface instances, for example, the standard search interface corresponding to the standard desktop and the extended-screen search interface corresponding to the extended-screen desktop.

The application layer further includes a Kit (Kit). The Kit includes a software development kit (HwSDK), a user interface kit (Uikit), and a projection protocol kit (Cast+kit).

In this embodiment of this application, to implement the screen projection method provided in embodiments of this application, the HwSDK is added to the Kit. The HwSDK is a set of development tools for establishing application software for a software package, a software framework, a hardware platform, and an operating system that are related to this application. To ensure compatibility of the Kit, the Uikit and the Cast+kit are modified in this embodiment of this application, so that the Uikit can implement enhancement of capabilities of native controls on the extended-screen desktop, optimization of text right-click menus, dynamic effect optimization of operations such as mouse clicking and mouse hovering (Hover), and the like; and the Cast+kit can implement projection of the extended-screen desktop to a high-definition display.

The application framework layer provides application programming interfaces (application programming interfaces, APIs) and a programming framework for applications at the application layer. The application framework layer includes some predefined functions.

In this embodiment of this application, to implement the screen projection method provided in embodiments of this application, a Huawei-developed display projection service (HwProductiveMultiWindowManager) and a Dock bar management service (DockBarManagerService) are added to the application framework layer. The Huawei-developed display projection service is used to simultaneously run a plurality of application windows of a same application, and project a specified window in the plurality of application windows to the projection destination device (for example, the computer 200). The Dock bar management service is used to manage the Dock bar.

To ensure compatibility of the application framework layer, a display management service (DisplayManagerService, DMS), an input/output service (InputManagerService, IMS), and a parallel view service (HwPartsMagicWindow) are further modified in this embodiment of this application.

The DMS is used to: manage a life cycle of interface display; control logical display of the default-screen display area (Display0) and the extended-screen display area (Display1) of a current connection; and send a notification or the like to the system and an application when display statuses of the Display0 and the Display1 have changed. The IMS is used to manage inputs and outputs of the mobile phone 100. An input/output device of the mobile phone 100 may include a printer, a hard disk, a keyboard, a mouse, a hard disk, a magnetic disk, and a writable read-only optical disc. The parallel view service is used to implement an application screen splitting function. To be specific, two user interfaces corresponding to two different activities of an application may be simultaneously displayed, so that the two user interfaces can be displayed on split screens of a same display screen, or the two user interfaces can be displayed on different display screens. In addition, the parallel view service provided in this embodiment of this application supports user interface display by using a floating window.

In this embodiment of this application, for the mobile phone 100, a package management service (PackageManagerService, PMS) and a wallpaper service (WallpaperService) at the application framework layer have also been modified, so that a policy for selecting the default Launcher (that is, UniHomelauncher) is added to the package management service, and the WallpaperService supports displaying a wallpaper in a plurality of Displays.

The system library may include a plurality of functional modules. In this embodiment of this application, the system library may include an event dispatcher (InputDispatcher), an audio system (AudioSystem), a projection protocol (Huawei Cast+), and the like. In this embodiment of this application, to implement the projection of the extended-screen desktop to the high-definition display, the projection protocol is also correspondingly modified in this embodiment of this application.

The following describes in detail, separately for the Launcher and the SystemUI, a software system framework to which the projection method provided in the embodiments of this application is applied.

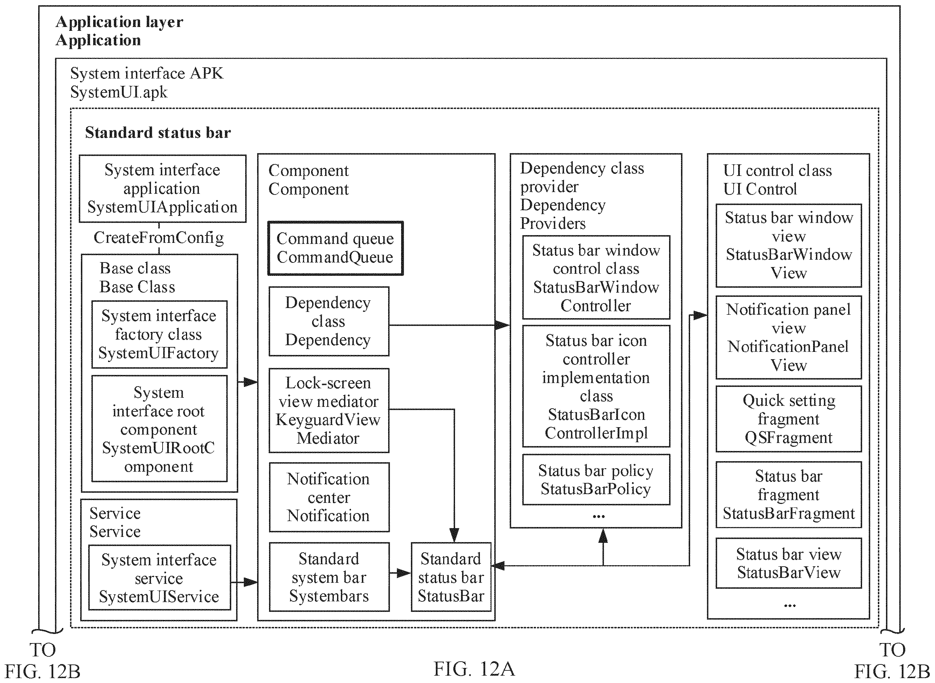

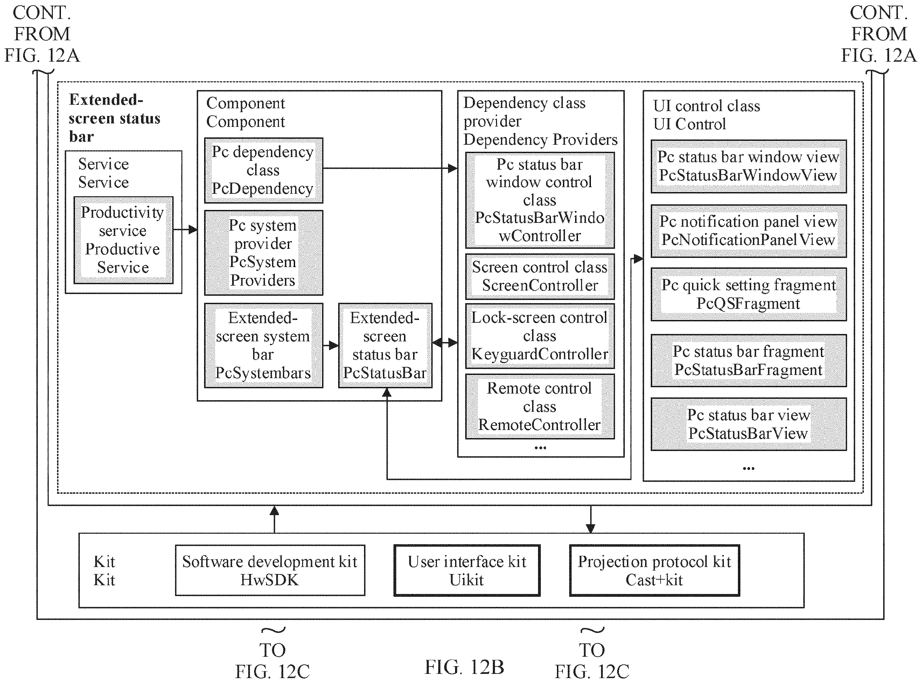

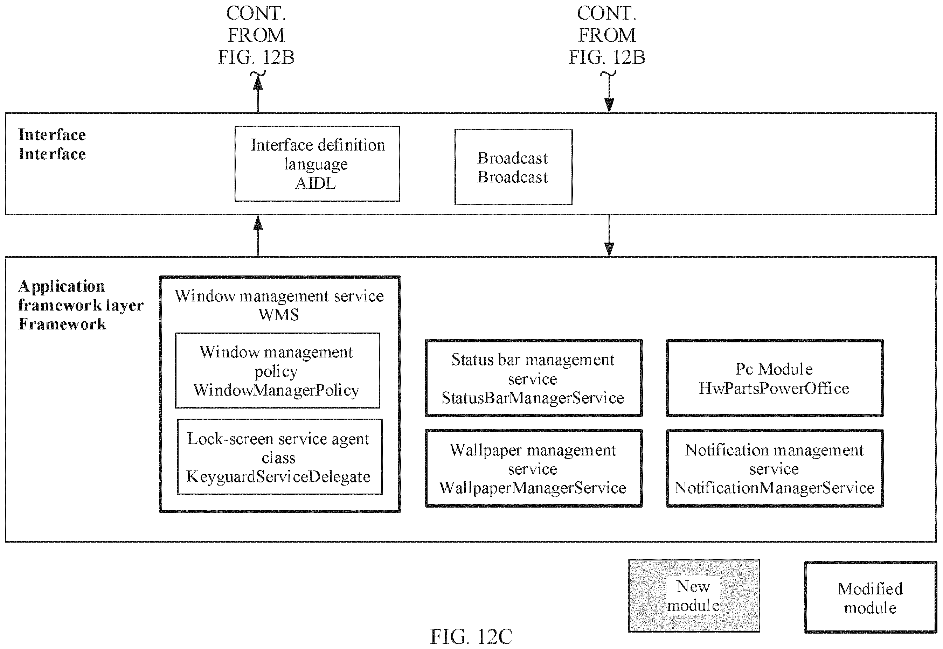

For example, for the SystemUI, FIG. 12A, FIG. 12B, and FIG. 12C show another software system framework according to an embodiment of this application. It can be learned from FIG. 11A and FIG. 11B that, the SystemUI.apk includes the standard status bar and the extended-screen status bar. It can be learned from FIG. 12A, FIG. 12B, and FIG. 12C that, the SystemUI.apk may specifically include: a system interface application (SystemUIApplication); and a base class (Base Class), a Service (Service), a Component (Component), a dependency class provider (Dependency Providers), and a UI control class (UI Control) that are used for implementing the standard status bar.

The SystemUIApplication is a subclass of the Application, and is responsible for initializing all components of the SystemUI.

The Base Class includes a system interface factory class (SystemUIFactory), a system interface root component (SystemUIRootComponent), and the like. The SystemUIFactory is used to create the components of the SystemUI; and the SystemUIRootComponent is used to implement initialization of a dependency injection framework (dagger).

The Service includes a system interface service (SystemUIService). The SystemUIService is used to initialize a series of components of the SystemUI. When the SystemUI is started, the SystemUIService instantiates sub-services defined in a service list of the SystemUIService one by one. A start( ) method of each sub-service is invoked to run the sub-service. All the sub-services are inherited from a SystemUI abstract class. The status bars and the navigation bars are sub-services in the service list.

The Component includes a command queue (CommandQueue), a dependency class (Dependency), a lock-screen view mediator (KeyguardViewMediator), a notification center (Notification), a standard system bar (Systembars), a standard status bar, and the like.

The CommandQueue is a Binder class used to process requests related to the status bar and the notification center. The CommandQueue is registered by the status bar into a status bar management service (StatusBarManagerService), to receive messages of the StatusBarManagerService. The CommandQueue internally maintains an event queue. A status bar service (StatusBarService) is used to implement Callbacks callbacks in the CommandQueue. In this embodiment of this application, the CommandQueue component is modified, so that the CommandQueue component supports message distribution of a plurality of StatusBar (that is, the standard status bar and the extended-screen status bar).

The Dependency is used to create a globally available dependency.

The SystemBars is inherited from the base class SystemUI, and is an entry class for creating an entire SystemUI view. The standard status bar is mainly used to: display, on the standard desktop, notification icons (Icon) of applications and status icons (an alarm clock icon, a Wi-Fi icon, a SIM card icon, a system time icon, and the like) of the system, and control and manage these icons. The Notification is used to display notification information in the status bar, and control and manage the notification information.

The KeyguardViewMediator is a core class for screen locking. Other lock-screen objects interact with each other through the KeyguardViewMediator. The KeyguardViewMediator is a status callback management class. All calls from a lock-screen service (KeyguardService) are converted by the KeyguardViewMediator into UI threads.

The dependency class provider includes a status bar window control class (StatusBarWindowController), a status bar icon controller implementation class (StatusBarIconControllerImpl), a status bar policy (StatusBarPolicy), and the like.

The StatusBarWindowController is used to manage a status bar window view (StatusBarWindowView), and can invoke an interface of a WindowManager to display the standard status bar. In this embodiment of this application, the StatusBarWindowController component is modified, so that the StatusBarWindowController component supports addition, deletion, and management of a plurality of status bar objects.

The StatusBarIconControllerImpl is used to manage application icons in the status bar, including sizes, positions, and color changes of the icons.

The StatusBarPolicy is used to manage a display policy (for example, update of icons in the status bar, display time, and display position) of the status bar. The StatusBarPolicy class is a policy management class, and actual functions are implemented by the StatusBarService.

The UI control class includes a status bar window view (StatusBarWindowView), a notification panel view (NotificationPanelView), a quick setting fragment (QSFragment), a status bar fragment (StatusBarFragment), a status bar view (StatusBarView), and the like.

The StatusBarWindowView is used to determine a root layout when the status bar is not extended and create a status bar window view.

The StatusBarView is responsible for creating and instantiating the entire SystemUI view (including the status bar, the notification center, the lock screen, and the like). The StatusBarView defines names, display sequences, portable network graphics (Png), and the like of icons displayed in the status bar. During initialization of the StatusBarService, a StatusBarView for displaying the status bar is initialized. The StatusBarService invokes a makeStatusBarView method to implement initialization of the status bar.

The NotificationPanelView is a control class of the notification center after the status bar is pulled down.

The QSFragment is a control class of a control center after the status bar is pulled down.

The StatusBarFragment manages the status bar in a collapsed status, and is responsible for life cycle management of the icons in the status bar.

To implement the extended-screen status bar, in this embodiment of this application, a Service, a Component, a dependency class provider, and a UI control class that are used for implementing the extended-screen status bar are added to the system interface APK.

The Service used to implement the extended-screen status bar includes a productivity service (ProductiveService). The Productive Service is inherited from the Service.

The Component used to implement the extended-screen status bar includes: a Pc dependency class (PcDependency), a Pc system provider (PcSystemProviders), a Pc system bar (PcSystembars), and an extended-screen status bar. The PcDependency, the PcSystembars, and the extended-screen status bar are all inherited from corresponding components of the foregoing standard status bar, and implement similar functions for the extended-screen status bar. Details are not described herein again.

The dependent class provider used to implement the extended-screen status bar includes: a Pc status bar window control class (PcStatusBarWindowController), a screen control class (ScreenController), a lock-screen control class (KeyguardController), and a remote control class (RemoteController). The PcStatusBarWindowController is inherited from the StatusBarWindowController of the foregoing standard status bar, and implements a similar function for the extended-screen status bar. Details are not described herein again.

The screen control class (ScreenController) is used to control turning-on and turning-off a screen on a projection side.

In this embodiment of this application, a Keyguard component, for example, a lock-screen control class (KeyguardController), is modified, so that the Keyguard component supports screen locking in a plurality of Displays.

The remote control class (RemoteController) is used to communicate with the application framework layer (Framework).

The UI control class used to implement the extended-screen status bar includes: a Pc status bar window view (PcStatusBarWindowView), a Pc notification panel view (PcNotificationPanelView), a Pc quick setting fragment (PcQSFragment), a Pc status bar fragment (PcStatusBarFragment), a Pc status bar view (PcStatusBarView), and the like. The added UI control class is inherited from the corresponding control class of the foregoing standard status bar, and implements similar functions for the extended-screen status bar. Details are not described herein again.

In addition, to ensure compatibility, in this embodiment of this application, a window management service (WMS), a status bar management service (StatusBarManagerService), a wallpaper management service (WallpaperManagerService), a notification management service (NotificationManagerService, NMS), and a Pc module (HwPartsPowerOffice) at the application framework layer are also modified correspondingly.

The window management service (WindowManagerService, WMS) includes a window management policy (WindowManagerPolicy) and a lock-screen service agent (KeyguardServiceDelegate). The WMS allows a same application to simultaneously run a plurality of application windows.

The StatusBarManagerService supports registration and management of a plurality of status bars (such as the standard status bar and the extended-screen status bar). The StatusBarManagerService is a manager of the StatusBarService. The StatusBarService is used to implement: loading, updating, and deletion of the icons in the status bar; interaction between an application and the status bar; notification information processing; and the like.

The WallpaperManagerService allows a wallpaper to be displayed in a plurality of Displays (for example, the Display0 corresponding to the standard desktop and the Display1 corresponding to the extended-screen desktop).

The NMS supports a UX style of a Pc, and supports management of notification centers after the plurality of status bars are pulled down.

The HwPartsPowerOffice is used to modify a projection entry. In this embodiment of this application, changes to a Pc management service (HwPCManagerService) are added to the HwPartsPowerOffice, so as to implement loading of the extended-screen desktop and the extended-screen status bar in a projection scenario.

It needs to be noted that, inheritance in this application means that a subclass inherits a feature and a behavior of a parent class, so that a subclass object (instance) has an instance domain and a method of the parent class; or a subclass inherits a method from a parent class, so that the subclass has a same behavior as the parent class.

In some embodiments, the system architecture diagram shown in FIG. 12A, FIG. 12B, and FIG. 12C further includes an interface layer (Interface), and the interface layer includes an Android interface definition language (Android Interface Definition Language, AIDL) and a Broadcast (Broadcast). The AIDL is a communication interface between different processes. The Broadcast is used to send and receive broadcast messages, and can implement message transfer.

It needs to be noted that, the SystemUI includes a plurality of types of system interfaces. FIG. 12A, FIG. 12B, and FIG. 12C are merely an example for description, and is not limited to the components of the SystemUI and the subclasses of the SystemUI shown in FIG. 12A, FIG. 12B, and FIG. 12C. In this embodiment of this application, another component of the SystemUI and another subclass of the SystemUI may be further included. This is not specifically limited herein.

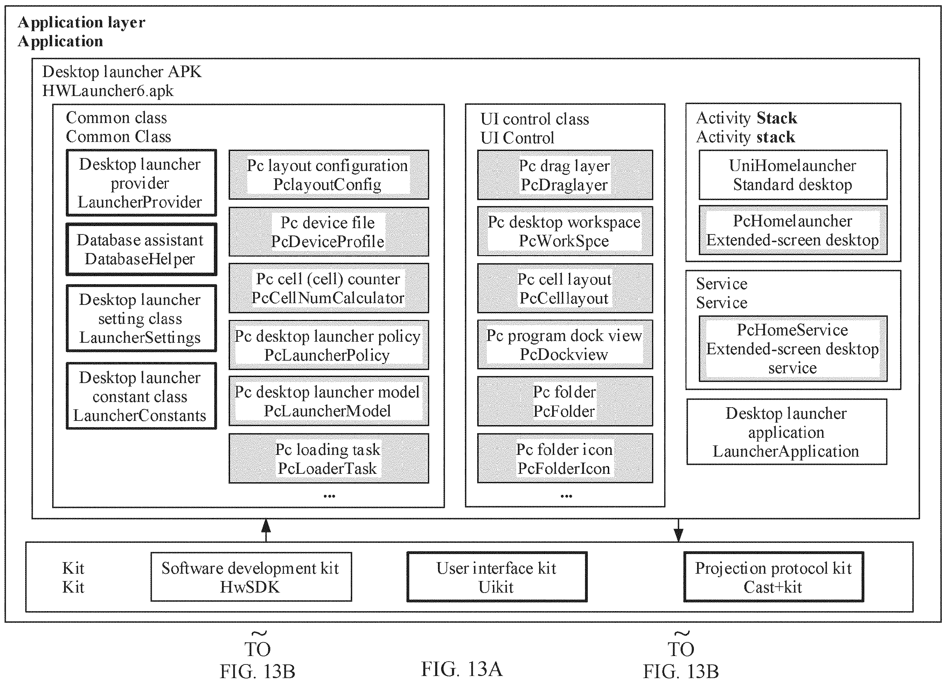

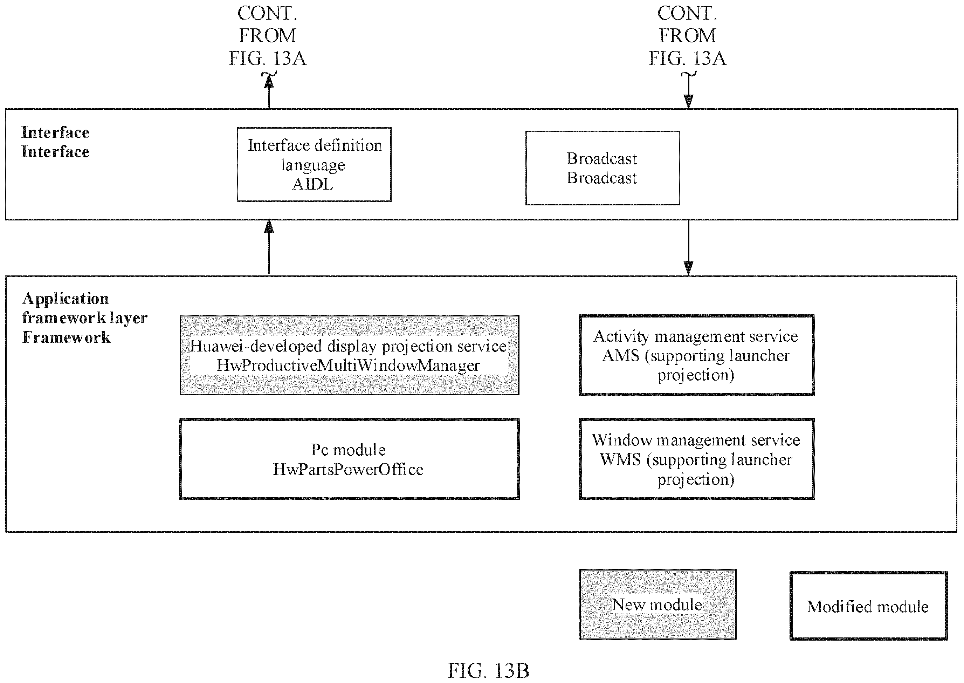

For example, for the Launcher, FIG. 13A and FIG. 13B show still another software system framework according to an embodiment of this application. It can be learned from FIG. 11A and FIG. 11B that the desktop launcher APK includes the UniHomelauncher and the PcHomelauncher. As shown in FIG. 13A and FIG. 13B, the desktop launcher APK specifically includes a common class (Common Class), a UI control class (UI Control), a Service (Service), and an activity stack.

In this application, for the common class (Common Class), the following are modified to ensure compatibility with the extended-screen desktop: a desktop launcher provider (LauncherProvider), a database assistant (DatabaseHelper), a desktop launcher setting class (LauncherSettings), and a desktop launcher constant class (LauncherConstants).

The LauncherProvider is a database of the desktop launcher, and a database content provider of application icons of the plurality of desktop instances (for example, the standard desktop and the extended-screen desktop) run by the desktop launcher; and enables other applications to access or perform operations on data in the desktop launcher.

The DatabaseHelper is used to create and maintain the database.

The LauncherSettings is used to implement definitions of character strings of database items. An internal class Favorites provides some Uri to perform operations on the LauncherProvider and perform operations on field names of corresponding fields in the database.

The LauncherConstants maintains and manages constants in the application.

In this application, the following are added to the Common Class to implement the extended-screen desktop: a Pc layout configuration (PclayoutConfig), a Pc device file (PcDeviceProfile), a Pc cell (cell) counter (PcCellNumCalculator), a Pc desktop launcher policy (PcLauncherPolicy), a Pc desktop launcher model (PcLauncherModel), a Pc loading task (PcLoaderTask), and the like. The added common classes are inherited from corresponding common classes of the standard desktop, and are used to implement similar functions on the extended-screen desktop.

The PclayoutConfig is used to set layout attributes (for example, a width (width) and a height (height)) and parameters of the extended-screen desktop. A display effect of components on the extended-screen desktop may be restricted by specifying the layout attributes.

The PcDeviceProfile is used to define basic attributes of each module on the extended-screen desktop; and is responsible for initialization of values of the attributes, setting of a padding of a layout of each element, and the like.

The PcCellNumCalculator is a desktop icon layout policy class.

The PcLauncherPolicy manages a display policy of the extended-screen desktop.

The PcLauncherModel is a data processing class, stores a desktop status of the extended-screen desktop, provides an API for reading and writing the database, and updates the database when applications are deleted, replaced, or added.

The PcLoaderTask is used to load the extended-screen desktop.

In this application, the following are further added to the control class to implement the extended-screen desktop: a Pc drag layer (PcDraglayer), a Pc desktop workspace (PcWorkSpace), a Pc cell layout (PcCelllayout), a Pc program dock view (PcDockview), a Pc folder (PcFolder), a Pc folder icon (PcFolderIcon), and the like. The added control classes are all inherited from corresponding control classes of the standard desktop, and are used to implement similar functions on the extended-screen desktop.

The PcDraglayer is a view group (ViewGroup) responsible for distributing events, and is used to preliminarily process events of the extended-screen desktop and distribute the events based on a situation. The DragI,ayer includes: a desktop layout (Workspace), a navigation point (QuickNavigationView), a dock area (Hotseat), and a recent tasks list (OverviewContainer). The Hotseat is a container responsible for managing the Dock bar.

The PcWorkSpace is a subclass of PagedView, and consists of a plurality of CellLayout controls. Each CellLayout control represents a split screen. The PcWorkSpace is used to implement a split-screen sliding function on the extended-screen desktop.

The PcCellLayout is used to manage the display and layout of split-screen icons on the extended-screen desktop.

The PcDockview is used to implement a Dock layout on the projection side.

The PcFolder is used to implement folders (including a folder created by the user and folders provided by the system) on the extended-screen desktop.

To implement the extended-screen desktop, the activity stack in this embodiment of this application supports management of a task stack corresponding to the extended-screen desktop. A Pc desktop service (PcHomeService) is added to the Service. The PcHomeService is used to launch the extended-screen desktop.

In addition, to ensure compatibility of the application framework layer with the projection of the extended-screen desktop, in this embodiment of this application, an activity management service (ActivityManagerService, AMS) at the application framework layer is also modified correspondingly, so that the AMS supports simultaneous running of a plurality of application windows by using a same application, for example, supports simultaneous running of the foregoing two desktop instances.

In some embodiments, a Dock bar is added to the extended-screen desktop; and correspondingly, an IdockBar.aidl is added to the desktop launcher, to provide a Binder interface for the framework layer to perform operations on the Dock bar.

**The following describes task stacks according to an embodiment of this application.**

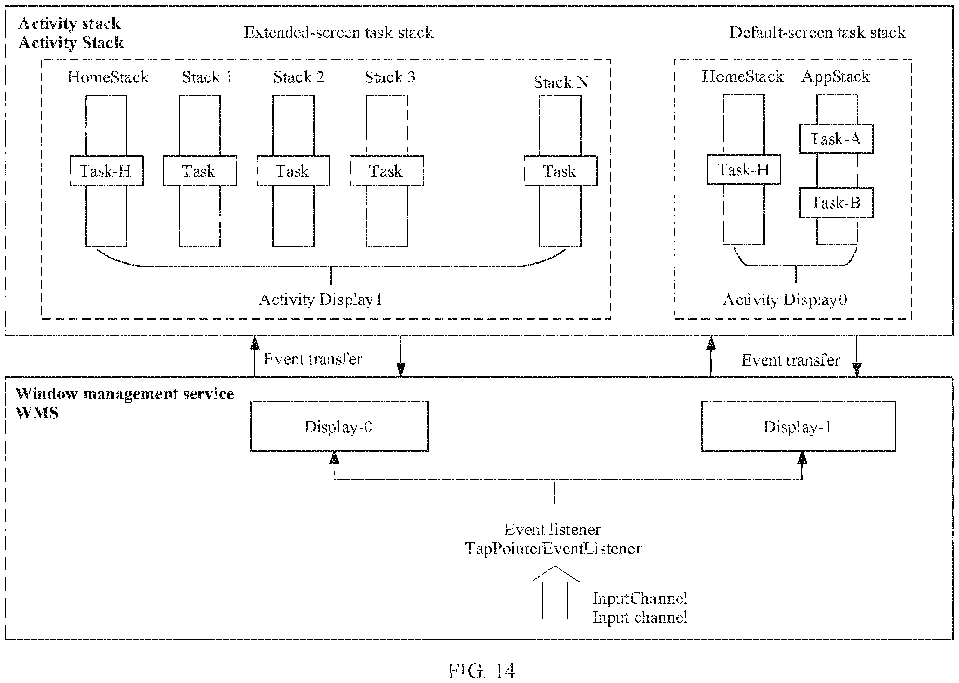

For example, as shown in FIG. 14, the activity stack includes a task stack corresponding to the default screen and a task stack corresponding to the extended screen. The mobile phone 100 may separately maintain the task stack corresponding to the default screen and the task stack corresponding to the extended screen. The mobile phone 100 distinguishes the two task stacks by using a DisplayId. A Di splay Id of the task stack corresponding to the default screen is the ID of the Display0, and a DisplayId of the task stack corresponding to the extended screen is the ID of the Display1. As shown in FIG. 14, the task stack corresponding to the Display1 runs one desktop task stack (HomeStack) and N application stacks (AppStack), that is, a Stack 1 to a Stack N, where the HomeStack includes one or more desktop tasks (Task), and the AppStack includes one or more application tasks; and the task stack corresponding to the Display0 runs one HomeStack and one AppStack, where the AppStack includes one or more application tasks (for example, Task-A and Task-B). One Task includes one or more Activities.

The PcHomelauncher runs the HomeStack of the extended screen of the mobile phone 100 by using the Display1, and the UniHomeLauncher runs the HomeStack of the default screen of the mobile phone 100 by using the Display0. In this way, data isolation between the HomeStack of the extended screen and the HomeStack of the default screen can be implemented. After obtaining input events by using a pointer event listener (TapPointerListener), the WMS can distribute an input event acting on the extended screen to the Display1 and distribute an input event acting on the default screen to the Display0.

**Based on the foregoing application scenario and software system, the following describes in detail specific implementation of a screen projection method according to an embodiment of this application.**

Refer to FIG. 11A to FIG. 13B. In embodiments of this application, a software system framework is modified, so that the modified software system framework supports running of a plurality of desktop instances and a plurality of status bar instances in different Displays. Based on the foregoing software system framework, an embodiment of this application provides a screen projection method, including the following steps.

S101: After being connected to a display of a projection destination device (for example, the computer 200), the mobile phone 100 receives a projection instruction for confirming projection.

S102: In response to the projection instruction, the mobile phone 100 adds an extended-screen status bar and a related logic control class by using the SystemUI, where a DisplayId corresponding to the extended-screen status bar is an ID of an extended-screen display area Display1.

S103: In response to the projection instruction, the mobile phone 100 further adds an extended-screen desktop and a related logic control class by using the Launcher, where a DisplayId corresponding to the extended-screen desktop is the ID of the extended-screen display area Display1.

Specifically, in some embodiments, in response to the projection instruction, the mobile phone 100 starts the service ProductiveService by using the HwPCManagerService, to load the extended-screen status bar; and starts the service PcHomeService by using the HwPCManagerService, to load the extended-screen desktop.

To further describe specific implementation of the projection method provided in this embodiment of this application, the following separately describes in detail software implementation procedures of the SystemUI and the Launcher according to this embodiment of this application.

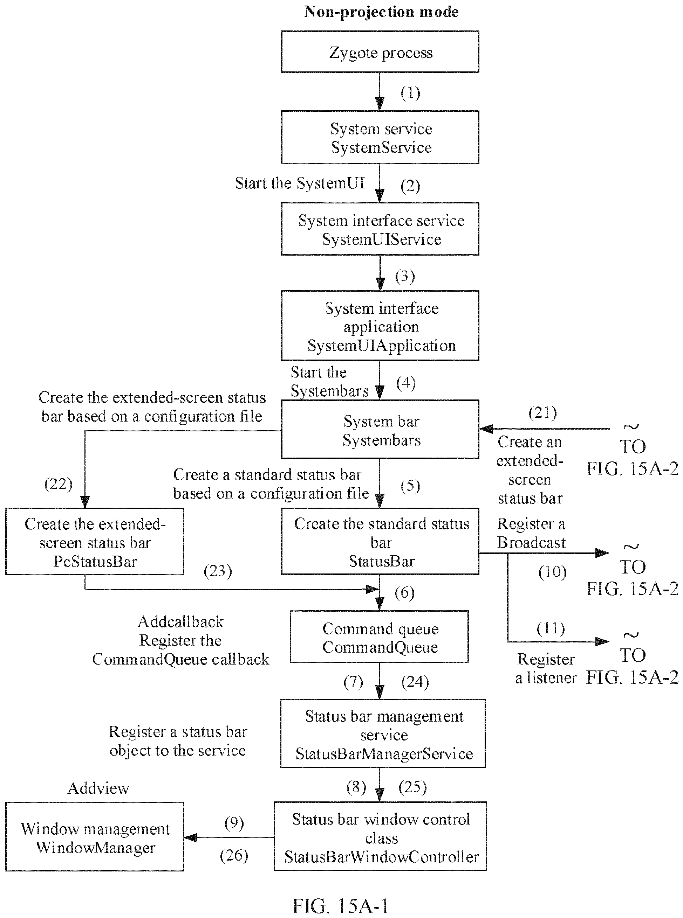

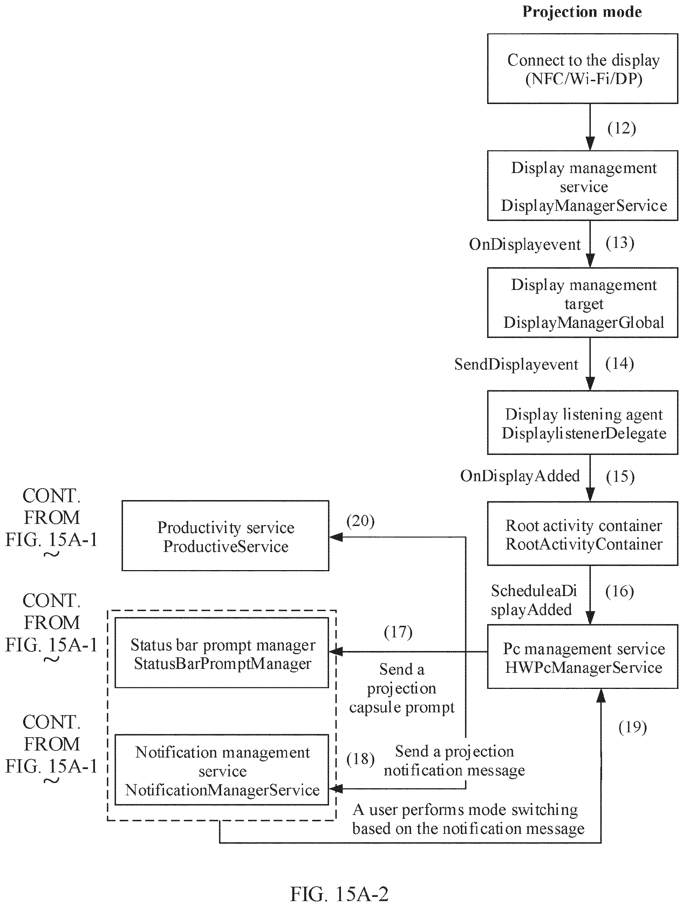

**For example,** **FIG. 15A-1** **and** **FIG. 15A-2** **show a software implementation procedure of the SystemUI according to an embodiment of this application.** The implementation procedure includes the following steps.
(1) When the mobile phone 100 is powered on, in a non-projection mode, the mobile phone 100 starts a Zeyote process, creates a virtual machine instance by using the Zeyote process, and executes a system service (SystemServer).
(2) The SystemServer starts a series of services required for the running of the system, including the SystemUIService.
(3) The SystemUIService starts the SystemUI, and invokes the SystemUIApplication.

Specifically, the SystemServer separately starts a boot service, a core service, and other services; and separately starts, by invoking an mActivityManagerService.systemReady( ) method in a startOtherService method, the SystemUI and the Launcher.

(4) The SystemUIApplication starts the components of the SystemUI by using a startServicesIfNeeded function. The components of the SystemUI include the Systembars.

(5) After being started, the SystemBars starts the standard status bar (StatusBar) based on a configuration item config_statusBarComponent.

In this embodiment of this application, after being started, the SystemUIService reads a configuration item config_systemUIServiceComponents, and loads each component (including the SystemBars). After being loaded, the SystemBars component reads the configuration item (config_statusBarComponent) and determines an operation control type of the status bars based on the configuration item; and then determines, based on the determined operation control type of the status bars, whether to start the extended-screen status bar (PcStatusBar) or the standard status bar (StatusBar).

In some embodiments, when the mobile phone 100 is in the non-projection mode, a value of the config_statusBarComponent is com.android.systemui.statusbar.phone.PhoneStatusBar, and the SystemBars determines that the operation control type of the status bars is StatusBar. When the mobile phone 100 is in a projection mode, a value of the config_systemBarComponent is com.android.systemui.statusbar.tablet.TabletStatusBar, and the SystemBars determines that the operation control type of the status bars is PcStatusBar.

(6) A callback interface of the CommandQueue is invoked to add a callback to the standard status bar.

(7) The standard status bar initializes a layout, and registers an IstatusBar object corresponding to the standard status bar to the StatusBarManagerService.

(8) The standard status bar creates and adds the standard status bar window view (StatusBarWindowView) to the StatusBarWindowController.

(9) The StatusBarWindowController invokes an interface of the WindowManager to add the standard status bar to the WMS, so as to add the standard status bar to the Display 1.

In some embodiments, in a startup process of the StatusBar, the CommandQueue object is transferred to the StatusBarManagerService, and is stored as mBar. When a client obtains an interface of the system service StatusBarManagerService through the ServiceManager, the client can invoke a method of the CommandQueue object through the mBar. The CommandQueue invokes the callback interface, to send back a message to the StatusBar to update the StatusBar.

(10) The standard status bar invokes a status bar prompt manager (StatusBarPromptManager) to register the projection Broadcast (Broadcast).

(11) After the standard status bar is created, the notification management service (NotificationManagerService) is invoked to register a message listener.

(12) After being connected to a display (DisplayDevice) (that is, the extended screen) of the projection destination device, the mobile phone 100 invokes the DMS.

In this embodiment of this application, the mobile phone 100 may connect to the projection destination device by using a wired connection, or may connect to the projection destination device by using a wireless communication technology such as NFC, Wi-Fi, or Bluetooth.

(13) The DMS triggers a display event (OnDisplayevent), creates a logical display area Display1 corresponding to the extended screen, and invokes a display management target (DisplayManagerGlobal) to obtain a DisplayId of the Display1.

In some embodiments, the DMS invokes a handleDisplayDeviceAddedLocked function to generate a corresponding logical device (LogicalDevice) for the display (DisplayDevice), adds the LogicalDevice to a logical device list (mLogicalDevices) managed by the DMS, and adds the DisplayDevice to a display list (mDisplayDevices) of the DMS, so as to generate a logical display area (LogicalDisplay) (that is, the extended-screen display area Display1) for the DisplayDevice. The DMS invokes the DisplayManagerGlobal to determine a DisplayId of the logical display area.

(14) The DisplayManagerGlobal sends the display event to a display listening agent (DisplaylistenerDelegate), to add a display listening agent for the Display1.

The DisplayManagerGlobal is mainly responsible for managing communications between a display manager (Display Manager) and the DMS.

(15) The DisplaylistenerDelegate sends a notification (onDisplayAdded) indicating that a display area has been added.

(16) A RootActivityContainer starts the HwPCManagerService to load the extended-screen status bar.

In this embodiment of this application, changes to the HwPCManagerService are added to the hwPartsPowerOffice, so as to start the extended-screen desktop and the extended-screen status bar in a projection scenario.

(17) The HwPCManagerService sends a projection capsule prompt broadcast to the status bar prompt manager (StatusBarPromptManager).

(18) The HwPCManagerService sends a projection notification message to the NotificationManagerService.

(19) The HwPCManagerService receives a mode switching instruction, where the instruction instructs to switch the current non-projection mode to the projection mode.

In this embodiment of this application, after receiving the capsule prompt broadcast and the projection notification message, the SystemUI displays a capsule prompt in the status bar, and displays the projection notification message in the notification center. For example, the capsule prompt is the prompt box 13 shown in FIG. 3E. After the mobile phone 100 receives the user's input operation of tapping the connection control 303 in the prompt box 13, the HwPCManagerService obtains the mode switching instruction. For example, after the mobile phone 100 receives an NFC connection response sent by the computer 200, the HwPCManagerService receives the mode switching instruction.

(20) In response to the instruction, the HwPCManagerService starts the ProductiveService.

In some embodiments, the HwPCManagerService invokes a bindService to start the ProductiveService.

(21) The Productive Service invokes the Systembars to start the extended-screen status bar.

In some embodiments, the ProductiveService invokes PcSystembars to start the extended-screen status bar.

(22) The Systembars creates the extended-screen status bar based on a configuration file.

In some embodiments, the Systembars reads the configuration config_PcstatusBarComponent, determines that the operation control type of the status bars is PcStatusBar, and then creates the extended-screen status bar.

(23) The extended-screen status bar invokes the callback interface of the CommandQueue, to add a callback to the extended-screen status bar.

(24) The extended-screen status bar initializes a layout, and registers an IstatusBar object corresponding to the extended-screen status bar to the StatusBarManagerService.

(25) The extended-screen status bar creates and adds the Pc status bar window view (StatusBarWindowView) to the StatusBarWindowController.

(26) The StatusBarWindowController invokes the interface of the WindowManager to add the extended-screen status bar to the WMS, so as to add the extended-screen status bar to the Display1.

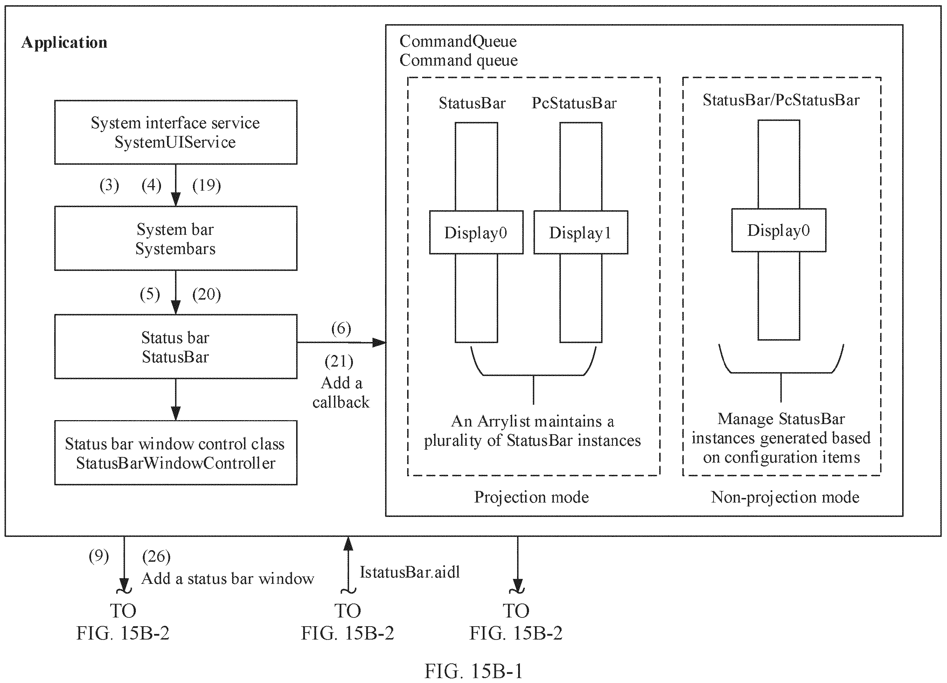

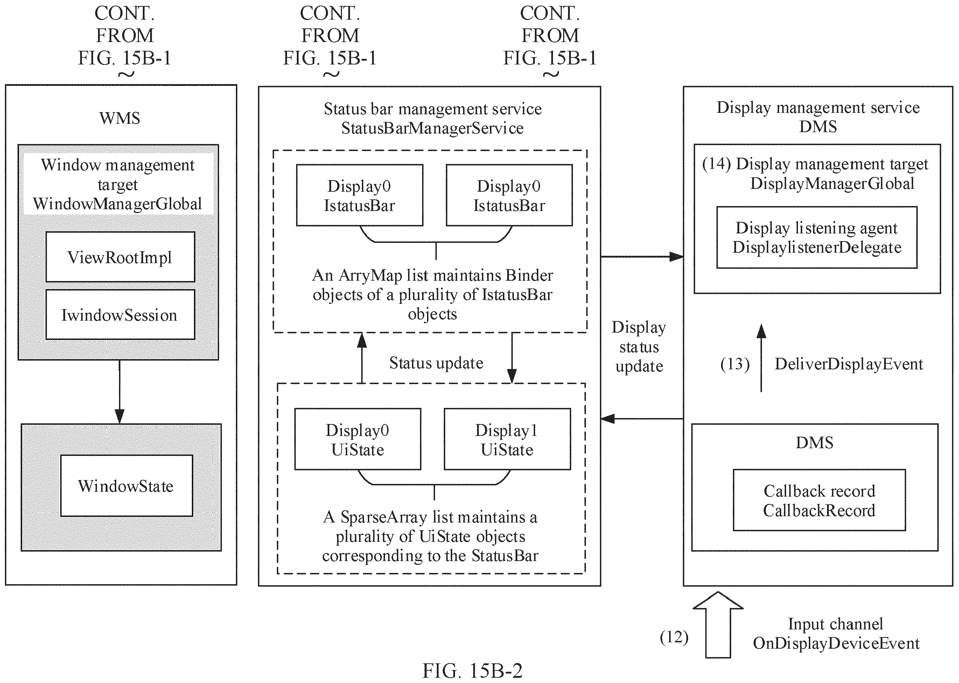

For example, with reference to the software implementation procedure of the SystemUI shown in FIG. 15A-1 and FIG. 15A-2, FIG. 15B-1 and FIG. 15B-2 show an example of software implementation of the StatusBar.

As shown in FIG. 15B-1 and FIG. 15B-2, in the non-projection mode, the CommandQueue needs to support only one status bar instance, namely, the standard status bar or the extended-screen status bar. It can be understood that, the mobile phone needs to support only the standard status bar in the non-projection mode, and the computer needs to support only the extended-screen status bar in the non-projection mode. In the projection mode, the CommandQueue needs to support a plurality of status bar instances and store Callbacks of the plurality of status bar instances. For example, when the mobile phone 100 is projected to the computer 200, the CommandQueue needs to support the standard status bar corresponding to the default-screen display area (Display0) of the mobile phone 100 and the extended-screen status bar corresponding to the extended-screen display area (Display1) of the mobile phone 100.

In the projection mode, Contexts of the status bars need to be adjusted to ensure that each status bar obtains corresponding Display information (such as a display ID). The StatusBarWindowController also needs to support adding a plurality of status bars. When the WindowManagerService adds a window by using an addWindow function, a DisplayId of a window status (windowState) of the window needs to be modified, to ensure that the window can be correctly displayed on a corresponding display screen. For example, the standard status bar can be displayed on the default screen of the mobile phone 100, and the extended-screen status bar can be displayed on the extended screen (that is, the display screen of the computer 200) of the mobile phone 100.

Refer to FIG. 15B-1 and FIG. 15B-2. When the SystemUIService is started, the SystemUIService invokes the startServicesIfNeeded function of the SystemUIApplication to start the components (including the SystemBars) of the SystemUI.

In the non-projection mode, after the SystemBars is started, the SystemBars obtains a default status bar (that is, the standard status bar of the mobile phone 100) based on the configuration item config_statusBarComponent. The SystemBars invokes a start( ) function of the standard status bar to perform initialization. A Callback is set by using the CommandQueue component. Then the Binder interface is invoked to register, by using a registerStatusBar function, the IstatusBar object corresponding to the standard status bar to the StatusBarManagerService for management.

When the mobile phone 100 is connected to the display (that is, the computer 200), the DMS receives an OnDisplayDeviceEvent through an input channel, and the DMS distributes a display event (DisplayEvent) based on a callback record (CallbackRecord). After the mobile phone 100 switches from the non-projection mode to the projection mode, the DMS creates a logical display area Display1 corresponding to the extended screen, and invokes the DisplayManagerGlobal to obtain a DisplayId of the Display1. The DisplayManagerGlobal sends the display event to the DisplaylistenerDelegate, to add a display listening agent for the Display1. The components of the SystemUI read the configuration item config_PcsystemUIServiceComponents in the configuration file Config.xml. After the SystemBars is started, the SystemBars starts the extended-screen status bar based on the configuration item config_PcstatusBarComponent. As shown in FIG. 15B-1 and FIG. 15B-2, in the projection mode, the SystemBars invokes a start( ) function of the extended-screen status bar to perform initialization. A Callback is set by using the CommandQueue component. Then the Binder interface is invoked to register, by using the registerStatusBar function, the IstatusBar object corresponding to the extended-screen status bar to the StatusBarManagerService for management. Then, the extended-screen status bar creates and adds the StatusBarWindowView to the StatusBarWindowController. The StatusBarWindowController invokes the interface of the WindowManager to add the extended-screen status bar to the WMS. The WMS invokes the ViewRootImpl and IwindowSession of the window management target (WindowManagerGlobal), and changes a DisplayId of WindowState of a window corresponding to the extended-screen status bar to the ID of the Display1.

As shown in FIG. 15B-1 and FIG. 15B-2, the StatusBarManagerService includes an ArryMap list and a SpareArry list. The ArryMap list maintains Binder objects of a plurality of IstatusBar objects registered to the StatusBarManagerService. The SpareArry list maintains correspondences between Uistate objects of a plurality of Displays and a plurality of standard status bars.

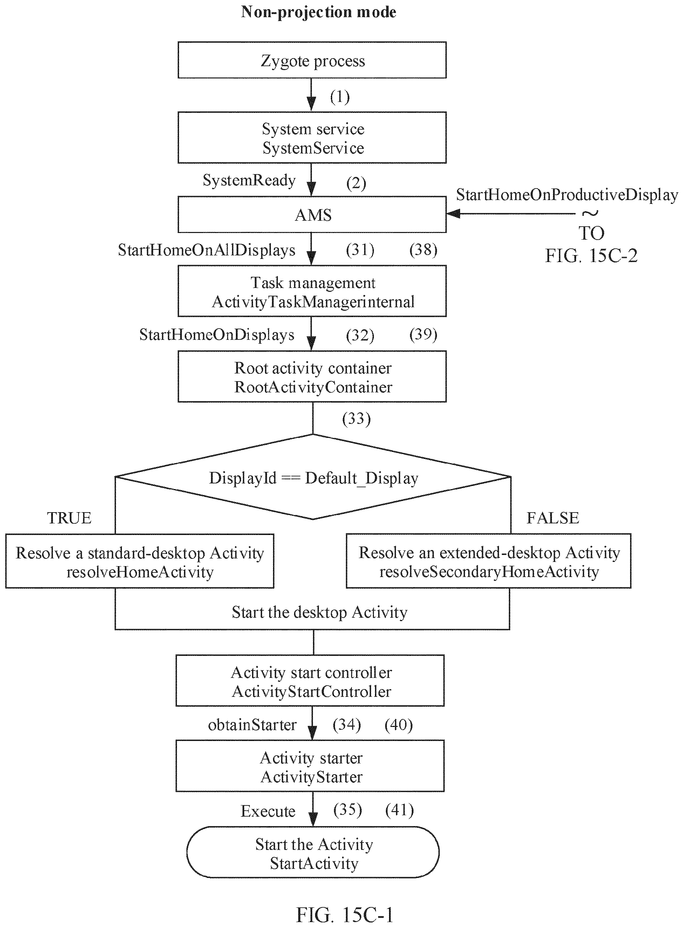

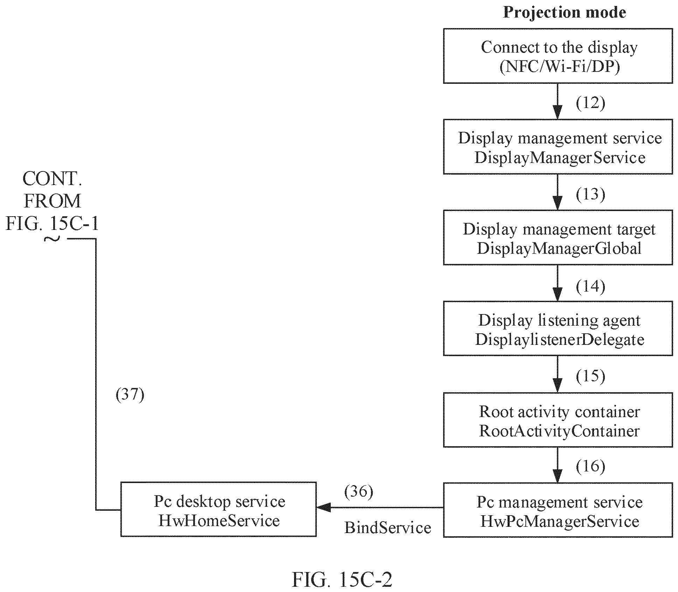

For example, FIG. 15C-1 and FIG. 15C-2 show a software implementation procedure of the Launcher according to an embodiment of this application. The following describes in detail the software implementation procedure shown in the figure.

First, it needs to be noted that, in this embodiment of this application, because extended-screen display needs to be supported in the projection mode, a category option "android.intent.category.SECONDARY_HOME" is added to an intent-filter configuration of a PcHomeLauncher node in AndroidMainfest.xml of the application. This option is used to represent the extended-screen desktop.

In the non-projection mode, in the foregoing step (2), the SystemServer starts a series of services required for system running, including the Launcher.

Specifically, the SystemServer process starts the PMS and the AMS during startup. After being started, the PackageManagerService parses and installs the application APKs in the system. The AMS is mainly used to start and manage four major components. An entry for starting the Launcher is the systemReady method of the AMS.

(31) The AMS starts the Launcher by using a StartHomeOnAllDisplays method.

(32) An activity task manager (ActivityTaskManagerinternal) invokes StartHomeOnDisplays to start the Launcher.

(33) The RootActivityContainer determines whether a DisplayId is the ID of the default-screen display area (namely, the Display0). If the DisplayId is the ID of the default-screen display area, a standard-desktop Activity is resolved (resolveHomeActivity), and a step (34) is performed; or if the DisplayId is not the ID of the default-screen display area, an extended-screen desktop Activity is resolved (resolveSecondaryHomeActivity), and a step (37) is performed.

In some embodiments, if the DisplayId is the ID of the Display0, the PMS queries and uses an Activity of CATEGORY_HOME as a desktop; or if the DisplayId is the ID of the Display1, the PMS queries and uses an Activity of SECONDARY_HOME as a desktop.

(34) An activity start controller (ActivityStartController) invokes an activity starter (ActivityStarter).

(35) The ActivityStarter invokes startHomeActivityLocked to start the standard desktop.

In the projection mode, for steps (12) to (16), refer to related descriptions about FIG. 15A-1 and FIG. 15A-2.

During the execution of the steps (12) to (16), the DisplayManagerService sends an onDisplayAdded notification when adding a display area Display. After receiving the notification, the HwPCManagerService in the Pc module (hwPartsPowerOffice) starts the Launcher (namely, the PcHomeLauncher) of the extended screen by using startHomeOnDisplay.

(36) The HwPCManagerService invokes a Pc desktop service (HwHomeService) by using the BindService.

(37) The HwHomeService invokes the AMS by using StartHomeOnProductiveDisplay.

(38) The AMS invokes the StartHomeOnAllDisplays method to start the PcHomeLauncher.

(39) The activity task manager invokes StartHomeOnDisplays to start the PcHomeLauncher.

Then the step (33) is performed, where the Activity of the extended-screen desktop is obtained (resolveSecondaryHomeActivity) in the step (33); and a step (40) is performed.

(40) The activity start controller (ActivityStartController) invokes the activity starter (ActivityStarter).

(41) The ActivityStarter invokes startHomeActivityLocked to start the extended-screen desktop.

Based on the foregoing embodiments, an embodiment of this application provides a screen projection method. The projection method includes but is not limited to steps S201 to S205.

S201: A first electronic device invokes a first module of a first application to run a first desktop, where the first desktop is associated with a first display area; and the first electronic device displays first display content based on the first display area, where the first display content includes the first desktop.

S202: In response to a first user operation, the first electronic device invokes a second module of the first application to run a second desktop, where the second desktop is associated with a second display area; and the first electronic device sends second display content corresponding to the second display area to a second electronic device, where the second display content includes the second desktop.

In this embodiment of this application, the first electronic device may be the foregoing electronic device 100, for example, the mobile phone 100; and the second electronic device may be the foregoing electronic device 200, for example, the computer 200. The first application may be the foregoing desktop launcher, for example, the HWLauncher6; the first module may be the standard desktop launcher, for example, the UniHomelauncher; and the second module may be the extended-screen desktop launcher, for example, the PcHomelauncher. The first desktop may be the foregoing standard desktop, and the second desktop may be the foregoing extended-screen desktop. The first display area may be the foregoing default-screen display area, namely, the DisplayO; and the second display area may be the foregoing extended-screen display area, namely, the Display1.

For example, the first display content may be the user interface displayed by the mobile phone 100 shown in FIG. 3A, and the first desktop may be the desktop shown in FIG. 3A. The second display content may be the user interface that is displayed by the computer 200 based on the projection data sent by the mobile phone 100, as shown in FIG. 3G; and the second desktop may be the desktop shown in FIG. 3G.

S203: In response to a second user operation performed on the first display content, the first electronic device displays third display content based on a task stack that runs in the first display area.

For example, the first display content may be the user interface 11 displayed by the mobile phone 100 shown in FIG. 3A, the second user operation may be a downward sliding operation performed on the status bar of the user interface 11 shown in FIG. 3A, and the third display content may be the control center interface 12 shown in FIG. 3B.

S204: In response to a third user operation performed on the second display content displayed by the second electronic device, the first electronic device determines that display content corresponding to the second display area is fourth display content based on a task stack that runs in the second display area.

S205: The first electronic device sends the fourth display content to the second electronic device.

For example, the second display content may be the user interface 16 displayed by the computer 200 shown in FIG. 3G, and the second user operation may be an input operation performed on an interface element (for example, an icon in the status bar 401, the search bar 402, or an icon in the Dock bar 403) displayed on the user interface 16. For example, the interface element is the notification center icon 401A in the status bar 401, and the fourth display content may include the user interface 16 and the notification center window 17 shown in FIG. 4A.

It needs to be noted that the first electronic device receives the third user operation by using the second electronic device. After receiving the third user operation, the second electronic device determines a first input event, where the first input event indicates the third input operation. For example, the first input event includes coordinates of the third input operation performed on a display screen of the second electronic device, an operation type (for example, a touch operation or a mouse-clicking operation) of the third input operation, and the like. The second electronic device sends the first input event to the first electronic device; and the first electronic device determines, based on the first input event and the task stack that runs in the second display area, the third input operation indicated by the first input event, and executes a response event corresponding to the third input operation. After the response event is executed, the display content corresponding to the second display area is updated to the fourth display content. The first display device sends the updated fourth display content to the second display device, and the second display device displays the fourth display content.

In this embodiment of this application, the first electronic device supports simultaneous running of a plurality of desktop instances in different display areas by using a same application, for example, running of the first desktop in the first display area by using the first module of the first application, and running of the second desktop in the second display area by using the second module of the first application. The first electronic device determines display content on a home screen of the first electronic device based on the task stack that runs in the first display area; and determines, based on the task stack that runs in the second display area, display content to be projected to the second electronic device. In this way, the first electronic device and the second electronic device may display different desktops and other different content based on the two different display areas.

In some embodiments, that in response to a second user operation performed on the first display content, the first electronic device displays third display content based on a task stack that runs in the first display area includes: In response to the second user operation performed on the first desktop in the first display content, the first electronic device displays the third display content based on a task stack that is of the first application and that runs in the first display area; and that in response to a third user operation performed on the second display content displayed by the second electronic device, the first electronic device determines that display content corresponding to the second display area is fourth display content based on a task stack that runs in the second display area includes: In response to the third user operation performed on the second desktop displayed by the second electronic device, the first electronic device determines that the display content corresponding to the second display area is the fourth display content based on a task stack that is of the first application and that runs in the second display area.

For example, the first display content may be an application icon (for example, the icon of Gallery) on the desktop (that is, the first desktop) shown in FIG. 3A, and the second user operation may be a touch operation performed on the application icon. In response to the second user operation, the mobile phone 100 determines, based on a task stack (for example, the foregoing desktop task stack Homestack) that is of the desktop launcher and that runs in the Display0, a response event corresponding to the second user operation. For example, the second display content may be the desktop (that is, the second desktop) displayed by the computer 200 shown in FIG. 6A-1 and FIG. 6A-2, and the third user operation may be an input operation performed on the application list icon 701A in the Dock bar 403 displayed on the user interface 16. In response to the third user operation, the mobile phone 100 determines, based on a task stack (for example, the foregoing desktop task stack Homestack) that is of the desktop launcher and that runs in the Display!, a response event corresponding to the third user operation, executes the response event, and then sends updated fourth display content (that is, the user interface 24 shown in FIG. 6A-1 and FIG. 6A-2) corresponding to the second display area to the computer 200. The computer 200 displays the user interface 24 shown in FIG. 6A-1 and FIG. 6A-2.

In this embodiment of this application, for the second user operation performed on the first desktop, the first electronic device may execute, based on the task stack that is of the first application and that runs in the display area associated with the first desktop, a response event corresponding to the second user operation; and for the third user operation performed on the second desktop, the first electronic device may execute, based on the task stack that is of the first application and that runs in the display area associated with the second desktop, a response event corresponding to the third user operation. In this way, data isolation between events (input events and/or response events) of different desktops can be ensured. In addition, because both desktop instances are run by the modules of the first application, the two desktops can implement sharing of specified data, and the second desktop can inherit some or all functional features of the first desktop.

In some embodiments, before the first electronic device displays the first display content based on the first display area, the method further includes: The first electronic device invokes a third module of a second application to run a first status bar, where the first status bar is associated with the first display area, and the first display content includes the first status bar; and the method further includes: In response to the first user operation, the first electronic device invokes a fourth module of the second application to run a second status bar, where the second status bar is associated with the second display area, and the second display content includes the second status bar.

In this embodiment of this application, the first user operation is an input operation of determining, by a user, the projection of the first electronic device to the second electronic device. In some embodiments, in the step S202, in response to a projection instruction, the first electronic device invokes the second module of the first application to run the second desktop, and invokes the fourth module of the second application to run the second status bar, where both the second desktop and the second status bar are associated with the second display area. For example, for the projection instruction, refer to the projection instruction or the mode switching instruction in the foregoing embodiments.

In this embodiment of this application, the second application may be the foregoing system interface, for example, the SystemUI; the third module may be the standard status bar, for example, the StatusBar; and the fourth module may be the extended-screen status bar, for example, the PcStatusBar. The first status bar may be the foregoing standard status bar, and the second status bar may be the foregoing extended-screen status bar.

For example, the first status bar may be the status bar 101 shown in FIG. 3A, and the second status bar may be the status bar 401 shown in FIG. 3G.

In this embodiment of this application, the first electronic device supports simultaneous running of a plurality of status bar instances in different display areas by using a same application, for example, running of the first status bar in the first display area by using the third module of the second application, and running of the second status bar in the second display area by using the fourth module of the second application. In this way, the two status bars are associated with different display areas, so that the first electronic device and the second electronic device may display different status bars, thereby ensuring data isolation between events (input events and/or response events) of the two status bars. In addition, because both status bars are run by the modules of the second application, the two status bars can implement sharing of specified data (for example, a notification message), and the second status bar can inherit some or all functional features of the first status bar.

In some embodiments, before the first electronic device displays the first display content based on the first display area, the method further includes: The first electronic device invokes a fifth module of a third application to run a first display object of a first variable, where the first variable is associated with the first display area, and the first display content includes the first display object; and the first variable is associated with the second display area, and the second display content includes the first display object.

In this embodiment of this application, the first electronic device supports simultaneous display of display objects corresponding to a same variable in a plurality of different display areas. In this embodiment of this application, the third application and the second application may be a same application, or may be different applications. This is not specifically limited herein.

In some embodiments, the method further includes: In response to a fourth user operation performed on the first display content, the fifth module of the third application is invoked to modify the display object of the first variable to a second display object; the first electronic device updates display content corresponding to the first display area to fifth display content, where the fifth display content includes the second display object; and the first electronic device updates the display content corresponding to the second display area to sixth display content, and sends the sixth display content to the second electronic device, where the sixth display content includes the second display object.

In this embodiment of this application, the first electronic device supports simultaneous display of display objects corresponding to a same variable in a plurality of different display areas. After the user changes the display object of the first variable in the first display area, the display object of the first variable in the second display area also changes accordingly.

In some embodiments, the first variable indicates a display object of a wallpaper, the display object of the wallpaper is a static picture and/or a dynamic picture, and the wallpaper includes a lock-screen wallpaper used when a screen is locked and/or a desktop wallpaper used when the screen is not locked.

In this embodiment of this application, the third application may be the system interface (SystemUI) or a wallpaper application. For example, the fifth module may be the wallpaper management service, for example, the WallpaperManagerService.

For example, the first display object of the wallpaper is displayed, in the first display area, as the desktop wallpaper 107 shown in FIG. 3A; and the first display object of the wallpaper is displayed, in the second display area, as the desktop wallpaper 404 shown in FIG. 3G. The desktop wallpaper 107 and the desktop wallpaper 404 originate from a same picture.

For example, the first display object of the wallpaper is displayed, in the first display area, as the lock-screen wallpaper 902 on the lock screen shown in FIG. 10B; and the first display object of the wallpaper is displayed, in the second display area, as the lock-screen wallpaper 901 on the lock screen shown in FIG. 10A. The desktop wallpaper 107 and the desktop wallpaper 404 originate from a same picture.

In this embodiment of this application, after the user changes a wallpaper displayed on the first electronic device, a wallpaper projected to the second electronic device also changes accordingly.

In some embodiments, a plurality of themes are preset in the first electronic device, and the theme indicates a desktop layout style, an icon display style, and/or an interface color, and the like; and the first variable indicates a display object of the theme, and the display object of the theme is display content corresponding to one of the plurality of themes.

In this embodiment of this application, after the user changes a theme displayed on the first electronic device, a theme projected to the second electronic device also changes accordingly.

In some embodiments, the first module of the first application includes a first common class, a first user interface UI control class, and a desktop task stack of the first desktop that are used for creating and running the first desktop; and the second module of the first application includes a second common class, a second UI control class, and a desktop task stack of the second desktop that are used for creating and running the second desktop, where some or all classes in the second common class are inherited from the first common class, and some or all classes in the second UI control class are inherited from the first UI control class.

In this embodiment of this application, the second common class, the second UI control class, and the desktop task stack of the second desktop that are used for creating and running the second desktop are added to the first electronic device; and some or all of the added common class and UI control class are inherited from the first common class and the first UI control class that correspond to the original first desktop. Therefore, the second desktop can inherit some functional features of the first desktop, and the two desktops can implement sharing of specified data.

In some embodiments, the second common class includes one or more of the following: a desktop launcher provider, a database assistant, a desktop launcher setting class, a desktop launcher constant class, a Pc layout configuration, a Pc device file, a Pc cell counter, a Pc desktop launcher policy, a Pc desktop launcher model, a Pc loading task, and the like; and the second UI control class includes one or more of the following: a Pc drag layer, a Pc desktop workspace, a Pc cell layout, a Pc program dock view, a Pc folder, a Pc folder icon, and the like.

For example, the second common class may be the common class shown in FIG. 13A and FIG. 13B, the second UI control class may be the UI control class shown in FIG. 13 A and FIG. 13B, the desktop task stack of the first desktop may be the task stack of the standard desktop shown in FIG. 13A and FIG. 13B, and the desktop task stack of the second desktop may be the task stack of the extended-screen desktop shown in FIG. 13A and FIG. 13B.

In some embodiments, the third module of the second application includes a first component, a first dependency control class, and a third UI control class that are used for creating and running the first status bar; and the second module of the first application includes a second component, a second dependency control class, and a fourth UI control class that are used for creating and running the second status bar, where some or all components in the second component are inherited from the first component, some or all classes in the second dependency control class are inherited from the first dependency control class, and some or all classes in the fourth UI control class are inherited from the third UI control class.

In this embodiment of this application, the second component, the second dependency control class, and the fourth UI control class that are used for creating and running the second status bar are added to the first electronic device; and some or all of the added component, dependency control class, and UI control class are inherited from the first component, the first dependency control class, and the third UI control class that correspond to the original first status bar. Therefore, the second status bar can inherit some functional features of the first status bar, and the two status bars can implement sharing of specified data.

In some embodiments, the second component includes one or more of the following: a PC dependency class, a PC system provider, a PC system bar, and the second status bar; the second dependency control class includes one or more of the following: a Pc status bar window control class, a screen control class, a lock-screen control class, and a remote control class; and the fourth UI control class includes one or more of the following: a Pc status bar window view, a Pc notification panel view, a Pc quick setting fragment, a Pc status bar fragment, and a Pc status bar view.

For example, the first component, the first dependency control class, and the third UI control class may be respectively the component, the dependency control class, and the UI control class that are shown in FIG. 12A, FIG. 12B, and FIG. 12C to implement the standard status bar. The second component, the second dependency control class, and the fourth UI control class may be respectively the component, the dependency control class, and the UI control class that are shown in FIG. 12A, FIG. 12B, and FIG. 12C to implement the extended-screen status bar.

In some embodiments, an identity ID of a display area associated with the second module is an ID of the second display area; and that in response to a first user operation, the first electronic device invokes a second module of the first application to run a second desktop, where the second desktop is associated with a second display area includes: In response to the first user operation, a Pc management service receives a mode switching instruction, where the instruction instructs to switch a current non-projection mode to a projection mode; in response to the instruction, the Pc management service invokes a Pc desktop service, where the Pc desktop service invokes an activity management service, and the activity management service invokes an activity task manager to start the second module of the first application; a root activity container is invoked to determine the ID of the display area associated with the second module; when the ID of the display area associated with the second module is the ID of the second display area, an Activity of the second desktop is queried and used as an Activity of a to-be-launched desktop, or when the ID of the display area associated with the second module is an ID of the first display area, an Activity of the first desktop is queried and used as an Activity of a to-be-launched desktop; and an activity start controller invokes an activity starter to start the second desktop.

In some embodiments, that in response to the first user operation, the first electronic device invokes a fourth module of the second application to run a second status bar, where the second status bar is associated with the second display area includes: In response to the first user operation, a Pc management service receives a mode switching instruction, where the instruction instructs to switch a current non-projection mode to a projection mode; in response to the instruction, the Pc management service starts a productivity service, where the productivity service invokes a system bar to start the second status bar, and the system bar creates the second status bar based on a configuration file; the second status bar invokes a callback interface of a command queue to add a callback to the second status bar; the second status bar initializes a layout, and registers an IstatusBar object corresponding to the second status bar to a status bar management service; the second status bar creates the Pc status bar window view, and adds the Pc status bar window view to a status bar window control class; and the status bar window control class invokes a window management interface to add the second status bar to a window management service, so as to add the second status bar to the second display area.

In some embodiments, in the non-projection mode, the command queue supports the first status bar associated with the first display area; and in the projection mode, the command queue supports both the first status bar associated with the first display area and the second status bar associated with the second display area.

The implementations of this application may be combined as desired to achieve different technical effects.

All or some of the foregoing embodiments may be implemented by software, hardware, firmware, or any combination thereof. When software is used for implementation, all or some of the foregoing embodiments may be implemented in a form of a computer program product. The computer program product includes one or more computer instructions. When the computer program instructions are loaded and executed on a computer, the procedure or functions according to this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible to a computer, or a data storage device integrating one or more usable media, for example, a server or a data center. The usable medium may be a magnetic medium (for example, a floppy disk, a hard disk, or a magnetic tape), an optical medium (for example, a DVD), a semiconductor medium (for example, a solid state disk (solid state disk, SSD)), or the like.

A person of ordinary skill in the art may understand that all or some of the procedures of the methods in the embodiments may be implemented by a computer program instructing related hardware. The program may be stored in a computer-readable storage medium. When the program is run, the procedures of the methods in the embodiments are performed. The foregoing storage medium includes any medium that can store program code, such as a ROM, a random access memory RAM, a magnetic disk, or an optical disc.

In conclusion, the foregoing descriptions are merely embodiments of the technical solutions of the present invention, but are not intended to limit the protection scope of the present invention. Any modification, equivalent replacement, or improvement made according to the disclosure of the present invention shall fall within the protection scope of the present invention.

## Claims

1. A screen projection method, comprising:
invoking, by a first electronic device, a first module of a first application to run a first desktop, wherein the first desktop is associated with a first display area;
displaying, by the first electronic device, first display content based on the first display area, wherein the first display content comprises the first desktop;
invoking, by the first electronic device in response to a first user operation, a second module of the first application to run a second desktop, wherein the second desktop is associated with a second display area;
sending, by the first electronic device, second display content corresponding to the second display area to a second electronic device, wherein the second display content comprises the second desktop;
displaying, by the first electronic device in response to a second user operation performed on the first display content, third display content based on a task stack that runs in the first display area;
determining, by the first electronic device in response to a third user operation performed on the second display content displayed by the second electronic device, that display content corresponding to the second display area is fourth display content based on a task stack that runs in the second display area; and
sending, by the first electronic device, the fourth display content to the second electronic device.

2. The method according to claim 1, wherein the displaying, by the first electronic device in response to a second user operation performed on the first display content, third display content based on a task stack that runs in the first display area comprises:
displaying, by the first electronic device in response to the second user operation performed on the first desktop in the first display content, the third display content based on a task stack that is of the first application and that runs in the first display area; and
the determining, by the first electronic device in response to a third user operation performed on the second display content displayed by the second electronic device, that display content corresponding to the second display area is fourth display content based on a task stack that runs in the second display area comprises:
determining, by the first electronic device in response to the third user operation performed on the second desktop displayed by the second electronic device, that the display content corresponding to the second display area is the fourth display content based on a task stack that is of the first application and that runs in the second display area.

3. The method according to claim 1, wherein before the displaying, by the first electronic device, first display content based on the first display area, the method further comprises:
invoking, by the first electronic device, a third module of a second application to run a first status bar, wherein the first status bar is associated with the first display area, and the first display content comprises the first status bar; and
the method further comprises:
invoking, by the first electronic device in response to the first user operation, a fourth module of the second application to run a second status bar, wherein the second status bar is associated with the second display area, and the second display content comprises the second status bar.

4. The method according to claim 1, wherein before the displaying, by the first electronic device, first display content based on the first display area, the method further comprises:
invoking, by the first electronic device, a fifth module of a third application to run a first display object of a first variable, wherein the first variable is associated with the first display area, and the first display content comprises the first display object; and the first variable is associated with the second display area, and the second display content comprises the first display object.

5. The method according to claim 4, further comprising:
in response to a fourth user operation performed on the first display content, invoking the fifth module of the third application to modify the display object of the first variable to a second display object;
updating, by the first electronic device, display content corresponding to the first display area to fifth display content, wherein the fifth display content comprises the second display object; and
updating, by the first electronic device, the display content corresponding to the second display area to sixth display content, and sending the sixth display content to the second electronic device, wherein the sixth display content comprises the second display object.

6. The method according to claim 4 or 5, wherein the first variable indicates a display object of a wallpaper, the display object of the wallpaper is a static picture and/or a dynamic picture, and the wallpaper comprises a lock-screen wallpaper used when a screen is locked and/or a desktop wallpaper used when the screen is not locked.

7. The method according to claim 4 or 5, wherein a plurality of themes are preset in the first electronic device, and the theme indicates a desktop layout style, an icon display style, and/or an interface color, and the like; and
the first variable indicates a display object of the theme, and the display object of the theme is display content corresponding to one of the plurality of themes.

8. The method according to claim 1, wherein the first module of the first application comprises a first common class, a first user interface UI control class, and a desktop task stack of the first desktop that are used for creating and running the first desktop; and the second module of the first application comprises a second common class, a second UI control class, and a desktop task stack of the second desktop that are used for creating and running the second desktop, wherein some or all classes in the second common class are inherited from the first common class, and some or all classes in the second UI control class are inherited from the first UI control class.

9. The method according to claim 8, wherein the second common class comprises one or more of the following: a desktop launcher provider, a database assistant, a desktop launcher setting class, a desktop launcher constant class, a Pc layout configuration, a Pc device file, a Pc cell counter, a Pc desktop launcher policy, a Pc desktop launcher model, a Pc loading task, and the like; and
the second UI control class comprises one or more of the following: a Pc drag layer, a Pc desktop workspace, a Pc cell layout, a Pc program dock view, a Pc folder, a Pc folder icon, and the like.

10. The method according to claim 1, wherein the third module of the second application comprises a first component, a first dependency control class, and a third UI control class that are used for creating and running the first status bar; and the second module of the first application comprises a second component, a second dependency control class, and a fourth UI control class that are used for creating and running the second status bar, wherein some or all components in the second component are inherited from the first component, some or all classes in the second dependency control class are inherited from the first dependency control class, and some or all classes in the fourth UI control class are inherited from the third UI control class.

11. The method according to claim 10, wherein the second component comprises one or more of the following: a PC dependency class, a PC system provider, a PC system bar, and the second status bar;
the second dependency control class comprises one or more of the following: a Pc status bar window control class, a screen control class, a lock-screen control class, and a remote control class; and
the fourth UI control class comprises one or more of the following: a Pc status bar window view, a Pc notification panel view, a Pc quick setting fragment, a Pc status bar fragment, and a Pc status bar view.

12. The method according to any one of claims 1 to 11, wherein an identity ID of a display area associated with the second module is an ID of the second display area; and the invoking, by the first electronic device in response to a first user operation, a second module of the first application to run a second desktop, wherein the second desktop is associated with a second display area comprises:
receiving, by a Pc management service in response to the first user operation, a mode switching instruction, wherein the instruction instructs to switch a current non-projection mode to a projection mode;
invoking, by the Pc management service in response to the instruction, a Pc desktop service, wherein the Pc desktop service invokes an activity management service, and the activity management service invokes an activity task manager to start the second module of the first application;
invoking a root activity container to determine the ID of the display area associated with the second module; when the ID of the display area associated with the second module is the ID of the second display area, querying and using an Activity of the second desktop as an Activity of a to-be-launched desktop, or when the ID of the display area associated with the second module is an ID of the first display area, querying and using an Activity of the first desktop as an Activity of a to-be-launched desktop; and
invoking, by an activity start controller, an activity starter to start the second desktop.

13. The method according to any one of claims 1 to 11, wherein the invoking, by the first electronic device in response to the first user operation, a fourth module of the second application to run a second status bar, wherein the second status bar is associated with the second display area comprises:
receiving, by a Pc management service in response to the first user operation, a mode switching instruction, wherein the instruction instructs to switch a current non-projection mode to a projection mode;
starting, by the Pc management service in response to the instruction, a productivity service, wherein the productivity service invokes a system bar to start the second status bar, and the system bar creates the second status bar based on a configuration file;
invoking, by the second status bar, a callback interface of a command queue to add a callback to the second status bar; initializing, by the second status bar, a layout, and registering an IstatusBar object corresponding to the second status bar to a status bar management service; creating, by the second status bar, the Pc status bar window view, and adding the Pc status bar window view to a status bar window control class; and
invoking, by the status bar window control class, a window management interface to add the second status bar to a window management service, so as to add the second status bar to the second display area.

14. The method according to claim 13, wherein in the non-projection mode, the command queue supports the first status bar associated with the first display area; and in the projection mode, the command queue supports both the first status bar associated with the first display area and the second status bar associated with the second display area.

15. An electronic device, comprising a touchscreen, a memory, one or more processors, a plurality of applications, and one or more programs, wherein the one or more programs are stored in the memory; and when the one or more processors execute the one or more programs, the electronic device is enabled to implement the method according to any one of claims 1 to 14.

16. A computer storage medium, comprising computer instructions, wherein when the computer instructions are run on an electronic device, the electronic device is enabled to perform the method according to any one of claims 1 to 14.

17. A computer program product, wherein when the computer program product runs on a computer, the computer is enabled to perform the method according to any one of claims 1 to 14.
